(19) Europäisches Patentamt
European Patent Office
Office européen des brevets

(11) EP 3 829 126 A1

(12) **EUROPEAN PATENT APPLICATION**
published in accordance with Art. 153(4) EPC

(43) Date of publication:
02.06.2021 Bulletin 2021/22

(51) Int Cl.:
*H04L 27/26* (2006.01)    *H04L 5/00* (2006.01)
*H04W 72/04* (2009.01)

(21) Application number: 19851339.2

(22) Date of filing: 19.04.2019

(86) International application number:
PCT/CN2019/083377

(87) International publication number:
WO 2020/038003 (27.02.2020 Gazette 2020/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 24.08.2018 CN 201810973157

(71) Applicant: HUAWEI TECHNOLOGIES CO., LTD.
Shenzhen, Guangdong 518129 (CN)

(72) Inventors:
• LIN, Wei
Shenzhen, Guangdong 518129 (CN)
• YAN, Min
Shenzhen, Guangdong 518129 (CN)
• XIA, Kaifeng
Shenzhen, Guangdong 518129 (CN)

(74) Representative: Maiwald Patent- und
Rechtsanwaltsgesellschaft mbH
Elisenhof
Elisenstraße 3
80335 München (DE)

(54) **RESOURCE DIVISION METHOD, RESOURCE INDICATION METHOD AND RELATED APPARATUSES**

(57) This application discloses a resource division method, including: performing resource division on a channel, where the divided channel includes a data and pilot resource unit and a direct current component, and the direct current component is located between two subcarriers in a center of a frequency band of the channel. This application further discloses a resource division apparatus, a resource indication method, and a resource indication apparatus. In this application, impact of a null direct current subcarrier on a peak to average power ratio of a signal can be avoided, and a peak to average power ratio during transmission can be effectively reduced, so that efficiency of a transmitter power amplifier is improved.

Direct current component

2.16 GHz channel

| 128 | 128 | 128 | 128 |

$512 \times 3.4375 \text{ MHz} = 1.76 \text{ GHz}$

$768 \times 3.4375 \text{ MHz} = 2.64 \text{GHz}$

FIG. 8

## Description

This application claims priority to Chinese Patent Application No. 201810973157.0, filed with the China National Intellectual Property Administration on August 24, 2018 and entitled "RESOURCE DIVISION METHOD, RESOURCE INDICATION METHOD, AND RELATED APPARATUSES", which is incorporated herein by reference in its entirety.

## TECHNICAL FIELD

This application relates to the field of wireless communication, and in particular, to a resource division method, a resource indication method, and related apparatuses.

## BACKGROUND

A key problem that needs to be resolved in modern wireless communication is how to further improve spectrum usage and transmission reliability of a system. Orthogonal frequency division multiplexing (orthogonal frequency division multiplexing, OFDM) is a mainstream technology in current wireless communication, and is used in a plurality of standards such as 802.11, 802.16, and 802.15. OFDM is one of implementations of a multi-carrier transmission solution. Modulation and demodulation are respectively implemented based on inverse fast Fourier transform (inverse fast fourier transform, IFFT) and fast Fourier transform (fast fourier transform, FFT). OFDM is a multi-carrier transmission solution with lowest implementation complexity and widest application.

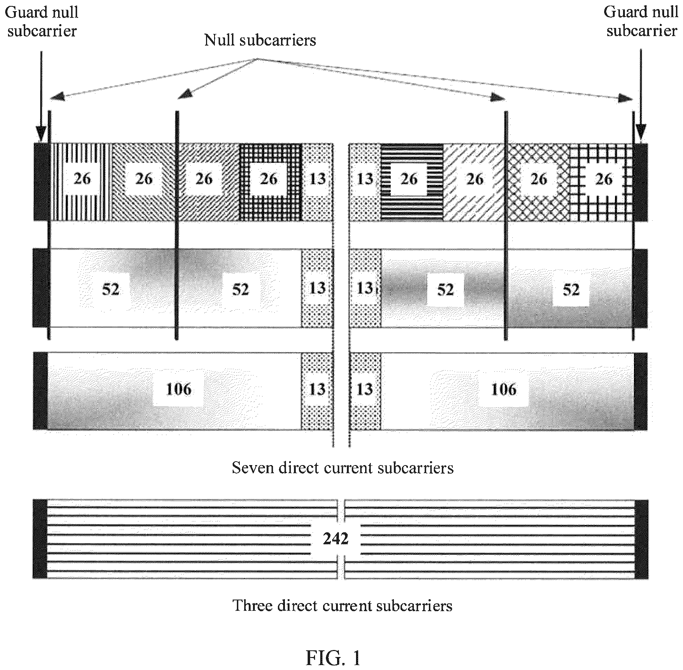

The OFDM technology has been widely used in a wireless local area network (wireless local area network, WLAN) standard. Currently, for the institute of electrical and electronics engineers (institute of electrical and electronics engineers, IEEE) 802.11ax standard, an orthogonal frequency division multiple access (OFDM access, OFDMA) technology that can implement multi-user frequency division multiplexing is introduced, and a 256-point IFFT module is used in 11ax. Therefore, a resource unit (resource unit, RU) is designed based on an overall bandwidth including 256 OFDM subcarriers. Based on a basic bandwidth of 20 megahertz (megahertz, MHz), as shown in FIG. 1, RUs of data subcarriers are divided in the 802.11ax standard. The data subcarriers may be allocated to a maximum of nine different users. A size of each RU is 26 subcarriers, and there may be a null subcarrier between the RUs, where the null subcarrier is used to align resource unit positions that correspond when user quantities are different. Null direct current subcarriers need to be reserved in a center of a frequency band. No data is placed on the direct current subcarriers, to avoid a case in which a direct current component affects a signal-to-noise ratio (signal-to-noise ratio, SNR) of the central direct current subcarriers when a signal is received. In addition to the direct current subcarriers, a specific quantity of guard null subcarriers need to be placed on edges of two sides of the frequency band, to prevent adjacent band leakage of the signal. Data may be placed on other subcarriers than the direct current null subcarriers and the sideband null subcarriers.

However, the RU design manner provided above is applicable only to a low-frequency WLAN technology, and is not applicable to a high-frequency WLAN-a 60 gigahertz (gigahertz, GHz) WLAN. A reason is that discrete Fourier transform-spread OFDM (discrete fourier transform-spread OFDM, DFT-S-OFDM) is introduced into the high-frequency WLAN. Therefore, spectrum RUs of DFT-S-OFDM need to be redesigned and reallocated.

## SUMMARY

This application provides a resource division method, a resource indication method, and related apparatuses, to avoid impact of a null direct current subcarrier on a peak to average power ratio of a signal, and effectively reduce a peak to average power ratio during transmission, so that efficiency of a transmitter power amplifier is improved.

According to a first aspect, an embodiment of this application provides a resource division method. The method may be used in a high-frequency WLAN such as a WLAN whose operating frequency band is 60 GHz. To reduce a peak to average power ratio of a system while supporting multi-user frequency division multiplexing, it may be considered that a DFT-S-OFDM transmission technology is introduced into the next-generation 60 GHz WLAN. The resource division method may include the following step.

A resource division apparatus performs resource division on a channel, where the divided channel includes a data and pilot resource unit and a direct current component, and the direct current component is located between two subcarriers in a center of a frequency band of the channel. The resource division apparatus may be deployed in an AP, or may be deployed in a STA. A deployed device is not limited herein.

A direct current component of a signal is an average value of the signal, and is a constant unrelated to time. Represented by using a mathematical formula, the direct current component of the signal is:

$$f_D = \lim_{T \to \infty} \frac{1}{2T} \int_{-T}^{T} f(t)\, dt$$

where T represents a periodicity, and if an original signal is a periodic signal, a process of obtaining a limit may be omitted for the foregoing formula, and an integral limit may be any periodicity.

A short-circuit current of an infinite-power power supply circuit includes an alternating current component and a direct current component in a transient process. The direct current component is generated because a current in a circuit inductor cannot change abruptly at a short-circuit moment. An amplitude value of the direct current component of the short-circuit current attenuates with time. A starting value of the direct current component is related to an initial angle of a supply voltage and a current value and an angle of a loop that is before being short-circuit.

The direct current component in this application is located between the two subcarriers in the center of the frequency band of the channel. Therefore, the frequency band needs to include N subcarriers, where N is an even number.

The foregoing resource division method may be specifically used in a scenario in which DFT-S-OFDM transmission is performed in the 60 GHz WLAN. DFT-S-OFDM is a generation manner of a long term evolution uplink single-carrier frequency division multiple access (single-carrier frequency division multiple access, SC-FDMA) technology in frequency domain. DFT-S-OFDM is a single-carrier solution that features a relatively low PAPR.

It may be understood that the resource division method may be used in an access point or a station in which the resource division apparatus is deployed. The access point (for example, a base station) in this embodiment of this application is an apparatus that is deployed in a radio access network and that is configured to provide a wireless communication function for a station. The access point may include a macro base station, a micro base station (also referred to as a small cell), a relay station, or the like in various forms. In systems for which different radio access technologies are used, a device having an access point function may have different names. For example, in a long term evolution communications system, the device is referred to as an evolved NodeB (evolved NodeB, eNodeB); in a 3rd generation (3rd generation, 3G) system, the device is referred to as a NodeB (NodeB); and in a future new radio (new radio, NR) network, the device is referred to as a gNB. The station in this embodiment of this application may refer to a terminal, and specifically includes but is not limited to a mobile station (mobile station, MS), a mobile terminal (mobile terminal, MT), a mobile telephone (mobile telephone), a handset (handset), portable equipment (portable equipment), a handheld device having a wireless communication function, a computing device or another processing device connected to a wireless modem, a vehicle-mounted device, a wearable device, a terminal device in a future new wireless network, or the like.

In this embodiment of this application, the resource division method is provided. The resource division apparatus performs resource division on the channel. The divided resource may include a resource unit and the direct current component. The direct current component is located between the two subcarriers in the center of the frequency band of the channel. In the foregoing manner, in a DFT-S-OFDM transmission mode, because transmission of a high-frequency signal is quite sensitive to a peak to average power ratio of the signal, the direct current component is disposed between the two subcarriers in the center of the frequency band, to avoid impact of a null direct current subcarrier on the peak to average power ratio of the signal, and effectively reduce a peak to average power ratio during transmission, so that efficiency of a transmitter power amplifier is improved.

In a possible design, in a first implementation of the first aspect of this embodiment of this application, when the channel is 2.16 GHz, the data and pilot resource unit may include:

a resource unit including 128 subcarriers;
a resource unit including 256 subcarriers; or
a resource unit including 512 subcarriers.

The 2.16 GHz channel includes any combination of the foregoing resource units. For example, the 2.16 GHz channel may include four resource units each including 128 subcarriers, may include two resource units each including 256 subcarriers, or may include one resource unit including 512 subcarriers.

During actual application, a range of a resource unit may be defined. Refer to the following definition content:

A range of the resource unit of 128 subcarriers may be represented as: [-255: -128], [-127: 0], [1: 128], and [129: 256].

A range of the resource unit of 256 subcarriers may be represented as: [-255: 0] and [1: 256]

A range of the resource unit of 512 subcarriers may be represented as: [-255: 256].

Certainly, the direct current component is located between the two subcarriers [0: 1] in the center of the frequency band of the channel.

It can be learned that in this embodiment of this application, a method for performing resource division on the single 2.16 GHz channel is provided, and the resource unit including 128 subcarriers, the resource unit including 256 subcarriers, or the resource unit including 512 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

In a possible design, in a second implementation of the first aspect of this embodiment of this application, when the channel is 4.32 GHz, the data and pilot resource unit may include:

a resource unit including 128 subcarriers;
a resource unit including 256 subcarriers;
a resource unit including 512 subcarriers; or
a resource unit including 1024 subcarriers.

The 4.32 GHz channel includes any combination of the foregoing resource units. For example, the 4.32 GHz channel may include eight resource units each including 128 subcarriers, may include four resource units each including 256 subcarriers, may include two resource units each including 512 subcarriers, or may include one resource unit including 1024 subcarriers.

During actual application, a range of a resource unit may be defined. Refer to the following definition content:

A range of the resource unit of 128 subcarriers may be represented as: [-511: -384], [-383: -256], [-255: -128], [-127: 0], [1: 128], [129: 256], [257: 384], and [385: 512].

A range of the resource unit of 256 subcarriers may be represented as: [-511: -256], [-255: 0], [1: 256], and [257: 512].

A range of the resource unit of 512 subcarriers may be represented as: [-511: 0] and [1: 512].

A range of the resource unit of 1024 subcarriers may be represented as: [-511: 512].

Certainly, the direct current component is located between the two subcarriers [0: 1] in the center of the frequency band of the channel.

It can be learned that in this embodiment of this application, a method for performing resource division on the single 4.32 GHz channel is provided, and the resource unit including 128 subcarriers, the resource unit including 256 subcarriers, or the resource unit including 512 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

In a possible design, in a third implementation of the first aspect of this embodiment of this application, when the channel is 6.48 GHz, the data and pilot resource unit may include:

a resource unit including 192 subcarriers;
a resource unit including 384 subcarriers;
a resource unit including 768 subcarriers; or
a resource unit including 1536 subcarriers.

The 6.48 GHz channel includes any combination of the foregoing resource units. For example, the 6.48 GHz channel may include eight resource units each including 192 subcarriers, may include four resource units each including 384 subcarriers, may include two resource units each including 768 subcarriers, or may include one resource unit including 1536 subcarriers.

During actual application, a range of a resource unit may be defined. Refer to the following definition content:

A range of the resource unit of 192 subcarriers may be represented as: [-767: -576], [-575: -384], [-383: -192], [-191: 0], [1: 192], [193: 384], [384: 576], and [577: 768].

A range of the resource unit of 384 subcarriers may be represented as: [-767: -384], [-383: 0], [1: 384], and [385: 768].

A range of the resource unit of 768 subcarriers may be represented as: [-767: 0] and [1: 768].

A range of the resource unit of 1536 subcarriers may be represented as: [-767: 768].

Certainly, the direct current component is located between the two subcarriers [0: 1] in the center of the frequency band of the channel.

It can be learned that in this embodiment of this application, a method for performing resource division on the single 6.48 GHz channel is provided, and the resource unit including 192 subcarriers, the resource unit including 384 subcarriers, the resource unit including 768 subcarriers, or the resource unit including 1536 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

In a possible design, in a fourth implementation of the first aspect of this embodiment of this application, when the channel is 8.64 GHz, the data and pilot resource unit may include:

a resource unit including 128 subcarriers;
a resource unit including 256 subcarriers;
a resource unit including 512 subcarriers;
a resource unit including 1024 subcarriers; or
a resource unit including 2048 subcarriers.

The 8.64 GHz channel includes any combination of the resource units.

The 8.64 GHz channel includes any combination of the foregoing resource units. For example, the 8.64 GHz channel may include 16 resource units each including 128 subcarriers, may include eight resource units each including 256 subcarriers, may include four resource units each including 512 subcarriers, may include two resource units each including 1024 subcarriers, or may include one resource unit including 2048 subcarriers.

During actual application, a range of a resource unit may be defined. Refer to the following definition content:

A range of the resource unit of 128 subcarriers may be represented as: [-1023: -896], [-895: -768], [-767: -640], [-639: -512], [-511: -384], [-383: -256], [-255: -128], [-127: 0], [1: 128], [129: 256], [257: 384], [385: 512], [513: 640], [641: 768], [769: 896], and [897: 1024].

A range of the resource unit of 256 subcarriers may be represented as: [-1023: -768], [-767: -512], [-511: -256], [-255: 0], [1, 256], [257, 512], [513, 768], and [769, 1024].

A range of the resource unit of 512 subcarriers may be represented as: [-1023: -512], [-511: 0], [1, 512], and [513, 1024].

A range of the resource unit of 1024 subcarriers may be represented as: [-1023: 0] and [1, 1024].

A range of the resource unit of 2048 subcarriers may be represented as: [-1023: 1024].

Certainly, the direct current component is located between the two subcarriers [0: 1] in the center of the frequency band of the channel.

It can be learned that in this embodiment of this application, a method for performing resource division on the single 8.64 GHz channel is provided, and the resource unit including 128 subcarriers, the resource unit including 256 subcarriers, the resource unit including 512 subcarriers, the resource unit including 1024 subcarriers, or the resource unit including 2048 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

In a possible design, in a fifth implementation of the first aspect of this embodiment of this application, when the channel is 2.16 GHz, the data and pilot resource unit may include:

a resource unit including 88 subcarriers;
a resource unit including 176 subcarriers; or
a resource unit including 352 subcarriers.

The 2.16 GHz channel includes any combination of the resource units.

The 2.16 GHz channel includes any combination of the foregoing resource units. For example, the 2.16 GHz channel may include four resource units each including 88 subcarriers, may include two resource units each including 176 subcarriers, or may include one resource unit including 352 subcarriers.

During actual application, a range of a resource unit may be defined. Refer to the following definition content:

A range of the resource unit of 88 subcarriers may be represented as [-175: -88], [-87: 0], [1: 88], and [89, 176].

A range of the resource unit of 176 subcarriers may be represented as: [-175: 0] and [1: 176].

A range of the resource unit of 352 subcarriers may be represented as: [-175: 176].

Certainly, the direct current component is located between the two subcarriers [0: 1] in the center of the frequency band of the channel.

It can be learned that in this embodiment of this application, another method for performing resource division on the single 2.16 GHz channel is provided, and the resource unit including 88 subcarriers, the resource unit including 176 subcarriers, or the resource unit including 352 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

In a possible design, in a sixth implementation of the first aspect of this embodiment of this application, when the channel is 4.32 GHz, the data and pilot resource unit may include:

a resource unit including 88 subcarriers;
a resource unit including 176 subcarriers;
a resource unit including 352 subcarriers; or
a resource unit including 704 subcarriers.

The 4.32 GHz channel includes any combination of the foregoing resource units. For example, the 4.32 GHz channel may include eight resource units each including 88 subcarriers, may include four resource units each including 176 subcarriers, may include two resource units each including 352 subcarriers, or may include one resource unit including 704 subcarriers.

During actual application, a range of a resource unit may be defined. Refer to the following definition content:

A range of the resource unit of 88 subcarriers may be represented as: [-351: -264], [-263: -176], [-175: -88], [-87: 0], [1: 88], [89: 176], [177: 264], and [265: 352].

A range of the resource unit of 176 subcarriers may be represented as: [-351: -176], [-175: 0], [1: 176], and [177: 352].

A range of the resource unit of 352 subcarriers may be represented as: [-351: 0] and [1: 352].

A range of the resource unit of 704 subcarriers may be represented as: [-351: 352].

Certainly, the direct current component is located between the two subcarriers [0: 1] in the center of the frequency band of the channel.

It can be learned that in this embodiment of this application, another method for performing resource division on the single 4.32 GHz channel is provided, and the resource unit including 88 subcarriers, the resource unit including 176 subcarriers, the resource unit including 352 subcarriers, or the resource unit including 704 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

In a possible design, in a seventh implementation of the first aspect of this embodiment of this application, when the channel is 6.48 GHz, the data and pilot resource unit may include:

a resource unit including 88 subcarriers;
a resource unit including 176 subcarriers;
a resource unit including 264 subcarriers;
a resource unit including 528 subcarriers; or
a resource unit including 1056 subcarriers.

The 6.48 GHz channel includes any combination of the foregoing resource units. For example, the 6.48 GHz channel may include 12 resource units each including 88 subcarriers, may include six resource units each including 176 subcarriers, may include four resource units each including 264 subcarriers, may include two resource units each including 528 subcarriers, or may include one resource unit including 1056 subcarriers.

During actual application, a range of a resource unit may be defined. Refer to the following definition content:

A range of the resource unit of 88 subcarriers may be represented as: [-527, 440], [-439: -352], [-351: -264], [-263: -176], [-175: -88], [-87: 0], [1: 88], [89: 176], [177: 264], [265: 352], [353: 440], and [441: 528].

A range of the resource unit of 176 subcarriers may be represented as: [-527: -352], [-351: -176], [-175: 0], [1: 176], [177: 352], and [353: 528].

A range of the resource unit of 264 subcarriers may be represented as: [-527: -264], [-263, 0], [1, 264], and [265: 528].

A range of the resource unit of 528 subcarriers may be represented as: [-527: 0] and [1: 528].

A range of the resource unit of 1056 subcarriers may be represented as: [-527: 528].

Certainly, the direct current component is located between the two subcarriers [0: 1] in the center of the frequency band of the channel.

It can be learned that in this embodiment of this application, another method for performing resource division on the single 6.48 GHz channel is provided, and the resource unit including 88 subcarriers, the resource unit including 176 subcarriers, the resource unit including 264 subcarriers, the resource unit including 528 subcarriers, or the resource unit including 1056 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

In a possible design, in an eighth implementation of the first aspect of this embodiment of this application, when the channel is 8.64 GHz, the data and pilot resource unit may include:

a resource unit including 88 subcarriers;
a resource unit including 176 subcarriers;
a resource unit including 352 subcarriers;
a resource unit including 704 subcarriers; or
a resource unit including 1408 subcarriers.

The 8.64 GHz channel includes any combination of the foregoing resource units. For example, the 8.64 GHz channel may include 16 resource units each including 88 subcarriers, may include eight resource units each including 176 subcarriers, may include four resource units each including 352 subcarriers, may include two resource units each including 704 subcarriers, or may include one resource unit including 1408 subcarriers.

During actual application, a range of a resource unit may be defined. Refer to the following definition content:

A range of the resource unit of 88 subcarriers may be represented as: [-703: -616], [-615, -528], [-527, -440], [-439: -352], [-351: -264], [-263: -176], [-175: -88], [-87: 0], [1: 88], [89: 176], [177: 264], [265: 352], [353: 440], [441: 528], [529, 616], and [617, 704].

A range of the resource unit of 176 subcarriers may be represented as: [-703: -528], [-527: -352], [-351: -176], [-175: 0], [1, 176], [177, 352], [353, 528], and [529, 704].

A range of the resource unit of 352 subcarriers may be represented as: [-703: -352], [-351: 0], [1, 352], and [353, 704].

A range of the resource unit of 704 subcarriers may be represented as: [-703: 0] and [1, 704].

A range of the resource unit of 1408 subcarriers may be represented as: [-703: 704].

Certainly, the direct current component is located between the two subcarriers [0: 1] in the center of the frequency band of the channel.

It can be learned that in this embodiment of this application, another method for performing resource division on the single 8.64 GHz channel is provided, and the resource unit including 88 subcarriers, the resource unit including 176 subcarriers, the resource unit including 352 subcarriers, the resource unit including 704 subcarriers, or the resource unit including 1408 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

According to a second aspect, an embodiment of this application provides a resource indication method. The resource indication method may include the following steps.

First, a resource indication apparatus deployed in an AP generates a frame including resource indication information. The frame herein may be a physical frame, or may be a trigger frame. The resource indication information may occupy several bits in a frame header of the physical frame, and is used to indicate a resource unit used by a STA to receive downlink data (the AP sends information to the STA), and specifically indicate a position and a size of the resource unit. Alternatively, the resource indication information may be in a data part of the trigger frame, and is used to indicate a resource unit occupied by a STA to send uplink data (sent by the STA to the AP), and specifically indicate a position and a size of the resource unit.

The resource indication information may include a plurality of pieces of sub resource indication information, each piece of sub resource indication information corresponds to one STA, and the sub resource indication information may include resource unit allocation information of the STA corresponding to the sub resource indication information.

After generating the frame including the resource indication information, the resource indication apparatus deployed in the AP may send the frame of the resource indication information to the STA.

In this embodiment of this application, the resource indication method is provided. The resource unit allocation information of the STA is determined based on the plurality of pieces of sub resource indication information included in the resource indication information, to not only indicate the position of the resource unit of the STA in transmission of the downlink data, but also indicate the position of the resource unit occupied by the STA in transmission of the uplink data. In the foregoing manner, the resource unit allocation information of the STA is determined by using the plurality of pieces of sub resource indication information included in the resource indication information, so that accuracy and feasibility of determining the position of the resource unit of the STA can be improved.

In a possible design, in a first implementation of the second aspect of this embodiment of this application, the resource unit allocation information may specifically include station identification STA ID. The STA ID herein is unique so that a STA can be uniquely defined.

It may be understood that, the STA ID includes but is not limited to a universally unique identifier (universally unique identifier, UUID), a media access control (media access control, MAC) address, an international mobile equipment identity (international mobile equipment identity, IMEI), and a mobile equipment identifier (mobile equipment identifier, MEID).

The UUID refers to a number generated on a machine, and ensures uniqueness for all machines in same spacetime. The MAC address is also referred to as a hardware address, has a length of six bytes (48 bits), and includes hexadecimal digits. The 48 bits are divided into the first 24 bits and the last 24 bits. The first 24 bits are referred to as an organizationally unique identifier. The last 24 bits are assigned by a manufacturer, and are referred to as an extended identifier. The IMEI is a 15-digit electronic "serial number" that corresponds one-to-one to each mobile phone, and is globally unique. Each mobile phone is to be assigned a globally unique number after assembly, and the number is to be recorded by a manufacturer from production to delivery. The MEID is a globally unique 5-bit identifier of a mobile terminal in a code division multiple access standard. The identifier is burnt into the STA and cannot be modified. The MEID is represented by using 14 hexadecimal characters. The fifteenth digit is a check digit and is not used for transmission over the air.

It can be learned that in this embodiment of this application, content included in the resource unit allocation information is described, and the content specifically includes the STA ID and a correspondence between the STA ID and an index. In the foregoing manner, when resource indication is performed on different STAs, a size and a position of a resource unit allocated to at least one STA may be determined by using the correspondence between the STA ID and the index, to accurately perform resource indication on the different STAs, and indicate the size and the position of the resource unit allocated to the STA in the index, so that feasibility of the solution is improved.

In a possible design, in a second implementation of the second aspect of this embodiment of this application, the resource unit allocation information includes an index. There is a correspondence between the index and the foregoing STA ID, and the index is used to indicate a size and a position of a resource unit allocated to the station corresponding to the STA ID. Regardless of whether a resource indication apparatus is on an AP side or on a STA side, the position of the resource unit that subsequently needs to be allocated to the STA and a quantity of subcarriers occupied by the resource unit may be determined based on the resource unit allocation information.

During resource indication, a resource allocation status of a specific STA (or some STAs) needs to be known. For example, the first resource unit (to be specific, including a minimum data and pilot resource unit) on a 2.16 GHz channel is allocated to a STA A, and a size of the resource unit is 128 subcarriers; the second resource unit

(to be specific, including a minimum data and pilot resource unit) on the 2.16 GHz channel is allocated to a STA B, and a size of the resource unit is 128 subcarriers; and the third resource unit (to be specific, including two minimum data and pilot resource units) on the 2.16 GHz channel is allocated to a STA C, and a size of the resource unit is 256 subcarriers.

It can be learned that in this embodiment of this application, that the index is used to indicate the size and the position of the resource unit allocated to the STA corresponding to the STA ID is specifically described. In the foregoing manner, the size and the position of the resource unit allocated to the STA can be accurately indicated by using the index. Therefore, feasibility during actual application can be achieved. In addition, indication content in a transmission scenario may be further determined based on content indicated by using the index.

Optionally, the resource unit allocation information further includes channel indication information. The channel indication information is used to indicate a channel allocated to the station corresponding to the STA ID.

For the single 2.16 GHz channel, three bits may be directly used to perform resource indication on the STA. However, in a case of a plurality of channels (for example, CB is 2, 3, or 4), the resource unit allocation information further includes the channel indication information. The channel indication information is used to indicate the channel allocated to the station corresponding to the STA ID. Usually, the channel indication information may include two bits. The first two bits are used to indicate a specific 2.16 GHz channel that is occupied, and the last three bits are used to indicate a specific resource unit of the channel. Each 2.16 GHz channel is independently indicated. For example, when the channel indication information is 00, it indicates that resource indication is performed on the first 2.16 GHz channel; when the channel indication information is 01, it indicates that resource indication is performed on the second 2.16 GHz channel; when the channel indication information is 10, it indicates that resource indication is performed on the third 2.16 GHz channel; or when the channel indication information is 11, it indicates that resource indication is performed on the fourth 2.16 GHz channel.

It can be learned that in this embodiment of this application, on a premise that the three bits are used to indicate a specific resource unit of the STA, the two bits may be further used to indicate the channel allocated to the STA. In the foregoing manner, for complete resource indication, only two bits need to be added. In a case of multichannel indication, a quantity of bits used for indication can be reduced, so that indication resources are saved, and practicability of the solution is improved.

According to a third aspect, a resource division apparatus is provided, and is configured to perform the method according to any one of the first aspect or the possible implementations of the first aspect. Specifically, the resource division apparatus includes units configured to perform the method according to any one of the first aspect or the possible implementations of the first aspect.

According to a fourth aspect, a resource indication apparatus is provided, and is configured to perform the method according to any one of the second aspect or the possible implementations of the second aspect. Specifically, the resource indication apparatus includes units configured to perform the method according to any one of the second aspect or the possible implementations of the second aspect.

According to a fifth aspect, an embodiment of this application provides a resource division device, including a transceiver/a transceiver pin and a processor, and optionally, further including a memory. The transceiver/transceiver pin, the processor, and the memory communicate with each other through an internal connection path. The processor is configured to execute an instruction to control the transceiver/transceiver pin to send or receive a signal. The memory is configured to store the instruction. When the processor executes the instruction, the processor performs the method according to any one of the first aspect or the possible implementations of the first aspect.

According to a sixth aspect, an embodiment of this application provides a resource indication device, including a transceiver/a transceiver pin and a processor, and optionally, further including a memory. The transceiver/transceiver pin, the processor, and the memory communicate with each other through an internal connection path. The processor is configured to execute an instruction to control the transceiver/transceiver pin to send or receive a signal. The memory is configured to store the instruction. When the processor executes the instruction, the processor performs the method according to any one of the second aspect or the possible implementations of the second aspect.

According to a seventh aspect, an embodiment of this application provides a computer-readable storage medium, configured to store a computer program. The computer program includes an instruction used to perform the method according to any one of the first aspect or the possible implementations of the first aspect.

According to an eighth aspect, an embodiment of this application provides a computer-readable storage medium, configured to store a computer program. The computer program includes an instruction used to perform the method according to any one of the second aspect or the possible implementations of the second aspect.

According to a ninth aspect, an embodiment of this application provides a computer program product. The computer program product includes computer program code. When the computer program code is run on a computer, the computer is enabled to perform the method according to any one of the first aspect or the possible implementations of the first aspect.

According to a tenth aspect, an embodiment of this application provides a computer program product. The computer program product includes computer program code. When the computer program code is run on a computer, the computer is enabled to perform the method according to any one of the second aspect or the possible implementations of the second aspect.

In addition, for technical effects brought by any design manner of the third to the tenth aspects, refer to technical effects brought by different design manners of the first aspect and the second aspect. Details are not described herein again.

It can be learned from the foregoing technical solutions that this application has the following advantages.

in the embodiments of this application, the resource division method is provided. The resource division apparatus performs resource division on the channel. The divided channel includes the data and pilot resource unit and the direct current component. The direct current component is located between the two subcarriers in the center of the frequency band of the channel. In the foregoing manner, in the DFT-S-OFDM transmission mode, because transmission of the high-frequency signal is quite sensitive to the peak to average power ratio of the signal, the direct current component is disposed between the two subcarriers in the center of the frequency band, to avoid the impact of the null direct current subcarrier on the peak to average power ratio of the signal, and effectively reduce the peak to average power ratio during transmission, so that efficiency of a transmitter power amplifier is improved.

**BRIEF DESCRIPTION OF DRAWINGS**

FIG. 1 is a schematic diagram of an RU design of a 20 MHz channel in the 802.11ax standard;
FIG. 2 is a schematic diagram of being used in a WLAN scenario according to this application;
FIG. 3 is another schematic diagram of being used in a WLAN scenario according to this application;
FIG. 4 is a schematic diagram of a communications module used in a resource division apparatus and a resource indication apparatus according to this application;
FIG. 5 is a schematic diagram of a frequency band in a single-carrier mode of a 2.16 GHz channel according to an embodiment of this application;
FIG. 6 is a schematic diagram of sampling rates of a DFT-S-OFDM transmit apparatus and a DFT-S-OFDM receive apparatus according to an embodiment of this application;
FIG. 7 is a schematic diagram of a direct current component of DFT-S-OFDM at a frequency domain position according to an embodiment of this application;

FIG. 8 is a schematic diagram of an embodiment of a resource division method that is based on a 2.16 GHz channel according to embodiments of this application;

FIG. 9 shows peak to average power ratios corresponding to a Golay sequence of a 2.16 GHz channel in resource unit combinations according to an embodiment of this application;

FIG. 10 is a schematic diagram of resource division on a 2.16 GHz channel according to an embodiment of this application;

FIG. 11 is another schematic diagram of resource division on a 2.16 GHz channel according to an embodiment of this application;

FIG. 12 is a schematic diagram of an embodiment of a resource division method that is based on a 4.32 GHz channel according to the embodiments of this application;

FIG. 13 shows peak to average power ratios corresponding to a Golay sequence of a 4.32 GHz channel in resource unit combinations according to an embodiment of this application;

FIG. 14 is a schematic diagram of resource division on a 4.32 GHz channel according to an embodiment of this application;

FIG. 15 is another schematic diagram of resource division on a 4.32 GHz channel according to an embodiment of this application;

FIG. 16 is a schematic diagram of an embodiment of a resource division method that is based on a 6.48 GHz channel according to the embodiments of this application;

FIG. 17 shows peak to average power ratios corresponding to a Golay sequence of a 6.48 Hz channel in resource unit combinations according to an embodiment of this application;

FIG. 18 is a schematic diagram of resource division on a 6.48 GHz channel according to an embodiment of this application;

FIG. 19 is another schematic diagram of resource division on a 6.48 GHz channel according to an embodiment of this application;

FIG. 20 is a schematic diagram of another embodiment of a resource division method that is based on a 6.48 GHz channel according to the embodiments of this application;

FIG. 21 shows peak to average power ratios corresponding to a Golay sequence of a 6.48 Hz channel in resource unit combinations according to an embodiment of this application;

FIG. 22 is a schematic diagram of resource division on a 6.48 GHz channel according to an embodiment of this application;

FIG. 23 is another schematic diagram of resource division on a 6.48 GHz channel according to an embodiment of this application;

FIG. 24 is a schematic diagram of another embodiment of a resource division method that is based on an 8.64 GHz channel according to the embodiments of this application;

FIG. 25 shows peak to average power ratios corresponding to a Golay sequence of an 8.64 Hz channel in resource unit combinations according to an embodiment of this application;

FIG. 26 is a schematic diagram of resource division on an 8.64 GHz channel according to an embodiment of this application;

FIG. 27 is a schematic diagram of another frequency band in a single-carrier mode of a 2.16 GHz channel according to an embodiment of this application;

FIG. 28 is a schematic diagram of another embodiment of a resource division method that is based on a 2.16 GHz channel according to the embodiments of this application;

FIG. 29 is another schematic diagram of resource division on a 2.16 GHz channel according to an embodiment of this application;

FIG. 30 is a schematic diagram of another embodiment of a resource division method that is based on a 4.32 GHz channel according to the embodiments of this application;

FIG. 31 is another schematic diagram of resource division on a 4.32 GHz channel according to an embodiment of this application;

FIG. 32 is a schematic diagram of another embodiment of a resource division method that is based on a 6.48 GHz channel according to the embodiments of this application;

FIG. 33 is another schematic diagram of resource division on a 6.48 GHz channel according to an embodiment of this application;

FIG. 34 is another schematic diagram of resource division on a 6.48 GHz channel according to an embodiment of this application;

FIG. 35 is a schematic diagram of another embodiment of a resource division method that is based on an 8.64 GHz channel according to the embodiments of this application;

FIG. 36 is another schematic diagram of resource division on an 8.64 GHz channel according to an embodiment of this application;

FIG. 37 is a schematic diagram of a frame header of a physical frame according to an embodiment of this application;

FIG. 38 is a schematic diagram of a frame header of a trigger frame according to an embodiment of this application;

FIG. 39 is a schematic diagram of an embodiment of a resource indication method according to the embodiments of this application;

FIG. 40 is a schematic diagram of a PAPR complementary cumulative distribution function curve in a case of different quantities of null direct current subcarriers in DFT-S-OFDM transmission according to this application;

FIG. 41 is a schematic diagram of an embodiment of a resource division apparatus according to the embodiments of this application;

FIG. 42 is a schematic diagram of an embodiment of a resource indication apparatus according to the embodiments of this application;

FIG. 43 is a schematic structural diagram of an access point according to an embodiment of this application;

FIG. 44 is a schematic structural diagram of a transmit apparatus at an access point according to an embodiment of this application;

FIG. 45 is a schematic structural diagram of a receive apparatus at an access point according to an embodiment of this application;

FIG. 46 is a schematic diagram of an embodiment of a station according to the embodiments of this application;

FIG. 47 is a schematic structural diagram of a transmit apparatus at a station according to an embodiment of this application;

FIG. 48 is a schematic structural diagram of a receive apparatus at a station according to an embodiment of this application; and

FIG. 49 is a schematic diagram of an embodiment of a communications system according to the embodiments of this application.

## DESCRIPTION OF EMBODIMENTS

This application provides a resource division method, a resource indication method, and related apparatuses, to avoid impact of a null direct current subcarrier on a peak to average power ratio of a signal, and effectively reduce a peak to average power ratio during transmission, so that efficiency of a transmitter power amplifier is improved.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances so that embodiments of this application described herein can be, for example, implemented in an order other than the orders illustrated or described herein. In addition, the terms "include", "have", and any other variants mean to cover non-exclusive inclusion, for example, a process, method, system, product, or device that includes a list of steps or units is not necessarily limited to those expressly listed steps or units, but may include other steps or units that are not expressly listed or inherent to such a process, method, product, or device.

Currently, an orthogonal frequency division multiple access (orthogonal frequency division multiplexing, OFDM) technology has been widely used in a wireless local area network (wireless local area network, WLAN) standard. 802.11n/ac is a most widely used WLAN wireless standard. To improve a speed and a throughput and reduce power consumption, the institute of electrical and electronics engineers (institute of electrical and electronics engineers, IEEE) 802.11ax/ad/ay came into being. 802.11ax is natural evolution of ac/n, and also operates in a 2.4/5 gigahertz (gigahertz, GHz) frequency band. 11ad/ay is used as a complementary technology. An operating frequency band is 60 GHz, and 11 ad/ay has an ultra-high bandwidth and no interference. Therefore, a rate can be quite high. 802.11ad based on 60 GHz can reach a data transmission rate of eight gigabits per second (gigabit per second, Gbps), and a peak rate of the next-generation 802.11ay standard of 802.11 ad reaches 176 Gbps, namely, 22 GB/s. Therefore, 802.11 ay is expected to be practically used in scenarios such as high-definition transmission, wireless projection, and wireless backhaul.

It should be understood that the resource division method and the resource indication method that are provided in this application may be used in a high-frequency WLAN such as a WLAN whose operating frequency band is 60 GHz. To reduce a peak to average power ratio (peak to average power ratio, PAPR) of a system while supporting multi-user frequency division multiplexing, it may be considered that a discrete Fourier transform-spread OFDM (discrete fourier transform-spread OFDM, DFT-S-OFDM) transmission technology is introduced into the next-generation 60 GHz WLAN. Channel allocation of the 60 GHz WLAN is completely different from that of an existing low-frequency WLAN technology (for example, 802.11n/ac/ax). For example, a basic channel bandwidth of 11ax is 20 megahertz (mega hertz, MHz), and a basic channel bandwidth of 11ad/ay is 2.16 GHz. In addition, the existing 11ad/ay standard supports only a single-carrier mode and a conventional OFDM transmission mode. If the DFT-S-OFDM transmission technology is introduced into the next-generation 60 GHz WLAN standard, and multi-user frequency division multiplexing is considered, spectrum resource units of DFT-S-OFDM need to be re-divided.

During division of the spectrum resource units of DFT-S-OFDM, a quantity of fast Fourier transform (fast fourier transform, FFT) points and a quantity of inverse fast Fourier transform (inverse fast fourier transform, IFFT) points during DFT-S-OFDM transmission need to be determined based on features of a channel and a bandwidth of the existing 60 GHz WLAN. In addition, a transmitter of a high-frequency signal is quite sensitive to a PAPR of a signal, and a relatively high transmission PAPR may cause relatively low transmitter power amplifier efficiency. Therefore, a PAPR of a resource unit corresponding to a preamble sequence also needs to be considered during resource unit design.

Based on the resource division method and the resource indication method that are provided in this application, it should be understood that this application may be used in communication between an access point (access point, AP) and a station (station, STA) in a WLAN scenario. The AP is configured to provide a wireless access service, allow access of another wireless device, and provide data access. Usually, a wireless router and a network bridge operate in this mode, and APs are allowed to be connected to each other. A STA is similar to a wireless terminal. The STA does not accept wireless access, and may be connected to the AP. Usually, a wireless network interface card operates in this mode. The AP and the STA communicate with each other in either of the following two manners:

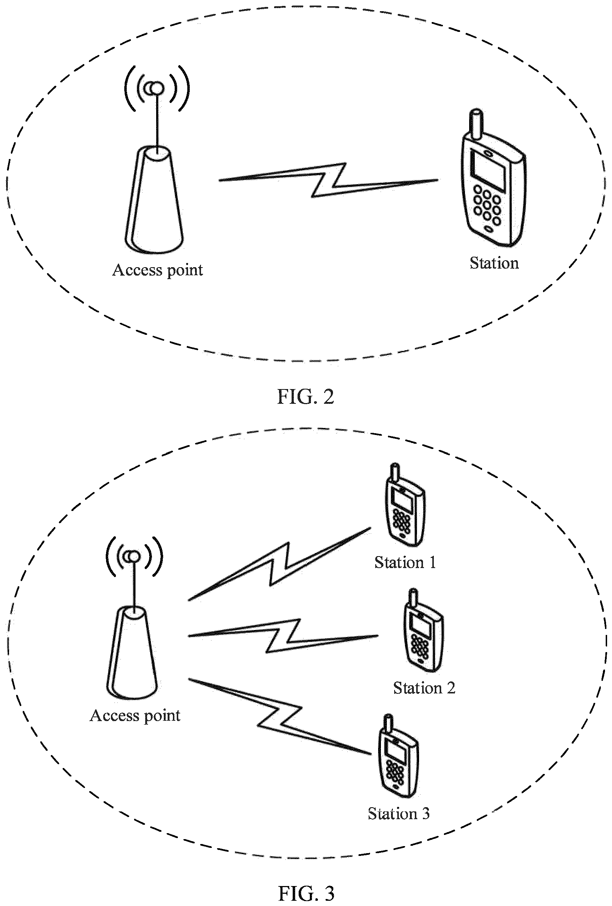

In a first manner, FIG. 2 is a schematic diagram of being used in a WLAN scenario according to this application. As shown in the figure, the WLAN scenario includes communication between an AP and a single STA.

In a second manner, FIG. 3 is another schematic diagram of being used in a WLAN scenario according to an embodiment. As shown in the figure, the WLAN scenario includes communication between an AP and a plurality of STAs. Communication between the AP and the plurality of STAs may be classified into downlink transmission in which the AP sends signals to the plurality of STAs and uplink transmission in which the plurality of STAs send signals to the AP.

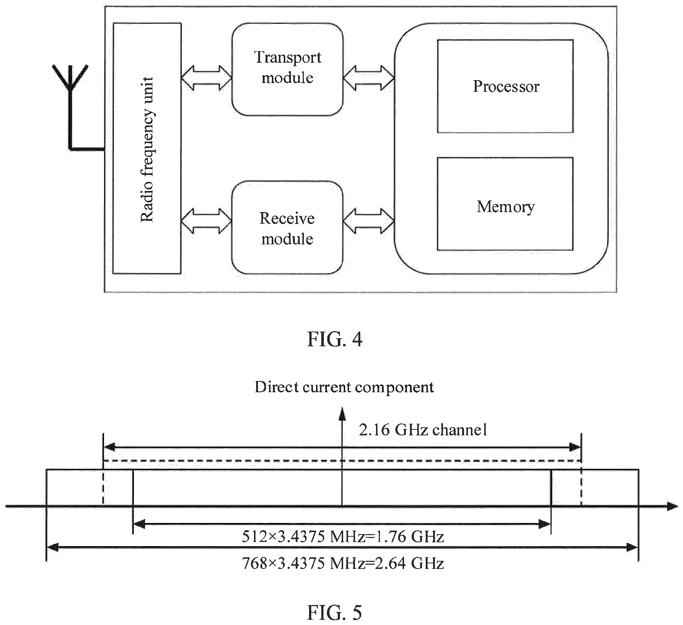

It should be understood that, based on the foregoing WLAN application scenario, the resource division apparatus provided in this application is located in a communications module in the AP or a communications module in the STA. The resource indication apparatus provided in this application is located in the communications module in the AP. FIG. 4 is a schematic diagram of a communications module used in a resource division apparatus and a resource indication apparatus according to this application. As shown in the figure, the communications module includes a radio frequency unit (radio frequency unit, RF unit), a transport module (transport module, Tx module), a receive module (receive module, Rx module), a processor (processor), and a memory (memory). The Tx module transmits a to-be-sent signal to the RF unit for sending, and the Rx module receives the signal from the RF unit for further processing.

The AP is also referred to as a hotspot, or the like. The AP is an access point used by a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to an ethernet. Specifically, the AP may be a terminal device or a network device with a Wi-Fi chip. Optionally, the AP may support the 802.11ax protocol. Further, optionally, the AP may be a device that supports a plurality of WLAN protocols such as 802.11ac, 802.11n, 802.11g, 802.11b, and 802.11a. Usually, a device that supports a protocol is also compatible with an old protocol that operates in a same frequency band. For example, an 802.1 In device operating in a 2.4 GHz frequency band is usually also compatible with 802.11b and 802.11g, and an 802.11n device operating in a 5 GHz frequency band is usually also compatible with 802.11a. That the device "is compatible with" a protocol means that the device supports the protocol.

The STA may be a wireless communications chip, a wireless sensor, or a wireless communications terminal, for example, a mobile phone supporting a Wi-Fi communication function, a tablet supporting the Wi-Fi communication function, a set-top box supporting the Wi-Fi communication function, a smart TV supporting the Wi-Fi communication function, a smart wearable device supporting the Wi-Fi communication function, a vehicle-mounted communications device supporting the Wi-Fi communication function, and a computer supporting the Wi-Fi communication function. Optionally, the station may support the 802.11ax protocol. Further, optionally, the station supports a plurality of WLAN protocols such as 802.11ac, 802.11n, 802.11g, 802.11b, and 802.11a.

The following separately describes the resource division method and the resource indication method that are provided in this application.

1. Resource division

Based on PAPRs of preamble sequences that are of a preamble short training field (short training field, STF) and channel estimated field (channel estimated field, CEF) part and that Golay sequences have been widely used as in existing 11ad/ay, resource unit allocation in a case of bonding of a single 2.16 GHz channel and bonding of a plurality of 2.16 GHz channels is designed by using minimization of PAPRs of various resource units in a case of a plurality of users as a criterion. The following provides description with reference to the accompanying drawings.

FIG. 5 is a schematic diagram of a frequency band in a single-carrier mode of a 2.16 GHz channel according to an embodiment of this application. As shown in the figure, a resource division apparatus needs to perform resource division on a channel. The divided channel includes a data and pilot resource unit and a direct current component. The direct current component is located between two subcarriers in a center of a frequency band of the channel.

In this embodiment, in the frequency band of the single 2.16 GHz channel shown in FIG. 5, a dashed-line part is a bandwidth occupied by the 2.16 GHz channel. Because a receiver structure in an existing 11ad/ay single-carrier transmission mode needs to be considered to be reused as much as possible in a design of a DFT-S-OFDM resource unit in this application, an actual bandwidth occupied by a data part needs to be consistent with that occupied by a single carrier, to be specific, a 1.76 GHz bandwidth shown in FIG. 5.

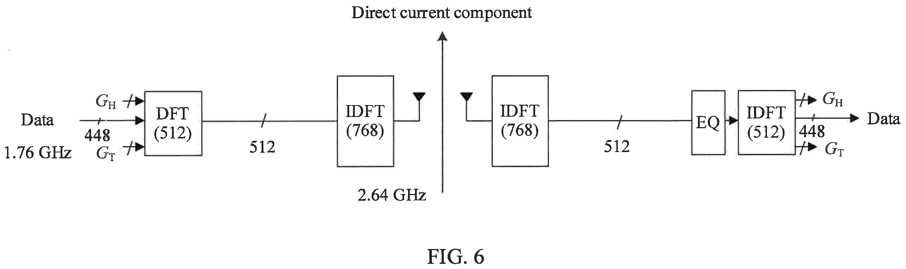

In the foregoing case, a subcarrier width may be defined as 3.4375 MHz, and 512 subcarriers may be used in such a data width. In other words, a quantity of discrete Fourier transform (discrete fourier transform, DFT) points of a DFT-S-OFDM transmit apparatus is 512, and a quantity of inverse discrete Fourier transform (inverse discrete fourier transform, IDFT) points is 768. For ease of understanding, FIG. 6 is a schematic diagram of sampling rates of a DFT-S-OFDM transmit apparatus and a DFT-S-OFDM receive apparatus according to an embodiment of this application. As shown in the figure, time-domain-to-frequency-domain transformation is performed on data of a 1.76 GHz bandwidth. A bandwidth occupied for data transmission after IDFT is 2.64 GHz, and a corresponding sampling rate of data is 2.64 GHz. In this way, the sampling rate is consistent with a sampling rate of data after IDFT in the conventional 11ad/ay standard. Therefore, after IDFT, a transmit apparatus may reuse a transport module of an OFDM transmit apparatus after IDFT in the existing 11ad/ay standard. In DFT-S-OFDM, time-domain-to-frequency-domain transformation needs to be first performed on the data of the 1.76 GHz bandwidth to obtain data of the 2.64 GHz bandwidth, and then, frequency-domain-to-time-domain transformation is performed on the data of the 2.64 GHz bandwidth to obtain the data of the 1.76 GHz bandwidth.

It should be noted that, in addition to DFT, Fourier transform may alternatively be fast Fourier transform (fast fourier transform, FFT). In addition to IDFT, inverse Fourier transform may alternatively be inverse fast Fourier transform (inverse fast fourier transform, IFFT). This is merely an example herein, and should not be understood as a limitation on this application.

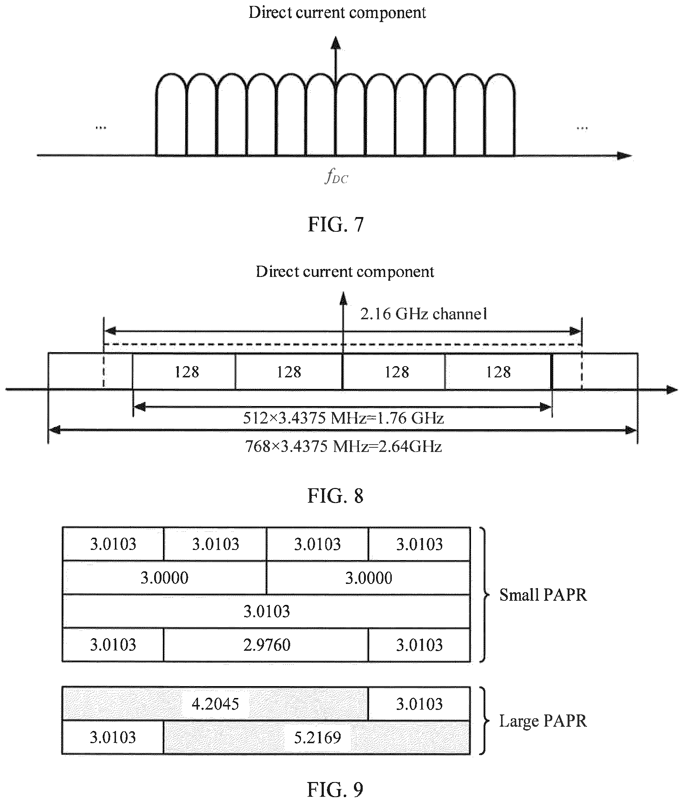

Based on illustration of the sampling rates of the parts of the DFT-S-OFDM transmit apparatus and the DFT-S-OFDM receive apparatus shown in FIG. 6, a position of a direct current component further needs to be considered during resource unit division. FIG. 7 is a schematic diagram of a direct current component of DFT-S-OFDM at a frequency domain position according to an embodiment of this application. As shown in the figure, in DFT-S-OFDM, a signal needs to be mapped to all data subcarriers in a center of a frequency band, and the direct current component is located in a center of two central subcarriers.

The following separately describes resource division by using embodiments in which channel bonding (channel bonding, CB) is equal to 1, 2, 3, and 4.

Embodiment 1: A resource division method on a single 2.16 GHz channel.

Optionally, based on the schematic diagram of the frequency band in the single-carrier mode of the 2.16 GHz channel shown in FIG. 5, this embodiment provides a resource division method. FIG. 8 is a schematic diagram of an embodiment of a resource division method that is based on a 2.16 GHz channel according to embodiments of this application. As shown in the figure, when channel bonding is 1 (CB=1), a channel of a communications system is a single 2.16 GHz channel. In view of that a signal has extremely strong directivity during 60 GHz WLAN transmission, a quantity of users covered by a single beam should not be excessively large. Therefore, when CB=1, in this application, it is considered that four users may simultaneously perform frequency division multiplexing. When CB=1 and there are four users, resource units may be divided in a manner shown in FIG. 8. As shown in FIG. 8, each resource unit includes 128 contiguous subcarriers. Data and a pilot occupy a total of 512 subcarriers. That is, the data and the pilot occupy a 1.76 GHz bandwidth. A bandwidth occupied by the data and the pilot after inverse Fourier transform is 2.64 GHz. Each resource unit may be used to transmit the data or the pilot, and a ratio of subcarriers occupied by the data to subcarriers occupied by the pilot may be flexibly selected based on an actual situation.

In addition, Golay sequences have been widely used as preamble sequences of an STF and a CEF in the 11ad\ay standard, and PAPRs of the preamble sequences of the STF and CEF part need to have relatively low values to improve efficiency of a transmitter power amplifier. During uplink data transmission, each user transmits new preambles and data of the STF and CEF part in a frequency band allocated to the user. Therefore, it needs to be ensured that a preamble part corresponding to a resource unit of the user also has a relatively low PAPR.

For ease of description, FIG. 9 shows peak to average power ratios corresponding to a Golay sequence of a 2.16 GHz channel in resource unit combinations according to an embodiment of this application. As shown in the figure:

Four resource units of 128 subcarriers all have quite low PAPRs, where a PAPR of each resource unit of 128 subcarriers is 3.0103.

Two resource units of 256 subcarriers also have relatively low PAPRs, where a PAPR of either resource unit of 256 subcarriers is 3.0000.

One resource unit of 512 subcarriers also has a relatively low PAPR, where the PAPR of the resource unit of 512 subcarriers is 3.0103.

A combination of one resource unit of 128 subcarriers, two resource units of 256 subcarriers, and one resource unit of 128 subcarriers also has a relatively low PAPR, where PAPRs of the first and the last resource units of 128 subcarriers are 3.0103, and PAPRs of the middle resource units of 256 subcarriers are 2.9760.

However, a combination of one resource unit of 384 subcarriers and one resource unit of 128 subcarriers has a relatively high PAPR, where a PAPR of the resource unit of 384 subcarriers is 4.2045.

A combination of one resource unit of 128 subcarriers and one resource unit of 384 subcarriers has a relatively high PAPR, where a PAPR of the resource unit of 384 subcarriers is 5.2169.

In this embodiment of this application, the resource unit of 128 subcarriers and a resource unit including 128 subcarriers express a same meaning.

Based on the PAPRs corresponding to the Golay sequence of the 2.16 GHz channel in the resource unit combinations shown in FIG. 9, resource division in this embodiment of this application includes the following manners.

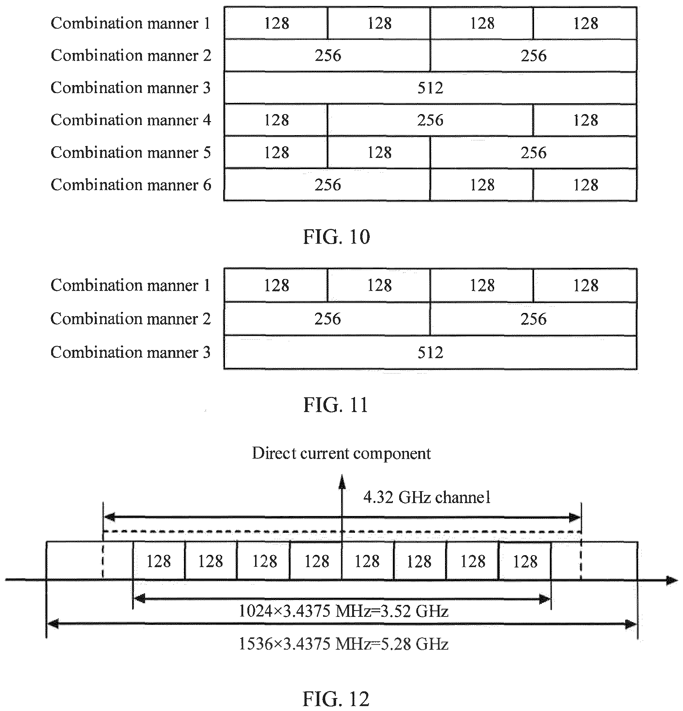

FIG. 10 is a schematic diagram of resource division on a 2.16 GHz channel according to an embodiment of this application. As shown in the figure, resource division on the single 2.16 GHz channel may include the following several manners:

four data and pilot resource units each including 128 subcarriers;
two data and pilot resource units each including 256 subcarriers;
one data and pilot resource unit including 512 subcarriers; and
any combination of one data and pilot resource unit including 128 subcarriers, one data and pilot resource unit including 128 subcarriers, and one data and pilot resource unit including 256 subcarriers.

Second resource unit combination

FIG. 11 is another schematic diagram of resource division on a 2.16 GHz channel according to an embodiment of this application. As shown in the figure, in a design of a second resource unit combination on the single 2.16 GHz channel, a simpler design is considered. Resource allocation solutions shown in the last three rows in FIG. 10 may be removed, to form a simpler solution shown in FIG. 11. When performing resource allocation, a user may use a combination of resource units shown in rows shown in FIG. 11.

It can be learned that in this embodiment of this application, a method for performing resource division on the single 2.16 GHz channel is provided, and a resource unit including 128 subcarriers, a resource unit including 256 subcarriers, or a resource unit including 512 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Embodiment 2: A resource division method on two 2.16 GHz (channel bonding is 2) channels.

Optionally, based on the schematic diagram of the frequency band in the single-carrier mode of the 2.16 GHz channel shown in FIG. 5, this embodiment provides another resource division method. FIG. 12 is a schematic diagram of an embodiment of a resource division method that is based on a 4.32 GHz channel according to the embodiments of this application. As shown in the figure, when channel bonding is 2 (CB=2), a channel of a communications system is a single 4.32 GHz channel. In view of that a signal has extremely strong directivity during 60 GHz WLAN transmission, a quantity of users covered by a single beam should not be excessively large. Therefore, when CB=2, in this application, it is considered that eight users may simultaneously perform frequency division multiplexing. When CB=2 and there are eight users, resource units may be divided in a manner shown in FIG. 12. As shown in FIG. 12, each resource unit includes 128 contiguous subcarriers. Data and a pilot occupy a total of 1024 subcarriers. That is, the data and the pilot occupy a 3.52 GHz bandwidth. A bandwidth occupied by the data and the pilot after inverse Fourier transform is 5.28 GHz. Each resource unit may be used to transmit the data or the pilot, and a ratio of subcarriers occupied by the data to subcarriers occupied by the pilot may be flexibly selected based on an actual situation.

In addition, Golay sequences have been widely used as preamble sequences of an SFT and a CEF in the 11ad\ay standard, and PAPRs of the preamble sequences of the STF and CEF part need to have relatively low values to improve efficiency of a transmitter power amplifier. During uplink data transmission, each user transmits new preambles and data of the STF and CEF part in a frequency band allocated to the user. Therefore, it needs to be ensured that a preamble part corresponding to a resource unit of the user also has a relatively low PAPR.

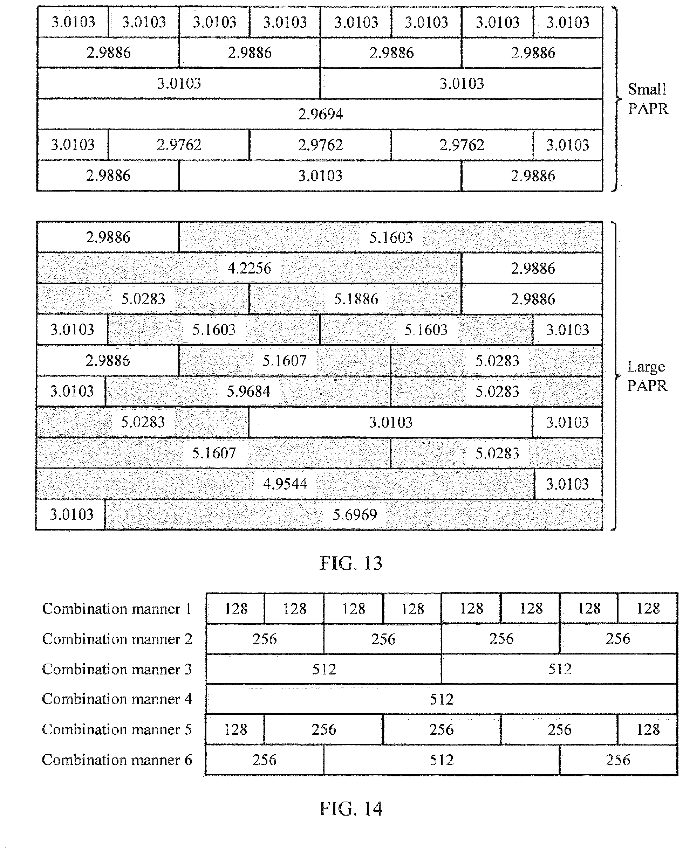

For ease of description, FIG. 13 shows peak to average power ratios corresponding to a Golay sequence of a 4.32 GHz channel in resource unit combinations according to an embodiment of this application. As shown in the figure:

Eight resource units of 128 subcarriers all have quite low PAPRs, where a PAPR of each resource unit of 128 subcarriers is 3.0103.

Four resource units of 256 subcarriers also have relatively low PAPRs, where a PAPR of each resource unit of 256 subcarriers is 2.9886.

Two resource units of 512 subcarriers also have a relatively low PAPR, where a PAPR of the resource unit of 512 subcarriers is 3.0103.

One resource unit of 1024 subcarriers also has a relatively low PAPR, where the PAPR of the resource unit of 1024 subcarriers is 2.9694.

A combination of one resource unit of 128 subcarriers, two resource units of 256 subcarriers, two resource units of 256 subcarriers, two resource units of 256 subcarriers, and one resource unit of 128 subcarriers also has a relatively low PAPR, where PAPRs of the first and the last resource units of 128 subcarriers are 3.0103, and PAPRs of the three middle resource units of 256 subcarriers are 2.9762.

A combination of one resource unit of 256 subcarriers, one resource unit of 512 subcarriers, and one resource unit of 256 subcarriers also has a relatively low PAPR, where PAPRs of the first and the last resource units of 256 subcarriers are 2.9886, and a PAPR of the middle resource unit of 512 subcarriers is 3.0103.

However, a combination of one resource unit of 256 subcarriers and one resource unit of 768 subcarriers has a relatively high PAPR, where a PAPR of the resource unit of 768 subcarriers is 5.1603.

A combination of one resource unit of 768 subcarriers and one resource unit of 256 subcarriers has a relatively high PAPR, where a PAPR of the resource unit of 768 subcarriers is 4.2256.

A combination of one resource unit of 384 subcarriers, one resource unit of 384 subcarriers, and one resource unit of 256 subcarriers has a relatively high PAPR, where a PAPR of one resource unit of 384 subcarriers is 5.0283, and a PAPR of one resource unit of 384 subcarriers is 5.1886.

A combination of one resource unit of 128 subcarriers, one resource unit of 384 subcarriers, one resource unit of 384 subcarriers, and one resource unit of 128 subcarriers has a relatively high PAPR, where a PAPR of one resource unit of 384 subcarriers is 5.1603, and a PAPR of one resource unit of 384 subcarriers is 5.1603.

A combination of one resource unit of 256 subcarriers, one resource unit of 384 subcarriers, and one resource unit of 384 subcarriers has a relatively high PAPR, where a PAPR of one resource unit of 384 subcarriers is 5.1607, and a PAPR of one resource unit of 384 subcarriers is 5.0283.

A combination of one resource unit of 128 subcarriers, one resource unit of 512 subcarriers, and one resource unit of 384 subcarriers has a relatively high PAPR, where a PAPR of the resource unit of 512 subcarriers is 5.9684, a PAPR of the resource unit of 384 subcarriers is 5.0283.

A combination of one resource unit of 384 subcarriers, one resource unit of 512 subcarriers, and one resource unit of 128 subcarriers has a relatively high PAPR, where a PAPR of the resource unit of 384 subcarriers is 5.0283.

A combination of one resource unit of 640 subcarriers and one resource unit of 384 subcarriers has a relatively high PAPR, where a PAPR of the resource unit of 640 subcarriers is 5.1607, and a PAPR of the resource unit of 384 subcarriers is 5.0283.

A combination of one resource unit of 896 subcarriers and one resource unit of 128 subcarriers has a relatively high PAPR, where a PAPR of the resource unit of 896 subcarriers is 4.9544.

A combination of one resource unit of 128 subcarriers and one resource unit of 896 subcarriers has a relatively high PAPR, where a PAPR of the resource unit of 896 subcarriers is 5.6969.

In this embodiment of this application, the resource unit of 128 subcarriers and a resource unit including 128 subcarriers express a same meaning.

Based on the PAPRs corresponding to the Golay sequence of the 4.32 GHz channel in the resource unit combinations shown in FIG. 13, resource division in this embodiment of this application includes the following manners.

First resource unit combination

FIG. 14 is a schematic diagram of resource division on a 4.32 GHz channel according to an embodiment of this application. As shown in the figure, resource division on the single 4.32 GHz channel may include the following several manners:

eight data and pilot resource units each including 128 subcarriers;
four data and pilot resource units each including 256 subcarriers;
two data and pilot resource units each including 512 subcarriers;
one data and pilot resource unit including 1024 subcarriers;
any combination of two data and pilot resource units each including 128 subcarriers and three data and pilot resource units each including 256 subcarriers;
any combination of four data and pilot resource units each including 128 subcarriers and two data and pilot resource units each including 256 subcarriers;
any combination of six data and pilot resource units each including 128 subcarriers and one data and pilot resource unit including 256 subcarriers;
any combination of four data and pilot resource units each including 128 subcarriers and one data and pilot resource unit including 512 subcarriers;
any combination of two data and pilot resource units each including 128 subcarriers, one data and pilot resource unit including 256 subcarriers, and one data and pilot resource unit including 512 subcarriers; and
any combination of two data and pilot resource units each including 256 subcarriers and one data and pilot resource unit including 512 subcarriers.

Second resource unit combination

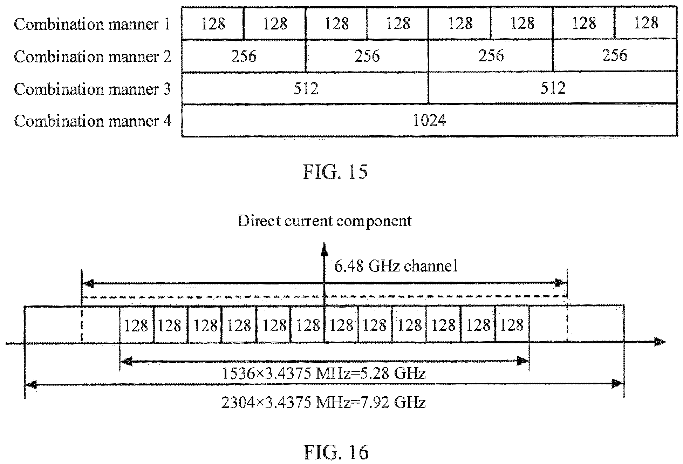

FIG. 15 is another schematic diagram of resource division on a 4.32 GHz channel according to an embodiment of this application. As shown in the figure, in a design of a second resource unit combination on the single 4.32 GHz channel, a simpler design is considered. Resource allocation solutions shown in the last two rows in FIG. 14 may be removed, to form a simpler solution shown in FIG. 15. When performing resource allocation, a user may use a combination of resource units shown in rows shown in FIG. 15.

It can be learned that in this embodiment of this application, a method for performing resource division on the single 4.32 GHz channel is provided, and a resource unit including 128 subcarriers, a resource unit including 256 subcarriers, or a resource unit including 512 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Embodiment 3: A resource division method on three 2.16 GHz (channel bonding is 3) channels.

Optionally, based on the schematic diagram of the frequency band in the single-carrier mode of the 2.16 GHz channel shown in FIG. 5, this embodiment provides another resource division method. FIG. 16 is a schematic diagram of an embodiment of a resource division method that is based on a 6.48 GHz channel according to the embodiments of this application. As shown in the figure, when channel bonding is 3 (CB=3), a channel of a communications system is a single 6.48 GHz channel. In view of that a signal has extremely strong directivity during 60 GHz WLAN transmission, a quantity of users covered by a single beam should not be excessively large. Therefore, when CB=3, in this application, it is considered that 12 users may simultaneously perform frequency division multiplexing. When CB=3 and there are 12 users, resource units may be divided in a manner shown in FIG. 16. As shown in FIG. 16, each resource unit includes 128 contiguous subcarriers. Data and a pilot occupy a total of 1536 subcarriers. That is, the data and the pilot occupy a 5.28 GHz bandwidth. A bandwidth occupied by the data and the pilot after inverse Fourier transform is 7.92 GHz. Each resource unit may be used to transmit the data or the pilot, and a ratio of subcarriers occupied by the data to subcarriers occupied by the pilot may be flexibly selected based on an actual situation.

In addition, Golay sequences have been widely used as preamble sequences of an SFT and a CEF in the 11ad\ay standard, and PAPRs of the preamble sequences of the STF and CEF part need to have relatively low values to improve efficiency of a transmitter power amplifier. During uplink data transmission, each user transmits new preambles and data of the STF and CEF part in a frequency band allocated to the user. Therefore, it needs to be ensured that a preamble part corresponding to a resource unit of the user also has a relatively low PAPR.

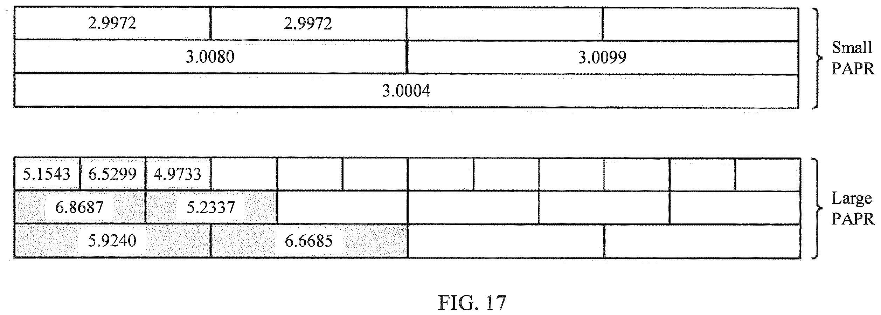

For ease of description, FIG. 17 shows peak to average power ratios corresponding to a Golay sequence of a 6.48 Hz channel in resource unit combinations according to an embodiment of this application. As shown in the figure:

Four resource units of 384 subcarriers all have relatively low PAPRs, where a PAPR of each resource unit of 384 subcarrier is 2.9972.

Two resource units of 768 subcarriers also have relatively low PAPRs, where a PAPR of one resource unit of 768 subcarriers is 3.0080, and a PAPR of the other resource unit of 768 subcarriers is 3.0099.

One resource unit of 1536 subcarriers also has a relatively low PAPR, and the PAPR of the resource unit of 1536 subcarriers is 3.0004.

However, 12 resource units of 128 subcarriers have relatively high PAPRs, where a PAPR of one resource unit of 128 subcarriers is 5.1543, a PAPR of one resource unit of 128 subcarriers is 6.5299, and a PAPR of one resource unit of 128 subcarriers is 4.9733.

Six resource units of 256 subcarriers have relatively high PAPRs, where a PAPR of one resource unit of 256 subcarriers is 6.8687, and a PAPR of one resource unit of 256 subcarriers is 5.2337.

Four resource units of 384 subcarriers have relatively high PAPRs, where a PAPR of one resource unit of 384 subcarriers is 5.9240, and a PAPR of one resource unit of 384 subcarriers is 6.6685.

In this embodiment of this application, the resource unit of 128 subcarriers and a resource unit including 128 subcarriers express a same meaning.

Based on the PAPRs corresponding to the Golay sequence of the 6.48 GHz channel in the resource unit combinations shown in FIG. 17, resource division in this embodiment of this application includes the following manners.

First resource unit combination

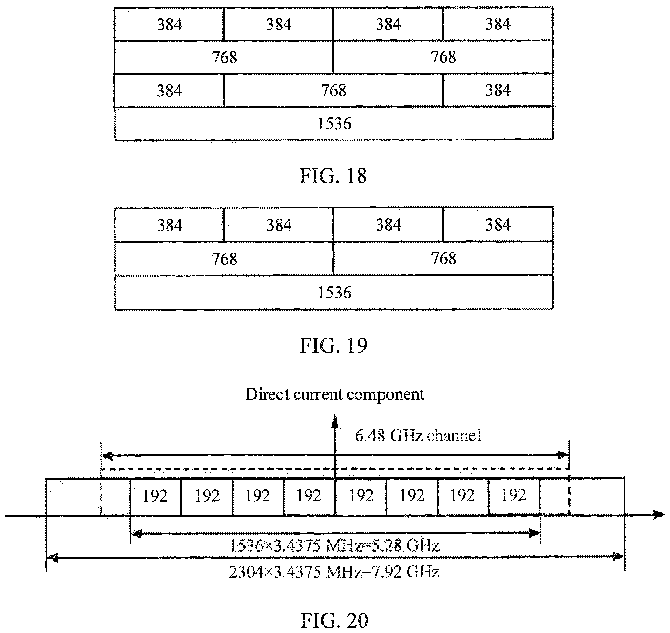

FIG. 18 is a schematic diagram of resource division on a 6.48 GHz channel according to an embodiment of this application. As shown in the figure, resource division on the single 6.48 GHz channel may include the following several manners:

> four data and pilot resource units each including 384 subcarriers;
> two data and pilot resource units each including 768 subcarriers;
> one data and pilot resource unit including 1536 subcarriers; and
> any combination of one data and pilot resource unit including 384 subcarriers, one data and pilot resource unit including 768 subcarriers, and one data and pilot resource unit including 384 subcarriers.

Second resource unit combination

FIG. 19 is another schematic diagram of resource division on a 6.48 GHz channel according to an embodiment of this application. As shown in the figure, in a design of a second resource unit combination on the single 6.48 GHz channel, a simpler design is considered. Resource allocation solutions shown in the third row in FIG. 18 may be removed, to form a simpler solution shown in FIG. 19. When performing resource allocation, a user may use a combination of resource units shown in rows shown in FIG. 19.

Optionally, based on the schematic diagram of the frequency band in the single-carrier mode of the 2.16 GHz channel shown in FIG. 5, this embodiment provides another resource division method. FIG. 20 is a schematic diagram of another embodiment of a resource division method that is based on a 6.48 GHz channel according to the embodiments of this application. As shown in the figure, when channel bonding is 3 (CB=3), a channel of a communications system is a single 6.48 GHz channel. In view of that a signal has extremely strong directivity during 60 GHz WLAN transmission, a quantity of users covered by a single beam should not be excessively large. Therefore, when CB=3, in this application, it is considered that eight users may simultaneously perform frequency division multiplexing. When CB=3 and there are eight users, resource units may be divided in a manner shown in FIG. 20. As shown in FIG. 20, each resource unit includes 192 contiguous subcarriers. Data and a pilot occupy a total of 1536 subcarriers. That is, the data and the pilot occupy a 5.28 GHz bandwidth. A bandwidth occupied by the data and the pilot after inverse Fourier transform is 7.92 GHz. Each resource unit may be used to transmit the data or the pilot, and a ratio of subcarriers occupied by the data to subcarriers occupied by the pilot may be flexibly selected based on an actual situation.

In addition, Golay sequences have been widely used as preamble sequences of an SFT and a CEF in the 11ad\ay standard, and PAPRs of the preamble sequences of the STF and CEF part need to have relatively low values to improve efficiency of a transmitter power amplifier. During uplink data transmission, each user transmits new preambles and data of the STF and CEF part in a frequency band allocated to the user. Therefore, it needs to be ensured that a preamble part corresponding to a resource unit of the user also has a relatively low PAPR.

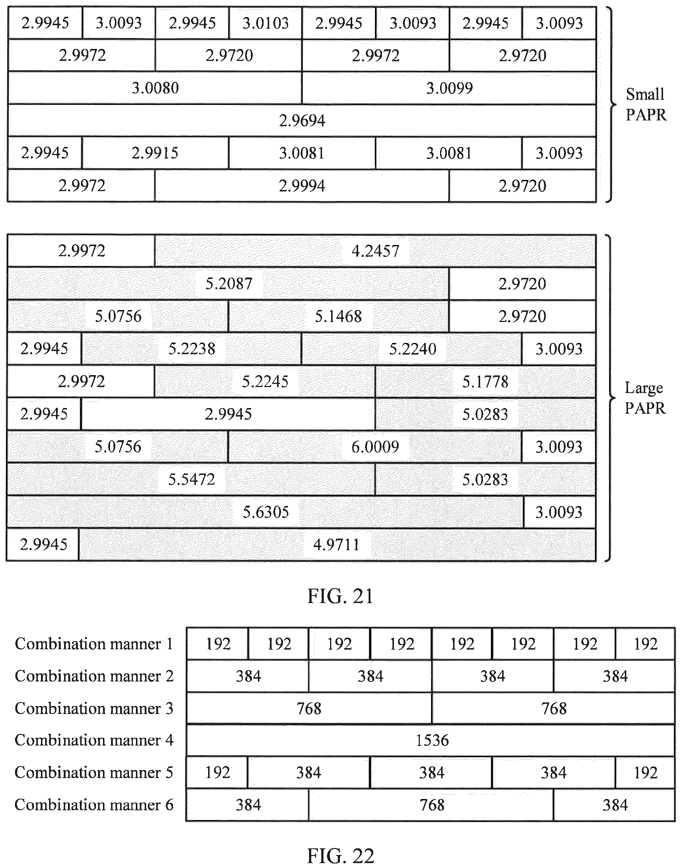

For ease of description, FIG. 21 shows peak to average power ratios corresponding to a Golay sequence of a 6.48 Hz channel in resource unit combinations according to an embodiment of this application. As shown in the figure:

Eight resource units of 192 subcarriers all have quite low PAPRs, where a PAPR of one resource unit of 192 subcarriers is 2.9945, a PAPR of one resource unit of 192 subcarriers is 3.0093, a PAPR of one resource unit of 192 subcarriers is 2.9945, a PAPR of one resource unit of 192 subcarriers is 3.0103, a PAPR of one resource unit of 192 subcarriers is 2.9945, a PAPR of one resource unit of 192 subcarriers is 3.0093, a PAPR of one resource unit of 192 subcarriers is 2.9945, and a PAPR of one resource unit of 192 subcarriers is 3.0093.

Four resource units of 384 subcarriers all have quite low PAPRs, where a PAPR of one resource unit of 384 subcarriers is 2.9972, a PAPR of one resource unit of 384 subcarriers is 2.9720, a PAPR of one resource unit of 384 subcarriers is 2.9972, and a PAPR of one resource unit of 384 subcarriers is 2.9720.

Two resource units of 768 subcarriers both have quite low PAPRs, where a PAPR of one resource unit of 768 subcarriers is 3.0080, and a PAPR of the other resource unit of 768 subcarriers is 3.0099.

One resource unit of 1536 subcarriers has a quite low PAPR, where the PAPR of the resource unit of 1536 subcarrier is 2.9694.

A combination of one resource unit of 192 subcarriers, three resource units of 384 subcarriers, and one resource unit of 192 subcarriers also has a relatively low PAPR, where a PAPR of one resource unit of 192 subcarriers is 2.9945, a PAPR of one resource unit of 384 subcarriers is 2.9915, a PAPR of one resource unit of 384 subcarriers is 3.0081, a PAPR of one resource unit of 384 subcarriers is 3.0081, and a PAPR of one resource unit of 192 subcarriers is 3.0093.

A combination of one resource unit of 384 subcarriers, one resource unit of 768 subcarriers, and one resource unit of 384 subcarriers also has a relatively low PAPR, where a PAPR of one resource unit of 384 subcarriers is 2.9972, a PAPR of the resource unit of 768 subcarriers is 2.9994, and a PAPR of one resource unit of 384 subcarriers is 2.9720.

However, a combination of one resource unit of 384 subcarriers and one resource unit of 1152 subcarriers has a relatively high PAPR, where a PAPR of the resource unit of 1152 subcarriers is 4.2457.

A combination of one resource unit of 1152 subcarriers and one resource unit of 384 subcarriers has a relatively high PAPR, where a PAPR of the resource unit of 1152 subcarriers is 5.2087.

A combination of one resource unit of 576 subcarriers, one resource unit of 576 subcarriers, and one resource unit of 384 subcarriers has a relatively high PAPR, where a PAPR of one resource unit of 576 subcarriers is 5.0756, and a PAPR of one resource unit of 576 subcarriers is 5.1468.

A combination of one resource unit of 192 subcarriers, one resource unit of 576 subcarriers, one resource unit of 576 subcarriers, and one resource unit of 192 subcarriers has a relatively high PAPR, where a PAPR of one resource unit of 576 subcarriers is 5.2238, and a PAPR of one resource unit of 576 subcarriers is 5.2240.

A combination of one resource unit of 384 subcarriers, one resource unit of 576 subcarriers, and one resource unit of 576 subcarriers has a relatively high PAPR, where a PAPR of one resource unit of 576 subcarriers is 5.2245, and a PAPR of one resource unit of 576 subcarriers is 5.1778.

A combination of one resource unit of 192 subcarriers, one resource unit of 768 subcarriers, and one resource unit of 576 subcarriers has a relatively high PAPR, where a PAPR of the resource unit of 576 subcarriers is 5.0283.

A combination of one resource unit of 576 subcarriers, one resource unit of 768 subcarriers, and one resource unit of 192 subcarriers has a relatively high PAPR, where a PAPR of the resource unit of 576 subcarriers is 5.0756, and a PAPR of the resource unit of 768 subcarriers is 6.0009.

A combination of one resource unit of 960 subcarriers and one resource unit of 576 subcarriers has a relatively high PAPR, where a PAPR of the resource unit of 960 subcarriers is 5.5472, and a PAPR of the resource unit of 576 subcarriers is 5.0283.

A combination of one resource unit of 1344 subcarriers and one resource unit of 192 subcarriers has a relatively high PAPR, where a PAPR of the resource unit of 1344 subcarriers is 5.6305.

A combination of one resource unit of 192 subcarriers and one resource unit of 1344 subcarriers has a relatively high PAPR, where a PAPR of the resource unit of 1344 subcarriers is 4.9711.

In this embodiment of this application, the resource unit of 192 subcarriers and a resource unit including 192 subcarriers express a same meaning.

Based on the PAPRs corresponding to the Golay sequence of the 6.48 GHz channel in the resource unit combinations shown in FIG. 21, the following two feasible resource unit combinations are designed in this application.

First resource unit combination

FIG. 22 is a schematic diagram of resource division on a 6.48 GHz channel according to an embodiment of this application. As shown in the figure, resource division on the single 6.48 GHz channel may include the following several manners:

eight data and pilot resource units each including 192 subcarriers;
four data and pilot resource units each including 384 subcarriers;
two data and pilot resource units each including 768 subcarriers;
one data and pilot resource unit including 1536 subcarriers; and
any combination of six data and pilot resource units each including 192 subcarriers and one data and pilot resource unit including 384 subcarriers;
any combination of four data and pilot resource units each including 192 subcarriers and two data and pilot resource units each including 384 subcarriers;
any combination of four data and pilot resource units each including 192 subcarriers and one data and pilot resource unit including 768 subcarriers;
any combination of two data and pilot resource units each including 192 subcarriers and three data and pilot resource units each including 384 subcarriers;
any combination of two data and pilot resource units each including 192 subcarriers, one data and pilot resource unit including 384 subcarriers, and one data and pilot resource unit including 768 subcarriers; and
any combination of two data and pilot resource units each including 384 subcarriers and one data and pilot resource unit including 768 subcarriers.

Second resource unit combination

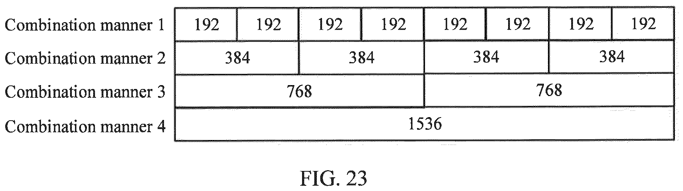

FIG. 23 is another schematic diagram of resource division on a 6.48 GHz channel according to an embodiment of this application. As shown in the figure, in a design of a second resource unit combination on the single 6.48 GHz channel, a simpler design is considered. Resource allocation solutions shown in the last two rows in FIG. 22 may be removed, to form a simpler solution shown in FIG. 23. When performing resource allocation, a user may use a combination of resource units shown in rows shown in FIG. 23.

It can be learned that in this embodiment of this application, a method for performing resource division on the single 6.48 GHz channel is provided, and the resource unit including 192 subcarriers, the resource unit including 384 subcarriers, the resource unit including 768 subcarriers, or the resource unit including 1536 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Embodiment 4: A resource division method on two 8.64 GHz (channel bonding is 4) channels.

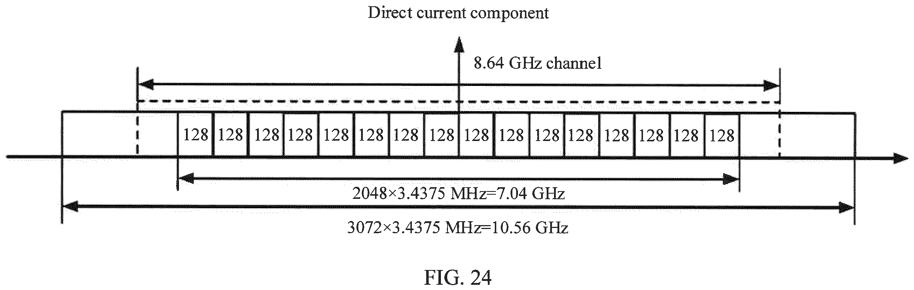

Optionally, based on the schematic diagram of the frequency band in the single-carrier mode of the 2.16 GHz channel shown in FIG. 5, this embodiment provides another resource division method. FIG. 24 is a schematic diagram of another embodiment of a resource division method that is based on an 8.64 GHz channel according to the embodiments of this application. As shown in the figure, when channel bonding is 4 (CB=4), a channel of a communications system is a single 8.64 GHz channel. In view of that a signal has extremely strong directivity during 60 GHz WLAN transmission, a quantity of users covered by a single beam should not be excessively large. Therefore, when CB=4, in this application, it is considered that 16 users may simultaneously perform frequency division multiplexing. When CB=4 and there are 16 users, resource units may be divided in a manner shown in FIG. 24. As shown in FIG. 24, each resource unit includes 128 contiguous subcarriers. Data and a pilot occupy a total of 2048 subcarriers. That is, the data and the pilot occupy a 7.04 GHz bandwidth. A bandwidth occupied by the data and the pilot after inverse Fourier transform is 10.56 GHz. Each resource unit may be used to transmit the data or the pilot, and a ratio of subcarriers occupied by the data to subcarriers occupied by the pilot may be flexibly selected based on an actual situation.

In addition, Golay sequences have been widely used as preamble sequences of an SFT and a CEF in the 11ad\ay standard, and PAPRs of the preamble sequences of the STF and CEF part need to have relatively low values to improve efficiency of a transmitter power amplifier. During uplink data transmission, each user transmits new preambles and data of the STF and CEF part in a frequency band allocated to the user. Therefore, it needs to be ensured that a preamble part corresponding to a resource unit of the user also has a relatively low PAPR.

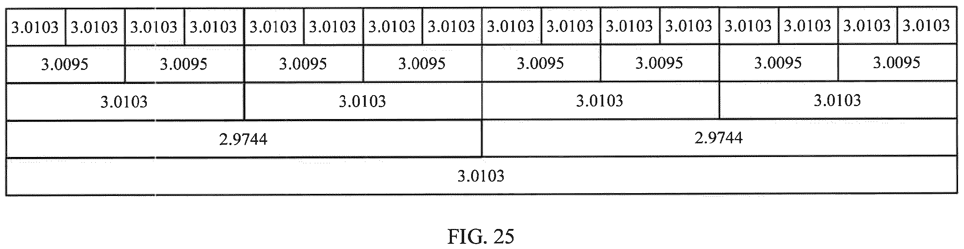

For ease of description, FIG. 25 shows peak to average power ratios corresponding to a Golay sequence of an 8.64 Hz channel in resource unit combinations according to an embodiment of this application. As shown in the figure:

16 resource units of 128 subcarriers all have relatively low PAPRs, where a PAPR of each resource unit of 128 subcarriers is 3.0103.

Eight resource units of 256 subcarriers all have relatively low PAPRs, where a PAPR of each resource unit of 256 subcarrier is 3.0095.

Four resource units of 512 subcarriers all have relatively low PAPRs, where a PAPR of each resource unit of 512 subcarrier is 3.0103.

Two resource units of 1024 subcarriers both have relatively low PAPRs, where a PAPR of either resource unit of 1024 subcarrier is 2.974.

One resource unit of 2048 subcarriers has a relatively low PAPR, where a PAPR of the resource unit of 2048 subcarriers is 3.0103.

In this embodiment of this application, the resource unit of 128 subcarriers and a resource unit including 128 subcarriers express a same meaning.

Based on the PAPRs corresponding to the Golay sequence of the 8.64 GHz channel in the resource unit combinations shown in FIG. 25, resource division in this embodiment of this application includes the following manners.

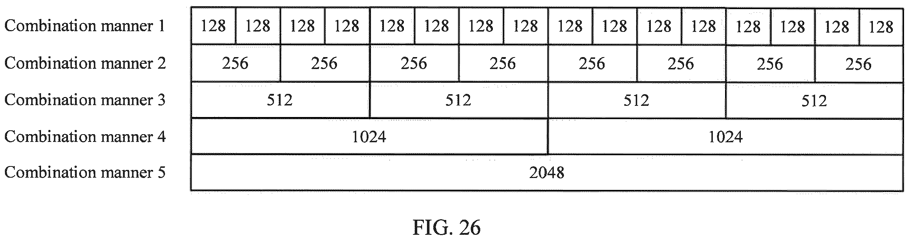

FIG. 26 is a schematic diagram of resource division on an 8.64 GHz channel according to an embodiment of this application. As shown in the figure, resource division on the single 8.64 GHz channel may include the following several manners:

16 data and pilot resource units each including 128 subcarriers;
eight data and pilot resource units each including 256 subcarriers;
four data and pilot resource units each including 512 subcarriers;
two data and pilot resource units each including 1024 subcarriers;
one data and pilot resource unit including 2048 subcarriers;
any combination of 14 data and pilot resource units each including 128 subcarriers and one data and pilot resource unit including 256 subcarriers;
any combination of 12 data and pilot resource units each including 128 subcarriers and two data and pilot resource units each including 256 subcarriers;
any combination of 10 data and pilot resource units each including 128 subcarriers and three data and pilot resource units each including 256 subcarriers;
any combination of eight data and pilot resource units each including 128 subcarriers and four data and pilot resource units each including 256 subcarriers;
any combination of six data and pilot resource units each including 128 subcarriers and five data and pilot resource units each including 256 subcarriers;

any combination of four data and pilot resource units each including 128 subcarriers and six data and pilot resource units each including 256 subcarriers;

any combination of two data and pilot resource units each including 128 subcarriers and seven data and pilot resource units each including 256 subcarriers;

any combination of 12 data and pilot resource units each including 128 subcarriers and one data and pilot resource unit including 512 subcarriers;

any combination of eight data and pilot resource units each including 128 subcarriers and two data and pilot resource units each including 512 subcarriers;

any combination of four data and pilot resource units each including 128 subcarriers and three data and pilot resource units each including 512 subcarriers;

any combination of eight data and pilot resource units each including 128 subcarriers and one data and pilot resource unit including 1024 subcarriers;

any combination of six data and pilot resource units each including 256 subcarriers and one data and pilot resource unit including 512 subcarriers;

any combination of four data and pilot resource units each including 256 subcarriers and two data and pilot resource units each including 512 subcarriers;

any combination of two data and pilot resource units each including 256 subcarriers and three data and pilot resource units each including 512 subcarriers;

any combination of two data and pilot resource units each including 512 subcarriers and one data and pilot resource unit including 1024 subcarriers;

any combination of 10 data and pilot resource units each including 128 subcarriers, one data and pilot resource unit including 256 subcarriers, and one data and pilot resource unit including 512 subcarriers;

any combination of eight data and pilot resource units each including 128 subcarriers, two data and pilot resource units each including 256 subcarriers, and one data and pilot resource unit including 512 subcarriers;

any combination of six data and pilot resource units each including 128 subcarriers, three data and pilot resource units each including 256 subcarriers, and one data and pilot resource unit including 512 subcarriers;

any combination of four data and pilot resource units each including 128 subcarriers, four data and pilot resource units each including 256 subcarriers, and one data and pilot resource unit including 512 subcarriers;

any combination of two data and pilot resource units each including 128 subcarriers, five data and pilot resource units each including 256 subcarriers, and one data and pilot resource unit including 512 subcarriers;

any combination of six data and pilot resource units each including 128 subcarriers, one data and pilot resource unit including 256 subcarriers, and two data and pilot resource units each including 512 subcarriers;

any combination of four data and pilot resource units each including 128 subcarriers, two data and pilot resource units each including 256 subcarriers, and two data and pilot resource units each including 512 subcarriers;

any combination of two data and pilot resource units each including 128 subcarriers, three data and pilot resource units each including 256 subcarriers, and two data and pilot resource units each including 512 subcarriers;

any combination of two data and pilot resource units each including 128 subcarriers, one data and pilot resource unit including 256 subcarriers, and three data and pilot resource units each including 512 subcarriers;

any combination of six data and pilot resource units each including 128 subcarriers, one data and pilot resource unit including 256 subcarriers, and one data and pilot resource unit including 1024 subcarriers;

any combination of four data and pilot resource units each including 128 subcarriers, two data and pilot resource units each including 256 subcarriers, and one data and pilot resource unit including 1024 subcarriers;

any combination of two data and pilot resource units each including 128 subcarriers, three data and pilot resource units each including 256 subcarriers, and one data and pilot resource unit including 1024 subcarriers;

any combination of two data and pilot resource units each including 256 subcarriers, one data and pilot resource unit including 512 subcarriers, and one data and pilot resource unit including 1024 subcarriers; and

any combination of two data and pilot resource units each including 128 subcarriers, one data and pilot resource unit including 256 subcarriers, one data and pilot resource unit including 512 subcarriers, and one data and pilot resource unit including 1024 subcarriers.

It can be learned that in this embodiment of this application, a method for performing resource division on the single 8.64 GHz channel is provided, and the resource unit including 128 subcarriers, the resource unit including 256 subcarriers, the resource unit including 512 subcarriers, the resource unit including 1024 subcarriers, or the resource unit including 2048 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

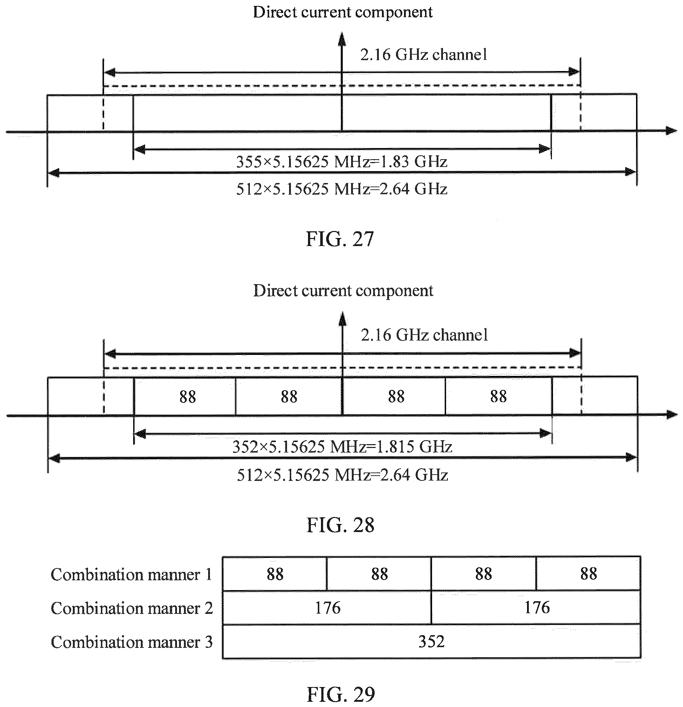

In the foregoing Embodiment 1, Embodiment 2, Embodiment 3, and Embodiment 4, resource division is performed based on the frequency band of the 2.16 GHz channel shown in FIG. 5. With reference to FIG. 27, the following describes another manner of performing resource division on the frequency band of the 2.16 GHz channel.

FIG. 27 is a schematic diagram of another frequency band in a single-carrier mode of a 2.16 GHz channel according to an embodiment of this application. As shown in the figure, a resource division apparatus needs to perform resource division on a channel. The divided channel includes a data and pilot resource unit and a direct current component. The direct current component is located between two subcarriers in a center of a frequency band of the channel.

In this embodiment, in the frequency band of the single 2.16 GHz channel shown in FIG. 27, a dashed-line part is a bandwidth occupied by the 2.16 GHz channel. Because a receiver structure in an existing 11ad/ay single-carrier transmission mode needs to be considered to be reused as much as possible in a design of a DFT-S-OFDM resource unit in this application, an actual bandwidth occupied by a data part needs to be consistent with that occupied by a single carrier, to be specific, a 1.83 GHz bandwidth shown in FIG. 27.

In the foregoing case, a subcarrier width may be defined as 5.15625 MHz, and 355 subcarriers may be used in such a data width. In other words, a quantity of DFT points of a DFT-S-OFDM transmit apparatus is 355, and a quantity of IDFT points is 512. In DFT-S-OFDM, a signal needs to be mapped to all data subcarriers in a center of a frequency band, and the direct current component is located in a center of two central subcarriers. Because a transceiver structure in an existing 11ad/ay OFDM transmission mode is reused as much as possible in a design solution of the DFT-S-OFDM resource unit, it is considered that the actual bandwidth occupied by the data part is consistent with that occupied by a carrier in an OFDM mode, to be specific, the 1.83 GHz bandwidth. In this case, the 5.15625 MHz subcarrier width in the 11ad/ay OFDM mode is still used. In this way, in view of that there is no null direct current subcarrier, 352 subcarriers may be used in a data bandwidth. In addition, a quantity of DFT points in a DFT module of a DFT-S-OFDM transmitter is 352.

It should be noted that, in addition to DFT, Fourier transform may alternatively be FFT. In addition to IDFT, inverse Fourier transform may alternatively be IFFT. This is merely an example herein, and should not be understood as a limitation on this application.

The following separately describes resource division by using embodiments in which CB is equal to 1, 2, 3, and 4.

Embodiment 5: A resource division method on a single 2.16 GHz channel.

Optionally, based on the schematic diagram of the frequency band in the single-carrier mode of the 2.16 GHz channel shown in FIG. 27, this embodiment provides a resource division method. FIG. 28 is a schematic diagram of another embodiment of a resource division method that is based on a 2.16 GHz channel according to the embodiments of this application. As shown in the figure, when channel bonding is 1 (CB=1), a channel of a communications system is a single 2.16 GHz channel. In view of that a signal has extremely strong directivity during 60 GHz WLAN transmission, a quantity of users covered by a single beam should not be excessively large. Therefore, when CB=1, in this application, it is considered that four users may simultaneously perform frequency division multiplexing. When CB=1 and there are four users, resource units may be divided in a manner shown in FIG. 28. As shown in FIG. 28, each resource unit includes 88 contiguous subcarriers. Data and a pilot occupy a total of 352 subcarriers. That is, the data and the pilot occupy a 1.815 GHz bandwidth. A bandwidth occupied by the data and the pilot after inverse Fourier transform is 2.64 GHz. Each resource unit may be used to transmit the data or the pilot, and a ratio of subcarriers occupied by the data to subcarriers occupied by the pilot may be flexibly selected based on an actual situation.

In addition, Golay sequences have been widely used as preamble sequences of an SFT and a CEF in the 11ad\ay standard, and PAPRs of the preamble sequences of the STF and CEF part need to have relatively low values to improve efficiency of a transmitter power amplifier. During uplink data transmission, each user transmits new preambles and data of the STF and CEF part in a frequency band allocated to the user. Therefore, it needs to be ensured that a preamble part corresponding to a resource unit of the user also has a relatively low PAPR.

It can be learned from the peak to average power ratios corresponding to the Golay sequence of the 2.16 GHz channel in the resource unit combinations shown in FIG. 9 that four resource units of 88 subcarriers all have quite low PAPRs, two resource units of 176 subcarriers also have relatively low PAPRs, one resource unit of 352 subcarriers also has a relatively low PAPR.

In this embodiment of this application, the resource unit of 88 subcarriers and a resource unit including 88 subcarriers express a same meaning.

Based on the PAPRs corresponding to the Golay sequence of the 2.16 GHz channel in the resource unit combinations, resource division in this embodiment of this application includes the following manners.

FIG. 29 is another schematic diagram of resource division on a 2.16 GHz channel according to an embodiment of this application. As shown in the figure, resource division on the single 2.16 GHz channel may include the following several manners:

four data and pilot resource units each including 88 subcarriers;
two data and pilot resource units each including 176 subcarriers;
one data and pilot resource unit including 352 subcarriers; and

any combination of one data and pilot resource unit including 88 subcarriers, one data and pilot resource unit including 176 subcarriers, and one data and pilot resource unit including 88 subcarriers.

It can be learned that in this embodiment of this application, another method for performing resource division on the single 2.16 GHz channel is provided, and the resource unit including 88 subcarriers, the resource unit including 176 subcarriers, or the resource unit including 352 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Embodiment 6: A resource division method on a single 4.32 GHz channel.

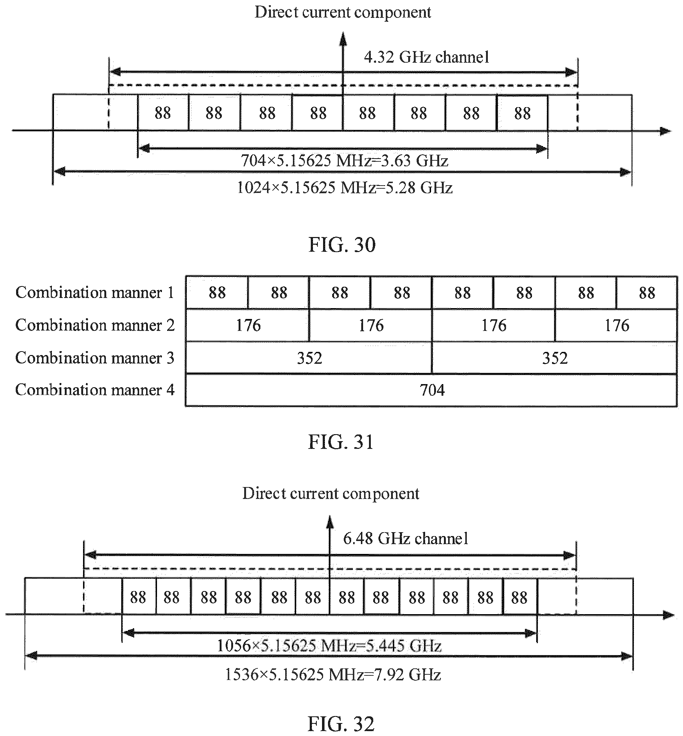

Optionally, based on the schematic diagram of the frequency band in the single-carrier mode of the 2.16 GHz channel shown in FIG. 27, this embodiment provides a resource division method. FIG. 30 is a schematic diagram of another embodiment of a resource division method that is based on a 4.32 GHz channel according to the embodiments of this application. As shown in the figure, when channel bonding is 2 (CB=2), a channel of a communications system is a single 4.32 GHz channel. In view of that a signal has extremely strong directivity during 60 GHz WLAN transmission, a quantity of users covered by a single beam should not be excessively large. Therefore, when CB=2, in this application, it is considered that a maximum of eight users may simultaneously perform frequency division multiplexing. Therefore, when CB=2 and there are eight users, resource units may be divided in a manner shown in FIG. 30. As shown in FIG. 30, each resource unit includes 88 contiguous subcarriers. Data and a pilot occupy a total of 704 subcarriers. That is, the data and the pilot occupy a 3.63 GHz bandwidth. A bandwidth occupied by the data and the pilot after inverse Fourier transform is 5.28 GHz. Each resource unit may be used to transmit the data or the pilot, and a ratio of subcarriers occupied by the data to subcarriers occupied by the pilot may be flexibly selected based on an actual situation.

In addition, Golay sequences have been widely used as preamble sequences of an SFT and a CEF in the 11ad\ay standard, and PAPRs of the preamble sequences of the STF and CEF part need to have relatively low values to improve efficiency of a transmitter power amplifier. During uplink data transmission, each user transmits new preambles and data of the STF and CEF part in a frequency band allocated to the user. Therefore, it needs to be ensured that a preamble part corresponding to a resource unit of the user also has a relatively low PAPR.

It can be learned from the peak to average power ratios corresponding to the Golay sequence of the 4.32 GHz channel in the resource unit combinations shown in FIG. 13 that eight resource units of 88 subcarriers all have quite low PAPRs, four resource units of 176 subcarriers also have relatively low PAPRs, two resource units of 352 subcarriers also has relatively low PAPRs, and one resource unit of 704 subcarriers also has a relatively low PAPR.

In this embodiment of this application, the resource unit of 88 subcarriers and a resource unit including 88 subcarriers express a same meaning.

Based on the PAPRs corresponding to the Golay sequence of the 2.16 GHz channel in the resource unit combinations, resource division in this embodiment of this application includes the following manners.

FIG. 31 is another schematic diagram of resource division on a 4.32 GHz channel according to an embodiment of this application. As shown in the figure, resource division on the single 4.32 GHz channel may include the following several manners:

eight data and pilot resource units each including 88 subcarriers;
four data and pilot resource units each including 176 subcarriers;
two data and pilot resource units each including 352 subcarriers;
one data and pilot resource unit including 704 subcarriers;
any combination of six data and pilot resource units each including 88 subcarriers and one data and pilot resource unit including 176 subcarriers;
any combination of four data and pilot resource units each including 88 subcarriers and two data and pilot resource units each including 176 subcarriers;
any combination of two data and pilot resource units each including 88 subcarriers and three data and pilot resource units each including 176 subcarriers;
any combination of two data and pilot resource units each including 176 subcarriers and one data and pilot resource unit including 352 subcarriers; or
any combination of two data and pilot resource units each including 88 subcarriers, one data and pilot resource unit including 176 subcarriers, and one data and pilot resource unit including 352 subcarriers.

It can be learned that in this embodiment of this application, another method for performing resource division on the single 4.32 GHz channel is provided, and the resource unit including 88 subcarriers, the resource unit including 176 subcarriers, the resource unit including 352 subcarriers, or the resource unit including 704 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Embodiment 7: A resource division method on a single 6.48 GHz channel.

Optionally, based on the schematic diagram of the frequency band in the single-carrier mode of the 2.16 GHz channel shown in FIG. 27, this embodiment provides a resource division method. FIG. 32 is a schematic diagram of another embodiment of a resource division method that is based on a 6.48 GHz channel according to the embodiments of this application. As shown in the figure, when channel bonding is 3 (CB=3), a channel of a communications system is a single 6.48 GHz channel. In view of that a signal has extremely strong directivity during 60 GHz WLAN transmission, a quantity of users covered by a single beam should not be excessively large. Therefore, when CB=3, in this application, it is considered that 12 users may simultaneously perform frequency division multiplexing. When CB=3 and there are 12 users, resource units may be divided in a manner shown in FIG. 32. As shown in FIG. 32, each resource unit includes 88 contiguous subcarriers. Data and a pilot occupy a total of 1056 subcarriers. That is, the data and the pilot occupy a 5.445 GHz bandwidth. A bandwidth occupied by the data and the pilot after inverse Fourier transform is 7.92 GHz. Each resource unit may be used to transmit the data or the pilot, and a ratio of subcarriers occupied by the data to subcarriers occupied by the pilot may be flexibly selected based on an actual situation.

In addition, Golay sequences have been widely used as preamble sequences of an SFT and a CEF in the 11ad\ay standard, and PAPRs of the preamble sequences of the STF and CEF part need to have relatively low values to improve efficiency of a transmitter power amplifier. During uplink data transmission, each user transmits new preambles and data of the STF and CEF part in a frequency band allocated to the user. Therefore, it needs to be ensured that a preamble part corresponding to a resource unit of the user also has a relatively low PAPR.

It can be learned from the peak to average power ratios corresponding to the Golay sequence of the 6.48 GHz channel in the resource unit combinations shown in FIG. 17 that 12 resource units of 88 subcarriers all have quite low PAPRs, four resource units of 264 subcarriers also have relatively low PAPRs, two resource units of 528 subcarriers also have relatively low PAPRs, and one resource unit of 1056 subcarriers also has a relatively low PAPR.

In this embodiment of this application, the resource unit of 88 subcarriers and a resource unit including 88 subcarriers express a same meaning.

Based on the PAPRs corresponding to the Golay sequence of the 6.48 GHz channel in the resource unit combinations, resource division in this embodiment of this application includes the following manners.

First resource unit combination

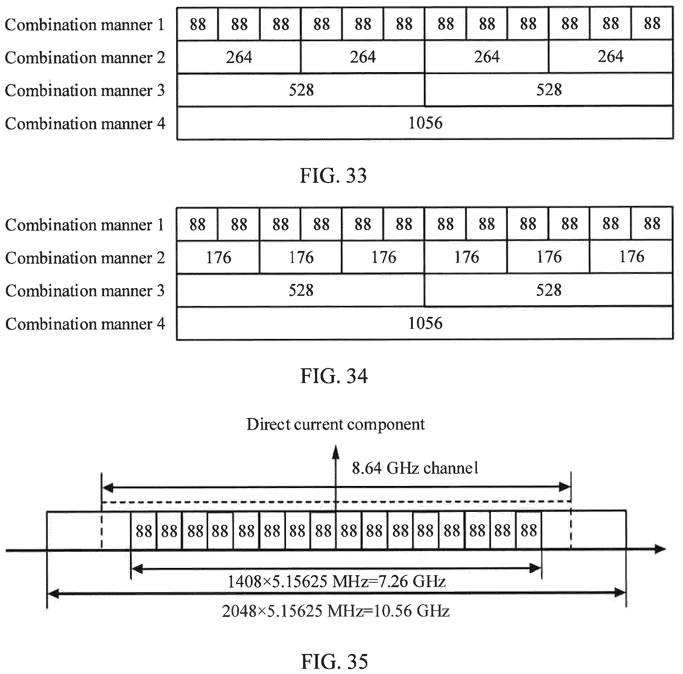

FIG. 33 is another schematic diagram of resource division on a 6.48 GHz channel according to an embodiment of this application. As shown in the figure, resource division on the single 6.48 GHz channel may include the following several manners:

12 data and pilot resource units each including 88 subcarriers;
six data and pilot resource units each including 176 subcarriers;
four data and pilot resource units each including 264 subcarriers;
two data and pilot resource units each including 528 subcarriers;
one data and pilot resource unit including 1056 subcarriers;
any combination of nine data and pilot resource units each including 88 subcarriers and one data and pilot resource unit including 264 subcarriers;
any combination of six data and pilot resource units each including 88 subcarriers and two data and pilot resource units each including 264 subcarriers;
any combination of three data and pilot resource units each including 88 subcarriers and three data and pilot resource units each including 264 subcarriers;
any combination of six data and pilot resource units each including 88 subcarriers and one data and pilot resource unit including 528 subcarriers;
any combination of three data and pilot resource units each including 88 subcarriers, one data and pilot resource unit including 264 subcarriers, and one data and pilot resource unit including 528 subcarriers;
any combination of two data and pilot resource units each including 264 subcarriers and one data and pilot resource unit including 528 subcarriers;
any combination of 10 data and pilot resource units each including 88 subcarriers and one data and pilot resource unit including 176 subcarriers;
any combination of eight data and pilot resource units each including 88 subcarriers and two data and pilot resource units each including 176 subcarriers;
any combination of six data and pilot resource units each including 88 subcarriers and three data and pilot resource units each including 176 subcarriers;

any combination of four data and pilot resource units each including 88 subcarriers and four data and pilot resource units each including 176 subcarriers;

any combination of two data and pilot resource units each including 88 subcarriers and five data and pilot resource units each including 176 subcarriers;

any combination of six data and pilot resource units each including 88 subcarriers and one data and pilot resource unit including 528 subcarriers;

any combination of three data and pilot resource units each including 176 subcarriers and one data and pilot resource unit including 528 subcarriers;

any combination of four data and pilot resource units each including 88 subcarriers, one data and pilot resource unit including 176 subcarriers, and one data and pilot resource unit including 528 subcarriers;

any combination of two data and pilot resource units each including 88 subcarriers, two data and pilot resource units each including 176 subcarriers, and one data and pilot resource unit including 528 subcarriers;

any combination of three data and pilot resource units each including 176 subcarriers and two data and pilot resource units each including 264 subcarriers;

any combination of two data and pilot resource units each including 264 subcarriers, one data and pilot resource unit including 176 subcarriers, and four data and pilot resource units each including 528 subcarriers;

any combination of two data and pilot resource units each including 264 subcarriers, two data and pilot resource units each including 176 subcarriers, and two data and pilot resource units each including 528 subcarriers; and

any combination of three data and pilot resource units each including 176 subcarriers, one data and pilot resource unit including 264 subcarriers, and three data and pilot resource units each including 88 subcarriers.

Second resource unit combination

FIG. 34 is another schematic diagram of resource division on a 6.48 GHz channel according to an embodiment of this application. As shown in the figure, in a design of a second resource unit combination on the single 6.48 GHz channel, a resource unit including two consecutive data and pilot resource units of 264 subcarriers is changed to a resource unit including three consecutive data and pilot resource units of 176 subcarriers, to form the simpler solution shown in FIG. 34. When performing resource allocation, a user may use a combination of resource units shown in rows shown in FIG. 33.

It can be learned that in this embodiment of this application, another method for performing resource division on the single 6.48 GHz channel is provided, and the resource unit including 88 subcarriers, the resource unit including 176 subcarriers, the resource unit including 264 subcarriers, the resource unit including 528 subcarriers, or the resource unit including 1056 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Embodiment 8: A resource division method on a single 8.64 GHz channel.

Optionally, based on the schematic diagram of the frequency band in the single-carrier mode of the 2.16 GHz channel shown in FIG. 27, this embodiment provides a resource division method. FIG. 35 is a schematic diagram of another embodiment of a resource division method that is based on an 8.64 GHz channel according to the embodiments of this application. As shown in the figure, when channel bonding is 4 (CB=4), a channel of a communications system is a single 8.64 GHz channel. In view of that a signal has extremely strong directivity during 60 GHz WLAN transmission, a quantity of users covered by a single beam should not be excessively large. Therefore, when CB=4, in this application, it is considered that 16 users may simultaneously perform frequency division multiplexing. When CB=4 and there are 16 users, resource units may be divided in a manner shown in FIG. 35. As shown in FIG. 35, each resource unit includes 88 contiguous subcarriers. Data and a pilot occupy a total of 1408 subcarriers. That is, the data and the pilot occupy a 7.26 GHz bandwidth. A bandwidth occupied by the data and the pilot after inverse Fourier transform is 10.56 GHz. Each resource unit may be used to transmit the data or the pilot, and a ratio of subcarriers occupied by the data to subcarriers occupied by the pilot may be flexibly selected based on an actual situation.

In addition, Golay sequences have been widely used as preamble sequences of an SFT and a CEF in the 1 1ad\ay standard, and PAPRs of the preamble sequences of the STF and CEF part need to have relatively low values to improve efficiency of a transmitter power amplifier. During uplink data transmission, each user transmits new preambles and data of the STF and CEF part in a frequency band allocated to the user. Therefore, it needs to be ensured that a preamble part corresponding to a resource unit of the user also has a relatively low PAPR.

It can be learned from the peak to average power ratios corresponding to the Golay sequence of the 8.64 GHz channel in the resource unit combinations shown in FIG. 25 that 16 resource units of 88 subcarriers all have quite low PAPRs, eight resource units of 176 subcarriers also have relatively low PAPRs, four resource units of 352 subcarriers also have relatively low PAPRs, two resource units of 704 subcarriers also have relatively low PAPRs, and one resource unit of 1408 subcarriers also has a relatively low PAPR.

In this embodiment of this application, the resource unit of 88 subcarriers and a resource unit including 88 subcarriers express a same meaning.

Based on the PAPRs corresponding to the Golay sequence of the 8.64 GHz channel in the resource unit combinations, resource division in this embodiment of this application includes the following manners.

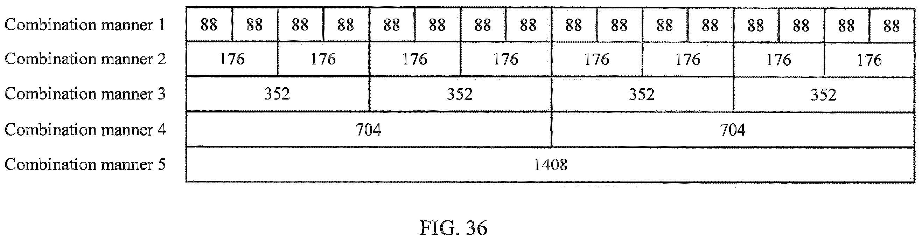

FIG. 36 is another schematic diagram of resource division on an 8.64 GHz channel according to an embodiment of this application. As shown in the figure, resource division on the single 8.64 GHz channel may include the following several manners:

16 data and pilot resource units each including 88 subcarriers;
eight data and pilot resource units each including 176 subcarriers;
four data and pilot resource units each including 352 subcarriers;
two data and pilot resource units each including 704 subcarriers;
one data and pilot resource unit including 1408 subcarriers;
any combination of 14 data and pilot resource units each including 88 subcarriers and one data and pilot resource unit including 176 subcarriers;
any combination of 12 data and pilot resource units each including 88 subcarriers and two data and pilot resource units each including 176 subcarriers;
any combination of 10 data and pilot resource units each including 88 subcarriers and three data and pilot resource units each including 176 subcarriers;
any combination of eight data and pilot resource units each including 88 subcarriers and four data and pilot resource units each including 176 subcarriers;
any combination of six data and pilot resource units each including 88 subcarriers and five data and pilot resource units each including 176 subcarriers;
any combination of four data and pilot resource units each including 88 subcarriers and six data and pilot resource units each including 176 subcarriers;
any combination of two data and pilot resource units each including 88 subcarriers and seven data and pilot resource units each including 176 subcarriers;
any combination of 12 data and pilot resource units each including 88 subcarriers and one data and pilot resource unit including 352 subcarriers;
any combination of eight data and pilot resource units each including 88 subcarriers and two data and pilot resource units each including 352 subcarriers;
any combination of four data and pilot resource units each including 88 subcarriers and three data and pilot resource units each including 352 subcarriers;
any combination of eight data and pilot resource units each including 88 subcarriers and one data and pilot resource unit including 704 subcarriers;
any combination of six data and pilot resource units each including 176 subcarriers and one data and pilot resource unit including 352 subcarriers;
any combination of four data and pilot resource units each including 176 subcarriers and two data and pilot resource units each including 352 subcarriers;
any combination of two data and pilot resource units each including 352 subcarriers and one data and pilot resource unit including 704 subcarriers;
any combination of 10 data and pilot resource units each including 88 subcarriers, one data and pilot resource unit including 176 subcarriers, and one data and pilot resource unit including 352 subcarriers;
any combination of eight data and pilot resource units each including 88 subcarriers, two data and pilot resource units each including 176 subcarriers, and one data and pilot resource unit including 352 subcarriers;
any combination of six data and pilot resource units each including 88 subcarriers, three data and pilot resource units each including 176 subcarriers, and one data and pilot resource unit including 352 subcarriers;
any combination of four data and pilot resource units each including 88 subcarriers, four data and pilot resource units each including 176 subcarriers, and one data and pilot resource unit including 352 subcarriers;
any combination of two data and pilot resource units each including 88 subcarriers, five data and pilot resource units each including 176 subcarriers, and one data and pilot resource unit including 352 subcarriers;
any combination of six data and pilot resource units each including 88 subcarriers, one data and pilot resource unit including 176 subcarriers, and two data and pilot resource units each including 352 subcarriers;
any combination of four data and pilot resource units each including 88 subcarriers, two data and pilot resource units each including 176 subcarriers, and two data and pilot resource units each including 352 subcarriers;
any combination of two data and pilot resource units each including 88 subcarriers, three data and pilot resource units each including 176 subcarriers, and two data and pilot resource units each including 352 subcarriers;

any combination of two data and pilot resource units each including 88 subcarriers, one data and pilot resource unit including 176 subcarriers, and three data and pilot resource units each including 352 subcarriers;

any combination of six data and pilot resource units each including 88 subcarriers, one data and pilot resource unit including 176 subcarriers, and one data and pilot resource unit including 704 subcarriers;

any combination of four data and pilot resource units each including 88 subcarriers, two data and pilot resource units each including 176 subcarriers, and one data and pilot resource unit including 704 subcarriers;

any combination of two data and pilot resource units each including 88 subcarriers, three data and pilot resource units each including 176 subcarriers, and one data and pilot resource unit including 704 subcarriers;

any combination of two data and pilot resource units each including 176 subcarriers, one data and pilot resource unit including 352 subcarriers, and one data and pilot resource unit including 704 subcarriers; and

any combination of two data and pilot resource units each including 88 subcarriers, one data and pilot resource unit including 176 subcarriers, one data and pilot resource unit including 352 subcarriers, and one data and pilot resource unit including 704 subcarriers.

It can be learned that in this embodiment of this application, another method for performing resource division on the single 8.64 GHz channel is provided, and the resource unit including 88 subcarriers, the resource unit including 176 subcarriers, the resource unit including 352 subcarriers, the resource unit including 704 subcarriers, or the resource unit including 1408 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

The foregoing has described the resource division method provided in this application. The following describes the resource indication method provided in this application.

2. Resource indication

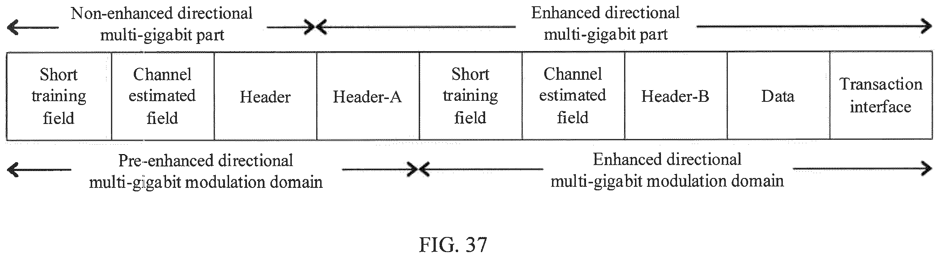

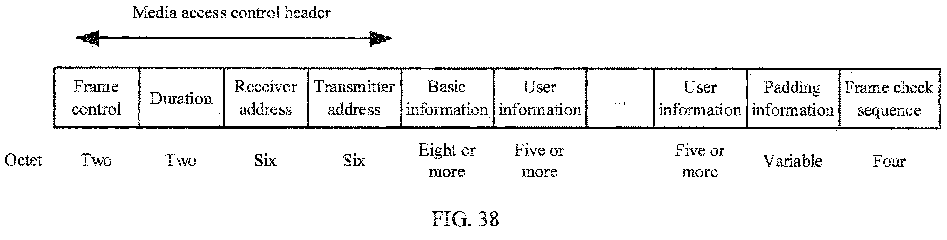

Based on a resource division solution, a DFT-S-OFDM resource indication solution is further proposed. FIG. 37 is a schematic diagram of a frame header of a physical frame according to an embodiment of this application. As shown in the figure, resource indication information may be located in the frame header, for example, a header-A (Header-A) or a header-B (Header-B), of the physical frame, and occupies several bits. The resource indication information in the physical frame is used to indicate a resource unit used by a STA to receive downlink data (which is data sent from an AP to the STA), and specifically indicate a position and a size of the resource unit. For uplink data (which is data sent from the STA to the AP), FIG. 38 is a schematic diagram of a frame header of a trigger frame according to an embodiment of this application. As shown in the figure, resource indication information may be located in a media access control (media access control, MAC) data part of the trigger frame sent by the AP, and is used to indicate a resource unit occupied by the STA to send the uplink data (sent by the STA to the AP), and specifically indicate a position and a size of the resource unit.

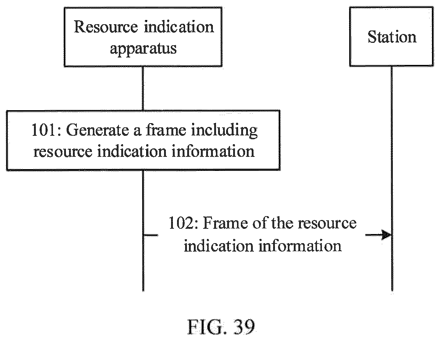

FIG. 39 is a schematic diagram of an embodiment of a resource indication method according to the embodiments of this application. This embodiment of the resource indication method according to the embodiments of this application includes the following steps.

101: A resource indication apparatus generates a frame including resource indication information, where the resource indication information includes a plurality of pieces of sub resource indication information, each piece of sub resource indication information corresponds to one station, and the sub resource indication information includes resource unit allocation information of the station corresponding to the sub resource indication information.

In this embodiment, the resource indication apparatus deployed in an AP first generates the frame including the resource indication information. The resource indication information includes the plurality of pieces of sub resource indication information. Each piece of sub resource indication information corresponds to one STA. It should be noted that, because an object of a resource indication and a position are not fixed, same sub resource indication information may be allocated to different STAs based on different requirements.

Each piece of sub resource indication information needs to include the resource unit allocation information corresponding to the STA to which a resource unit is to be allocated. The resource unit allocation information includes STA identification (identification, ID) and a correspondence between the STA ID and an index (index). Each STA has ID used to identify the STA. Therefore, the ID is unique, and may be used to determine the STA. The resource unit allocation information includes the index, and the index is used to indicate a size and a position of the resource unit allocated to the station corresponding to the STA ID. Therefore, the correspondence between the STA ID and the index may be used to determine resource units that should be allocated to a STA.

It may be understood that, the STA ID includes but is not limited to a universally unique identifier (universally unique identifier, UUID), a media access control (media access control, MAC) address, an international mobile equipment identity (international mobile equipment identity, IMEI), and a mobile equipment identifier (mobile equipment iDentifier, MEID).

The UUID refers to a number generated on a machine, and ensures uniqueness for all machines in same spacetime. The UUID includes the following parts:

(1) a current date and time, where the first part of the UUID is related to the time, and if another UUID is generated several seconds after a UUID is generated, the first parts are different, and other parts are the same;
(2) a clock sequence; and
(3) a universally unique machine identification number, where if there is a network adapter, the universally unique machine identification number is obtained from an MAC address of the network adapter, or if there is no network adapter, the universally unique machine identification number is obtained in another manner.

A resultant string of the UUID is relatively long. It may be understood that a format of the UUID may be represented as xxxxxxxx-xxxx-xxxx-xxxxxxxxxxxxxxxx (eight digits-four digits-four digits-16 digits). Each x is a hexadecimal digit in a range of 0 to 9 or a to f. A format of the UUID may alternatively be represented as xxxxxxxx-xxxx-xxxx-xxxx-xxxxxxxxxxxx (eight digits-four digits-four digits-12 digits).

The MAC address is also referred to as a hardware address, has a length of six bytes (48 bits), and includes hexadecimal digits. The 48 bits are divided into the first 24 bits and the last 24 bits. The first 24 bits are referred to as an organizationally unique identifier (organizationally unique identifier, OUI). OUIs are codes allocated by a registration management organization of the IEEE to different manufacturers, and are used to distinguish between the different manufacturers. The last 24 bits are assigned by a manufacturer, and are referred to as an extended identifier. Extended identifiers of MAC addresses of network adapters produced by a same manufacturer are different.

The IMEI is a 15-digit electronic "serial number" that corresponds one-to-one to each mobile phone, and is globally unique. Each mobile phone is to be assigned a globally unique number after assembly, and the number is to be recorded by a manufacturer from production to delivery. The first six digits are type approval codes (type approval code, TAC), and usually represent a type. The following two digits are a final assembly code (FAC), and usually represent a place of production. The following six digits are a serial number (SNR), and usually represent a production sequence number. The last digit is a back-up validation code.

The MEID is a globally unique 5-bit identifier of a mobile terminal in a code division multiple access standard. The identifier is burnt into the STA and cannot be modified. The MEID is represented by using 14 hexadecimal characters. The fifteenth digit is a check digit and is not used for transmission over the air. A range of RR is A0 to FF, and is officially allocated. A range of XXXXXX is 000000 to FFFFFF, and is officially allocated. A range of ZZZZZZ is 000000 to FFFFFF, and ZZZZZZ represents a serial number allocated by a manufacturer to each terminal. A range of C/CD is 0 to F, and C/CD represents a validation code.

In addition, in a case of a plurality of CBs, to reduce a quantity of indicator bits, channel indication information may be further set in the resource unit allocation information. The channel indication information is used to indicate a channel allocated to the station corresponding to the STA ID. After a specific channel is determined, the STA ID and the correspondence between the STA ID and the index continue to be used to determine the resource unit allocation information of the STA.

102: The resource indication apparatus sends the frame of the resource indication information to the station.

In this embodiment, the resource indication apparatus deployed in the AP sends the frame of the resource indication information to the STA, so that the STA determines the position of the occupied resource unit based on the frame.

In this embodiment of this application, the resource indication method is provided. The resource unit allocation information of the STA is determined based on the plurality of pieces of sub resource indication information included in the resource indication information, to not only indicate the position of the resource unit of the STA in transmission of downlink data, but also indicate the position of the resource unit occupied by the STA in transmission of uplink data. In the foregoing manner, the resource unit allocation information of the STA is determined by using the plurality of pieces of sub resource indication information included in the resource indication information, so that accuracy and feasibility of determining the position of the resource unit of the STA can be improved.

Embodiment 1: A resource division method on a single 2.16 GHz channel.

Optionally, based on the schematic diagram of resource division on the 2.16 GHz channel shown in FIG. 10, this embodiment provides a resource indication method. After the resource division solution is given, a corresponding resource indication solution is required to indicate a specific resource unit occupied by each STA. A resource indication solution provided for the resource unit design shown in FIG. 10 is shown in the following Table 1.

**Table 1**

| 3-bit indicator bit (B2 B1 B0) | 1 | 2 | 3 | 4 | Participation quantity |
|---|---|---|---|---|---|
| 000 | 128 | | | | 1 |
| 001 | | 128 | | | 1 |
| 010 | | | 128 | | 1 |
| 011 | | | | 128 | 1 |
| 100 | 256 | | | | 1 |
| 101 | | 256 | | | 1 |
| 110 | | | 256 | | 1 |
| 111 | 512 | | | | 1 |

Based on content shown in Table 1, a resource unit on which data needs to be sent may be determined. For example, if sub resource indication information is "000", it may indicate that data (uplink data or downlink data) is sent to a STA A on the first resource unit. For another example, if sub resource indication information is "111", it may indicate that data (uplink data or downlink data) is sent to a STA B on all resource units. It should be noted that Table 1 does not show a relationship between a STA ID and an index. In a resource scheduling process, the relationship between the STA ID and the index may be generated based on an actual situation. The foregoing allocation manner is merely an example, and should not be construed as a limitation on the relationship between the STA ID and the index. In addition, a setting of the index may also be adjusted based on a resource division manner. Assuming that a minimum data and pilot resource unit is 88 subcarriers, the 128 subcarriers shown in Table 1 may be updated to 88 subcarriers, the 256 subcarriers may be updated to 176 subcarriers, and the 512 subcarriers may be updated to 352 subcarriers.

Optionally, based on the another schematic diagram of resource division on the 2.16 GHz channel shown in FIG. 11, this embodiment provides another resource indication method. After the resource division solution is given, a corresponding resource indication solution is required to indicate a specific resource unit occupied by each STA. A resource indication solution provided for the resource unit design shown in FIG. 11 is shown in the following Table 2.

**Table 2**

| 3-bit indicator bit (B2 B1 B0) | 1 | 2 | 3 | 4 | Participation quantity |
|---|---|---|---|---|---|
| 000 | 128 | | | | 1 |
| 001 | | 128 | | | 1 |
| 010 | | | 128 | | 1 |
| 011 | | | | 128 | 1 |
| 100 | 256 | | | | 1 |
| 101 | | | 256 | | 1 |
| 110 | 512 | | | | 1 |
| 111 | Reserved | | | | 1 |

Based on content shown in Table 2, a resource unit on which data needs to be sent may be determined. For example, if sub resource indication information is "001", it may indicate that data (uplink data or downlink data) is sent to a STA A on the second resource unit. For another example, if sub resource indication information is "110", it may indicate that data (uplink data or downlink data) is sent to a STA A on all resource units. It should be noted that Table 2 does not show a relationship between a STA ID and an index. In a resource scheduling process, the relationship between the STA ID and the index may be generated based on an actual situation. The foregoing allocation manner is merely an example, and should not be construed as a limitation on the relationship between the STA ID and the index. In addition, a setting of the index may also be adjusted based on a resource division manner. Assuming that a minimum data and pilot resource unit is 88 subcarriers, the 128 subcarriers shown in Table 2 may be updated to 88 subcarriers, the 256 subcarriers may be updated to 176 subcarriers, and the 512 subcarriers may be updated to 352 subcarriers.

Embodiment 2: A resource division method on a single 4.32 GHz channel.

Optionally, based on the schematic diagram of resource division on the 4.32 GHz channel shown in FIG. 14, this embodiment provides a resource indication method. After the resource division solution is given, a corresponding resource indication solution is required to indicate a specific resource unit occupied by each STA. A resource indication solution provided for the resource unit design shown in FIG. 14 is shown in the following Table 3.

**Table 3**

| 5-bit indicator bit | 1 | 2 | 3 | 4 | 5 | 6 | 7 | 8 |
|---|---|---|---|---|---|---|---|---|
| 00000 | 128 | | | | | | | |
| 00001 | | 128 | | | | | | |
| 00010 | | | 128 | | | | | |
| 00011 | | | | 128 | | | | |
| 00100 | | | | | 128 | | | |
| 00101 | | | | | | 128 | | |
| 00110 | | | | | | | 128 | |
| 00111 | | | | | | | | 128 |
| 01000 | 256 | | | | | | | |
| 01010 | | 256 | | | | | | |
| 01011 | | | 256 | | | | | |
| 01100 | | | | 256 | | | | |
| 01101 | | | | | 256 | | | |
| 01110 | | | | | | 256 | | |
| 01111 | | | | | | | 256 | |
| 10000 | 512 | | | | | | | |
| 10001 | | | 512 | | | | | |
| 10010 | | | | | 512 | | | |
| 10011 | 1024 | | | | | | | |

Based on content shown in Table 3, a resource unit on which data needs to be sent may be determined. For example, if sub resource indication information is "01000", it may indicate that data (uplink data or downlink data) is sent to a STA D on the first resource unit including 256 subcarriers. For another example, if sub resource indication information is "10001", it may indicate that data (uplink data or downlink data) is sent to a STA A on the third resource unit including 512 subcarriers. It should be noted that Table 3 does not show a relationship between a STA ID and an index. In a resource scheduling process, the relationship between the STA ID and the index may be generated based on an actual situation. The foregoing allocation manner is merely an example, and should not be construed as a limitation on the relationship between the STA ID and the index. In addition, a setting of the index may also be adjusted based on a resource division manner. Assuming that a minimum data and pilot resource unit is 88 subcarriers, the 128 subcarriers shown in Table 3 may be updated to 88 subcarriers, the 256 subcarriers may be updated to 176 subcarriers, the 512 subcarriers may be updated to 352 subcarriers, and the 1024 subcarriers may be updated to 704 subcarriers.

Optionally, based on the another schematic diagram of resource division on the 4.32 GHz channel shown in FIG. 15, this embodiment provides another resource indication method. After the resource division solution is given, a corresponding resource indication solution is required to indicate a specific resource unit occupied by each STA. A resource indication solution provided for the resource unit design shown in FIG. 15 is shown in the following Table 4.

**Table 4**

| 4-bit indicator bit | 1 | 2 | 3 | 4 | 5 | 6 | 7 | 8 |
|---|---|---|---|---|---|---|---|---|
| 0000 | 128 | | | | | | | |
| 0001 | | 128 | | | | | | |

(continued)

| 4-bit indicator bit | 1 | 2 | 3 | 4 | 5 | 6 | 7 | 8 |
|---|---|---|---|---|---|---|---|---|
| 0010 | | | 128 | | | | | |
| 0011 | | | | 128 | | | | |
| 0100 | | | | | 128 | | | |
| 0101 | | | | | | 128 | | |
| 0110 | | | | | | | 128 | |
| 0111 | | | | | | | | 128 |

| 4-bit indicator bit | 1 | 2 | 3 | 4 | 5 | 6 | 7 8 | |
|---|---|---|---|---|---|---|---|---|
| 1000 | 256 | | | | | | | |
| 1001 | | | 256 | | | | | |
| 1010 | | | | | 256 | | | |
| 1011 | | | | | | | 256 | |
| 1100 | 512 | | | | | | | |
| 1101 | | | | | 512 | | | |
| 1110 | 1024 | | | | | | | |

Based on content shown in Table 4, a resource unit on which data needs to be sent may be determined. For example, if sub resource indication information is "0011", it may indicate that data (uplink data or downlink data) is sent to a STA A on the fourth resource unit. For another example, if sub resource indication information is "1101", it may indicate that data (uplink data or downlink data) is sent to a STA C on the fifth resource unit including 512 subcarriers. It should be noted that Table 4 does not show a relationship between a STA ID and an index. In a resource scheduling process, the relationship between the STA ID and the index may be generated based on an actual situation. The foregoing allocation manner is merely an example, and should not be construed as a limitation on the relationship between the STA ID and the index. In addition, a setting of the index may also be adjusted based on a resource division manner. Assuming that a minimum data and pilot resource unit is 88 subcarriers, the 128 subcarriers shown in Table 3 may be updated to 88 subcarriers, the 256 subcarriers may be updated to 176 subcarriers, the 512 subcarriers may be updated to 352 subcarriers, and the 1024 subcarriers may be updated to 704 subcarriers.

Embodiment 3: A resource division method on a single 6.48 GHz channel.

Optionally, based on the schematic diagram of resource division on the 6.48 GHz channel shown in FIG. 18, this embodiment provides a resource indication method. After the resource division solution is given, a corresponding resource indication solution is required to indicate a specific resource unit occupied by each STA. A resource indication solution provided for the resource unit design shown in FIG. 18 is shown in the following Table 5.

**Table 5**

| 3-bit indicator bit | 1 | 2 | 3 | 4 |
|---|---|---|---|---|
| 000 | 384 | | | |
| 001 | | 384 | | |
| 010 | | | 384 | |
| 011 | | | | 384 |
| 100 | 768 | | | |
| 101 | | 768 | | |
| 110 | | | 768 | |
| 111 | 1536 | | | |

Based on content shown in Table 5, a resource unit on which data needs to be sent may be determined. For example, if sub resource indication information is "100", it may indicate that data is sent to a STA A on the first resource unit including 768 subcarriers. For another example, if sub resource indication information is "111", it may indicate that data is sent to a STA B on all resource units. It should be noted that Table 5 does not show a relationship between a STA ID and an index. In a resource scheduling process, the relationship between the STA ID and the index may be generated based on an actual situation. The foregoing allocation manner is merely an example. In addition, a setting of the index may also be adjusted based on a resource division manner. Assuming that a minimum data and pilot resource unit is 88 subcarriers, the 384 subcarriers shown in Table 5 may be updated to 264 subcarriers, the 768 subcarriers may be updated to 528 subcarriers, and the 1536 subcarriers may be updated to 1056 subcarriers.

Optionally, based on the schematic diagram of resource division on the 6.48 GHz channel shown in FIG. 19, this embodiment provides a resource indication method. After the resource division solution is given, a corresponding resource indication solution is required to indicate a specific resource unit occupied by each STA. A resource indication solution provided for the resource unit design shown in FIG. 19 is shown in the following Table 6.

Table 6

| 3-bit indicator bit | 1 | 2 | 3 | 4 |
|---|---|---|---|---|
| 000 | 384 | | | |
| 001 | | 384 | | |
| 010 | | | 384 | |
| 011 | | | | 384 |
| 100 | 768 | | | |
| 101 | | | 768 | |
| 110 | 1536 | | | |

Based on content shown in Table 6, a resource unit on which data needs to be sent may be determined. For example, if sub resource indication information is "100", it may indicate that data (uplink data or downlink data) is sent to a STA A on the first resource unit including 768 subcarriers. For another example, if sub resource indication information is "110", it may indicate that data (uplink data or downlink data) is sent to a STA B on all resource units.

It should be noted that Table 6 does not show a relationship between a STA ID and an index. In a resource scheduling process, the relationship between the STA ID and the index may be generated based on an actual situation. The foregoing allocation manner is merely an example, and should not be construed as a limitation on the relationship between the STA ID and the index. In addition, a setting of the index may also be adjusted based on a resource division manner. Assuming that a minimum data and pilot resource unit is 88 subcarriers, the 384 subcarriers shown in Table 6 may be updated to 264 subcarriers, the 768 subcarriers may be updated to 528 subcarriers, and the 1536 subcarriers may be updated to 1056 subcarriers.

Optionally, based on the schematic diagram of resource division on the 6.48 GHz channel shown in FIG. 22, this embodiment provides a resource indication method. After the resource division solution is given, a corresponding resource indication solution is required to indicate a specific resource unit occupied by each STA. A resource indication solution provided for the resource unit design shown in FIG. 22 is shown in the following Table 7.

**Table 7**

| 5-bit indicator bit | 1 | 2 | 3 | 4 | 5 | 6 | 7 | 8 |
|---|---|---|---|---|---|---|---|---|
| 00000 | 192 | | | | | | | |
| 00001 | | 192 | | | | | | |
| 00010 | | | 192 | | | | | |
| 00011 | | | | 192 | | | | |
| 00100 | | | | | 192 | | | |
| 00101 | | | | | | 192 | | |
| 00110 | | | | | | | 192 | |
| 00111 | | | | | | | | 192 |

(continued)

| 5-bit indicator bit | 1 | 2 | 3 | 4 | 5 | 6 | 7 | 8 |
|---|---|---|---|---|---|---|---|---|
| 01000 | 384 | | | | | | | |
| 01010 | | 384 | | | | | | |
| 01011 | | | 384 | | | | | |
| 01100 | | | | 384 | | | | |
| 01101 | | | | | 384 | | | |
| 01110 | | | | | | 384 | | |
| 01111 | | | | | | | 384 | |
| 10000 | 768 | | | | | | | |
| 10001 | | | 768 | | | | | |
| 10010 | | | | | 768 | | | |
| 10011 | 1536 | | | | | | | |

Based on content shown in Table 7, a resource unit on which data needs to be sent may be determined. For example, if sub resource indication information is "01000", it may indicate that data (uplink data or downlink data) is sent to a STA B on the first resource unit including 384 subcarriers. For another example, if sub resource indication information is "10001", it may indicate that data (uplink data or downlink data) is sent to a STA A on the third resource unit including 768 subcarriers.

It should be noted that Table 7 does not show a relationship between a STA ID and an index. In a resource scheduling process, the relationship between the STA ID and the index may be generated based on an actual situation. The foregoing allocation manner is merely an example, and should not be construed as a limitation on the relationship between the STA ID and the index. In addition, a setting of the index may also be adjusted based on a resource division manner.

Optionally, based on the schematic diagram of resource division on the 6.48 GHz channel shown in FIG. 23, this embodiment provides a resource indication method. After the resource division solution is given, a corresponding resource indication solution is required to indicate a specific resource unit occupied by each STA. A resource indication solution provided for the resource unit design shown in FIG. 22 is shown in the following Table 8.

**Table 8**

| 5-bit indicator bit | 1 | 2 | 3 | 4 | 5 | 6 | 7 | 8 |
|---|---|---|---|---|---|---|---|---|
| 0000 | 192 | | | | | | | |
| 0001 | | 192 | | | | | | |
| 0010 | | | 192 | | | | | |
| 0011 | | | | 192 | | | | |
| 0100 | | | | | 192 | | | |
| 0101 | | | | | | 192 | | |
| 0110 | | | | | | | 192 | |
| 0111 | | | | | | | | 192 |
| 1000 | 384 | | | | | | | |
| 1001 | | | 384 | | | | | |
| 1010 | | | | | 384 | | | |
| 1011 | | | | | | | 384 | |
| 1100 | 768 | | | | | | | |
| 1101 | | | | | 768 | | | |

(continued)

| 5-bit indicator bit | 1 | 2 | 3 | 4 | 5 | 6 | 7 | 8 |
|---|---|---|---|---|---|---|---|---|
| 1110 | 1536 | | | | | | | |

Based on content shown in Table 8, a resource unit on which data needs to be sent may be determined. For example, if sub resource indication information is "0111", it may indicate that data (uplink data or downlink data) is sent to a STA A on the eighth resource unit. For another example, if sub resource indication information is "1010", it may indicate that data (uplink data or downlink data) is sent to a STA B on the fifth resource unit including 384 subcarriers.

It should be noted that Table 8 does not show a relationship between a STA ID and an index. In a resource scheduling process, the relationship between the STA ID and the index may be generated based on an actual situation. The foregoing allocation manner is merely an example, and should not be construed as a limitation on the relationship between the STA ID and the index. In addition, a setting of the index may also be adjusted based on a resource division manner.

Embodiment 4: A resource division method on a single 8.64 GHz channel.

Optionally, based on the schematic diagram of resource division on the 8.64 GHz channel shown in FIG. 26, this embodiment provides a resource indication method. After the resource division solution is given, a corresponding resource indication solution is required to indicate a specific resource unit occupied by each STA. A resource indication solution provided for the resource unit design shown in FIG. 26 is shown in the following Table 9.

Table 9

| 5-bit indicato r bit | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| 00000 | 128 | | | | | | | | | | | | | | | |
| 00001 | | 128 | | | | | | | | | | | | | | |
| 00010 | | | 128 | | | | | | | | | | | | | |
| 00011 | | | | 128 | | | | | | | | | | | | |
| 00100 | | | | | 128 | | | | | | | | | | | |
| 00101 | | | | | | 128 | | | | | | | | | | |
| 00110 | | | | | | | 128 | | | | | | | | | |
| 00111 | | | | | | | | 128 | | | | | | | | |
| 01000 | | | | | | | | | 128 | | | | | | | |
| 01001 | | | | | | | | | | 128 | | | | | | |
| 01010 | | | | | | | | | | | 128 | | | | | |
| 01011 | | | | | | | | | | | | 128 | | | | |
| 01100 | | | | | | | | | | | | | 128 | | | |
| 01101 | | | | | | | | | | | | | | 128 | | |
| 01110 | | | | | | | | | | | | | | | 128 | |
| 01111 | | | | | | | | | | | | | | | | 128 |
| 10000 | 256 | | | | | | | | | | | | | | | |
| 10001 | | | 256 | | | | | | | | | | | | | |
| 10010 | | | | | 256 | | | | | | | | | | | |
| 10011 | | | | | | | 256 | | | | | | | | | |
| 10100 | | | | | | | | | 256 | | | | | | | |
| 10101 | | | | | | | | | | | 256 | | | | | |
| 10110 | | | | | | | | | | | | | 256 | | | |
| 10111 | | | | | | | | | | | | | | | 256 | |

(continued)

| 5-bit indicato r bit | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| 11000 | 512 | | | | | | | | | | | | | | | |
| 11001 | | | | | 512 | | | | | | | | | | | |
| 11010 | | | | | | | | | 512 | | | | | | | |
| 11011 | | | | | | | | | | | | | 512 | | | |
| 11100 | 1024 | | | | | | | | | | | | | | | |
| 11101 | | | | | | | | | 1024 | | | | | | | |
| 11110 | 2048 | | | | | | | | | | | | | | | |

Based on content shown in Table 9, a resource unit on which data needs to be sent may be determined. For example, if sub resource indication information is "11000", it may indicate that data (uplink data or downlink data) is sent to a STA A on the first resource unit including 512 subcarriers. For another example, if sub resource indication information is "10010", it may indicate that data (uplink data or downlink data) is sent to a STA A on the fifth resource unit including 256 subcarriers.

It should be noted that Table 9 does not show a relationship between a STA ID and an index. In a resource scheduling process, the relationship between the STA ID and the index may be generated based on an actual situation. The foregoing allocation manner is merely an example, and should not be construed as a limitation on the relationship between the STA ID and the index. In addition, a setting of the index may also be adjusted based on a resource division manner. Assuming that a minimum data and pilot resource unit is 88 subcarriers, the 128 subcarriers shown in Table 9 may be updated to 88 subcarriers, the 256 subcarriers may be updated to 176 subcarriers, the 512 subcarriers may be updated to 352 subcarriers, the 1024 subcarriers may be updated to 704 subcarriers, and the 2048 subcarriers may be updated to 1048 subcarriers.

Embodiment 5: Multi-channel indication manner

Optionally, it can be learned from Embodiment 1, Embodiment 2, Embodiment 3, and Embodiment 4 described in the second part (resource indication part) that for the single 2.16 GHz channel, three bits may be directly used to perform resource indication on the STA. However, in a case of a plurality of channels (for example, CB is 2, 3, or 4), the resource unit allocation information further includes the channel indication information. The channel indication information is used to indicate the channel allocated to the station corresponding to the STA ID. Usually, the channel indication information may include two bits. The first two bits are used to indicate a specific 2.16 GHz channel that is occupied, and the last three bits are used to indicate a specific resource unit of the channel. Each 2.16 GHz channel is independently indicated. For example, when the channel indication information is 00, it indicates that resource indication is performed on the first 2.16 GHz channel; when the channel indication information is 01, it indicates that resource indication is performed on the second 2.16 GHz channel; when the channel indication information is 10, it indicates that resource indication is performed on the third 2.16 GHz channel; or when the channel indication information is 11, it indicates that resource indication is performed on the fourth 2.16 GHz channel. Table 10 shows a resource unit indication manner used when channel bonding (CB=2, 3, or 4) is performed.

**Table 10**

| 5-bit indicator bit (B4-B0) | Description. | Participation quantity |
|---|---|---|
| 00x1x2x3 | Resource units may be allocated on the first 2.16 GHz channel | 8 |
| 01x1x2x3 | Resource units may be allocated on the second 2.16 GHz channel | 8 |
| 10x1x2x3 | Resource units may be allocated on the third 2.16 GHz channel | 8 |
| 11x1x2x3 | Resource units may be allocated on the fourth 2.16 GHz channel | 8 |

As shown in Table 10, assuming that resource unit allocation needs to be performed on the third 2.16 GHz channel, it may be first determined, based on Table 10, that an indicator bit "10" is used to indicate the third 2.16 GHz channel, and then how to perform resource unit allocation on different STAs is determined based on Table 10. For example, a bit indicator bit "10 000 001 010 011" is used to indicate that on the third 2.16 GHz channel, the first resource unit including 128 subcarriers is allocated (the resource unit may be allocated to a STA A), the second resource unit including 128 subcarriers is allocated (the resource unit may be allocated to a STA B), the third resource unit including 128 subcarriers is allocated (the resource unit may be allocated to a STA C), and the fourth resource unit including 128 subcarriers is allocated (the resource unit may be allocated to a STA D). Herein, only a total of 14 bits need to be used for resource indication.

Compared with a case in which only 20 bits need to be used for resource indication, in the foregoing manner, bits used for indication can be reduced.

Therefore, on a premise that the three bits are used to indicate a specific resource unit of the STA, two bits may be further used to indicate the channel allocated to the STA. In the foregoing manner, for complete resource indication, only two bits need to be added. In a case of multi-channel indication, a quantity of bits used for indication can be reduced, so that indication resources are saved.

3. Test result

The resource division method provided in this application can greatly reduce a transmission PAPR, thereby improving efficiency of a transmitter power amplifier. To prove the foregoing conclusion, the following uses a test result for description.

A signal receiver using a zero intermediate frequency architecture generates a direct current component of a signal near a baseband zero frequency at a receive end, and the direct current component causes interference to a data signal, for example, a subcarrier in a center of a frequency band in a conventional OFDM transmission mode, near the zero frequency. To prevent signal interference from such a direct current component, in conventional OFDM, several null subcarriers are reserved in the center of the frequency band (for example, one, three, five, or seven null direct current subcarriers may be reserved).

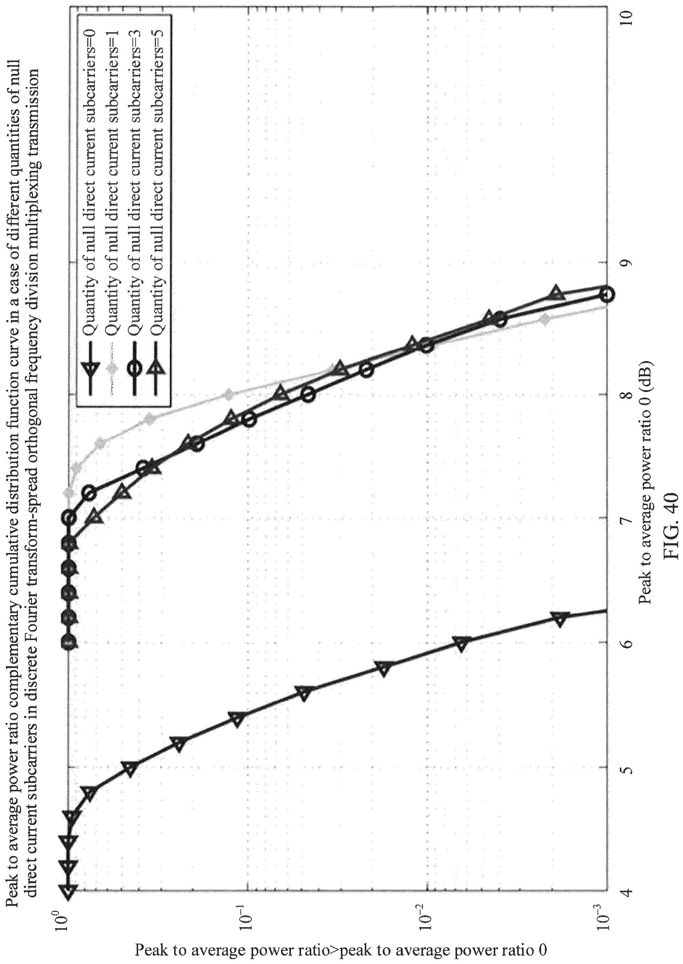

If a DFT-S-OFDM transmission mode is used, a direct current subcarrier part cannot be reserved for a null subcarrier because in this way, a PAPR of a transmission waveform is severely damaged. For ease of description, FIG. 40 shows a PAPR complementary cumulative distribution function (complementary cumulative distribution function, CCDF) curve in a case of different quantities of null direct current subcarriers in DFT-S-OFDM transmission. The CCDF curve is a concept introduced to represent a statistical characteristic of a peak to average power ratio PAPR in an OFDM system, and is defined as a probability that a peak to average power ratio exceeds a threshold in a multicarrier transmission system.

Regardless of whether a quantity of null subcarriers at a central direct current position is 1, 2, or 3, a PAPR of a transmission waveform is nearly 2.5 dB higher than that of a waveform without a direct current subcarrier. It can be learned that in this application, the direct current component is disposed between two subcarriers in a center of a frequency band of a channel, and there is no direct current subcarrier, so that a transmission PAPR can be reduced, and efficiency of a transmitter power amplifier is improved.

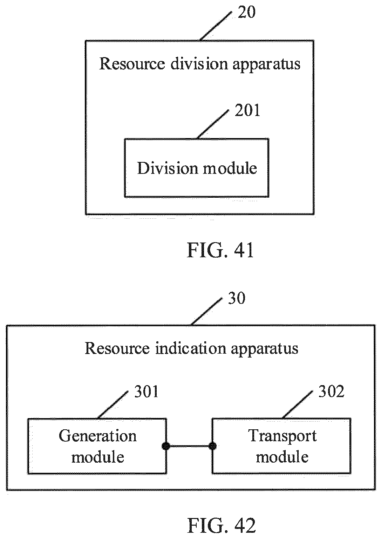

The following describes in detail a resource division apparatus corresponding to an embodiment of this application. Referring to FIG. 41, the resource division apparatus 20 in this embodiment of this application includes:
a division module 201, configured to perform resource division on a channel, where the divided channel includes a data and pilot resource unit and a direct current component, and the direct current component is located between two subcarriers in a center of a frequency band of the channel.

In this embodiment, the division module 201 performs resource division on the channel. The divided channel includes the data and pilot resource unit and the direct current component. The direct current component is located between the two subcarriers in the center of the frequency band of the channel.

In this embodiment of this application, a resource division method is provided. The resource division apparatus performs resource division on the channel. The divided channel includes the data and pilot resource unit and the direct current component. The direct current component is located between the two subcarriers in the center of the frequency band of the channel. In the foregoing manner, in a DFT-S-OFDM transmission mode, because transmission of a high-frequency signal is quite sensitive to a peak to average power ratio of the signal, the direct current component is disposed between the two subcarriers in the center of the frequency band, to avoid impact of a null direct current subcarrier on the peak to average power ratio of the signal, and effectively reduce a peak to average power ratio during transmission, so that efficiency of a transmitter power amplifier is improved.

Optionally, based on the foregoing embodiment corresponding to FIG. 41, in another embodiment of the resource division apparatus 20 provided in this embodiment of the present invention, when the channel is 2.16 GHz, the data and pilot resource unit may include:

a resource unit including 128 subcarriers;
a resource unit including 256 subcarriers; or

a resource unit including 512 subcarriers.

The 2.16 GHz channel includes any combination of the foregoing resource units.

It can be learned that in this embodiment of this application, a method for performing resource division on the single 2.16 GHz channel is provided, and the resource unit including 128 subcarriers, the resource unit including 256 subcarriers, or the resource unit including 512 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Optionally, based on the foregoing embodiment corresponding to FIG. 41, in another embodiment of the resource division apparatus 20 provided in this embodiment of the present invention, when the channel is 4.32 GHz, the data and pilot resource unit may include:

a resource unit including 128 subcarriers;
a resource unit including 256 subcarriers;
a resource unit including 512 subcarriers; or
a resource unit including 1024 subcarriers.

The 4.32 GHz channel includes any combination of the foregoing resource units.

It can be learned that in this embodiment of this application, a method for performing resource division on the single 4.32 GHz channel is provided, and the resource unit including 128 subcarriers, the resource unit including 256 subcarriers, or the resource unit including 512 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Optionally, based on the foregoing embodiment corresponding to FIG. 41, in another embodiment of the resource division apparatus 20 provided in this embodiment of the present invention, when the channel is 6.48 GHz, the data and pilot resource unit may include:

a resource unit including 192 subcarriers;
a resource unit including 384 subcarriers;
a resource unit including 768 subcarriers; or
a resource unit including 1536 subcarriers.

The 6.48 GHz channel includes any combination of the foregoing resource units.

It can be learned that in this embodiment of this application, a method for performing resource division on the single 6.48 GHz channel is provided, and the resource unit including 192 subcarriers, the resource unit including 384 subcarriers, the resource unit including 768 subcarriers, or the resource unit including 1536 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Optionally, based on the foregoing embodiment corresponding to FIG. 41, in another embodiment of the resource division apparatus 20 provided in this embodiment of the present invention, when the channel is 8.64 GHz, the data and pilot resource unit may include:

a resource unit including 128 subcarriers;
a resource unit including 256 subcarriers;
a resource unit including 512 subcarriers;
a resource unit including 1024 subcarriers; or
a resource unit including 2048 subcarriers.

The 8.64 GHz channel includes any combination of the foregoing resource units.

It can be learned that in this embodiment of this application, a method for performing resource division on the single 8.64 GHz channel is provided, and the resource unit including 128 subcarriers, the resource unit including 256 subcarriers, the resource unit including 512 subcarriers, the resource unit including 1024 subcarriers, or the resource unit including 2048 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Optionally, based on the foregoing embodiment corresponding to FIG. 41, in another embodiment of the resource division apparatus 20 provided in this embodiment of the present invention, when the channel is 2.16 GHz, the data and pilot resource unit may include:

a resource unit including 88 subcarriers;
a resource unit including 176 subcarriers; or
a resource unit including 352 subcarriers.

The 2.16 GHz channel includes any combination of the foregoing resource units.

It can be learned that in this embodiment of this application, another method for performing resource division on the single 2.16 GHz channel is provided, and the resource unit including 88 subcarriers, the resource unit including 176 subcarriers, or the resource unit including 352 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Optionally, based on the foregoing embodiment corresponding to FIG. 41, in another embodiment of the resource division apparatus 20 provided in this embodiment of the present invention, when the channel is 4.32 GHz, the data and pilot resource unit may include:

a resource unit including 88 subcarriers;
a resource unit including 176 subcarriers;
a resource unit including 352 subcarriers; or
a resource unit including 704 subcarriers.

The 4.32 GHz channel includes any combination of the foregoing resource units.

It can be learned that in this embodiment of this application, another method for performing resource division on the single 4.32 GHz channel is provided, and the resource unit including 88 subcarriers, the resource unit including 176 subcarriers, the resource unit including 352 subcarriers, or the resource unit including 704 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Optionally, based on the foregoing embodiment corresponding to FIG. 41, in another embodiment of the resource division apparatus 20 provided in this embodiment of the present invention, when the channel is 6.48 GHz, the data and pilot resource unit may include:

a resource unit including 88 subcarriers;
a resource unit including 176 subcarriers;
a resource unit including 264 subcarriers;
a resource unit including 528 subcarriers; or
a resource unit including 1056 subcarriers.

The 6.48 GHz channel includes any combination of the foregoing resource units.

It can be learned that in this embodiment of this application, another method for performing resource division on the single 6.48 GHz channel is provided, and the resource unit including 88 subcarriers, the resource unit including 176 subcarriers, the resource unit including 264 subcarriers, the resource unit including 528 subcarriers, or the resource unit including 1056 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

Optionally, based on the foregoing embodiment corresponding to FIG. 41, in another embodiment of the resource division apparatus 20 provided in this embodiment of the present invention, when the channel is 8.64 GHz, the data and pilot resource unit may include:

a resource unit including 88 subcarriers;
a resource unit including 176 subcarriers;

a resource unit including 352 subcarriers;
a resource unit including 704 subcarriers; or
a resource unit including 1408 subcarriers.

The 8.64 GHz channel includes any combination of the foregoing resource units.

It can be learned that in this embodiment of this application, another method for performing resource division on the single 8.64 GHz channel is provided, and the resource unit including 88 subcarriers, the resource unit including 176 subcarriers, the resource unit including 352 subcarriers, the resource unit including 704 subcarriers, or the resource unit including 1408 subcarriers is obtained after the division. The foregoing resource units may be randomly combined. In the foregoing manner, the method can be used in a resource unit design in a 60 GHz WLAN system, thereby helping improve feasibility and operability of the solution. In addition, this application can support multi-user frequency division multiplexing, thereby improving practicability of the solution.

The foregoing has described the resource division apparatus in this application. The following describes in detail a resource indication apparatus corresponding to an embodiment of this application. Referring to FIG. 42, the resource indication apparatus 30 in this embodiment of this application includes:

a generation module 301, configured to generate a frame including resource indication information, where the resource indication information includes a plurality of pieces of sub resource indication information, each piece of sub resource indication information corresponds to one station, and the sub resource indication information includes resource unit allocation information of the station corresponding to the sub resource indication information; and
a transport module 302, configured to send the frame, generated by the generation module 301, of the resource indication information to the station.

In this embodiment, the generation module 301 generates the frame including the resource indication information. The resource indication information includes the plurality of pieces of sub resource indication information. Each piece of sub resource indication information corresponds to one station. The sub resource indication information includes the resource unit allocation information of the station corresponding to the sub resource indication information. The transport module 302 sends the frame, generated by the generation module 301, of the resource indication information to the station.

In this embodiment of this application, a resource indication method is provided. Resource unit allocation information of a STA is determined based on a plurality of pieces of sub resource indication information included in resource indication information, to not only indicate a position of a resource unit of the STA in transmission of downlink data, but also indicate a position of a resource unit occupied by the STA in transmission of uplink data. In the foregoing manner, the resource unit allocation information of the STA is determined by using the plurality of pieces of sub resource indication information included in the resource indication information, so that accuracy and feasibility of determining the position of the resource unit of the STA can be improved.

Optionally, based on the embodiment corresponding to FIG. 42, in another embodiment of the resource indication apparatus 30 provided in this embodiment of the present invention, the resource unit allocation information includes station identification STA ID.

It can be learned that in this embodiment of this application, content included in the resource unit allocation information is described, and the content specifically includes the STA ID and a correspondence between the STA ID and an index. In the foregoing manner, when resource indication is performed on different STAs, a size and a position of a resource unit allocated to at least one STA may be determined by using the correspondence between the STA ID and the index, to accurately perform resource indication on the different STAs, and indicate the size and the position of the resource unit allocated to the STA in the index, so that feasibility of the solution is improved.

Optionally, based on the embodiment corresponding to FIG. 42, in another embodiment of the resource indication apparatus 30 provided in this embodiment of the present invention, the resource unit allocation information further includes an index, there is a correspondence between the index and the STA ID, and the index is used to indicate a size and a position of a resource unit allocated to the station corresponding to the STA ID.

It can be learned that in this embodiment of this application, that the index is used to indicate the size and the position of the resource unit allocated to the STA corresponding to the STA ID is specifically described. In the foregoing manner, the size and the position of the resource unit allocated to the STA can be accurately indicated by using the index. Therefore, feasibility during actual application can be achieved. In addition, indication content in a transmission scenario may be further determined based on content indicated by using the index.

Optionally, based on the embodiment corresponding to FIG. 42, in another embodiment of the resource indication apparatus 30 provided in this embodiment of the present invention, the resource unit allocation information further includes channel indication information, and the channel indication information is used to indicate a channel allocated to the station corresponding to the STA ID.

It can be learned that in this embodiment of this application, on a premise that three bits are used to indicate a specific resource unit of the STA, two bits may be further used to indicate the channel allocated to the STA. In the foregoing manner, for complete resource indication, only two bits need to be added. In a case of multi-channel indication, a quantity of bits used for indication can be reduced, so that indication resources are saved, and practicability of the solution is improved.

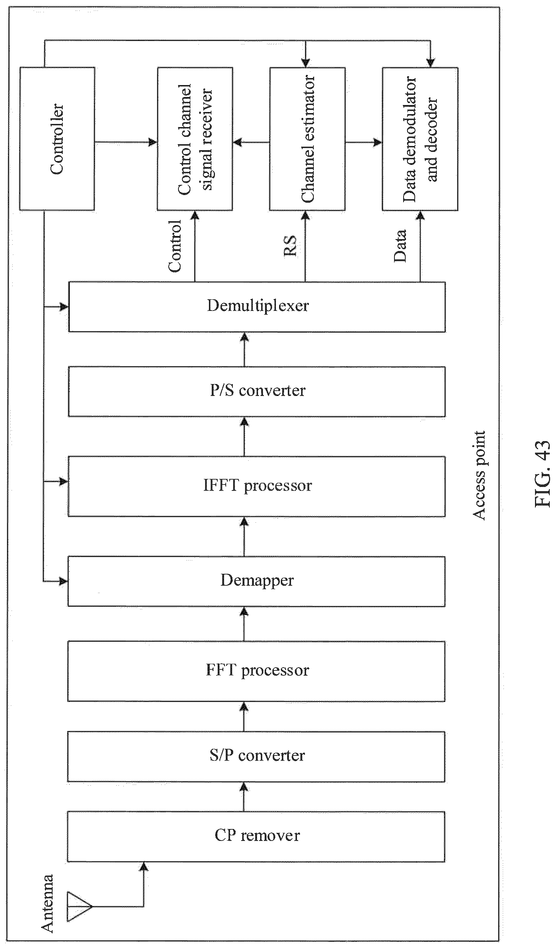

FIG. 43 is a simplified diagram including components corresponding to signal processing actions. A structure is suitable for a solution of performing sequential processing on a signal. FIG. 43 includes corresponding content in a transceiver and a processor. In practice, the content may be selected based on an actual requirement of the solution, or another component is further added for use. If the figure is used in an embodiment, it is recommended that another relatively general figure be used in this embodiment.

An AP shown in FIG. 43 may include an antenna, a cyclic prefix (cyclic prefix, CP) remover, a serial/parallel (serial/parallel, S/P) converter, a fast Fourier transform (fast fourier transform, FFT) processor, a demapper, an inverse fast Fourier transformation (inverse fast fourier transform, IFFT) processor, a parallel/serial (parallel/serial, P/S) converter, a demultiplexer (demultiplexer, DEMUX), a controller, a control channel signal receiver, a channel estimator, and a data demodulator and decoder.

The controller provides overall control. The controller also generates control signals required by the DEMUX, the IFFT processor, the demapper, the control channel signal receiver, the channel estimator, and the data demodulator and decoder. In addition, uplink (uplink, UL) control information and a control signal that is related to data are provided for the control channel signal receiver and the data demodulator and decoder. A control channel signal for indicating a sequence index and a time-domain cyclic shift value is provided for the channel estimator. The sequence index and the time-domain cyclic shift value are used to generate a pilot sequence allocated to UE.

The DEMUX demultiplexes a signal received from the P/S converter into a control channel signal, a data signal, and a pilot signal based on timing information received from the controller. The demapper extracts those signals from a frequency resource based on the timing information and frequency allocation information that are received from the controller.

When a signal including control information is received from the UE through the antenna, the CP remover removes a CP from the received signal. The S/P converter converts a signal without a CP into a parallel signal, and the FFT processor processes the parallel signal through FFT. After being demapped in the demapper, an FFT signal is converted into a time signal in the IFFT processor. An input/output size of the IFFT processor varies with a control signal received from the controller. The P/S converter serializes an IFFT signal, and the DEMUX demultiplexes a serial signal into a control channel signal, a pilot signal, and a data signal.

The channel estimator obtains channel estimation from a pilot signal received from the DEMUX. The control channel signal receiver performs, through channel estimation, channel compensation on a control channel signal received from the DEMUX, and obtains control information sent by the UE. The data demodulator and decoder performs, through channel estimation, channel compensation on a data signal received from the DEMUX, and then obtains, based on control information, data sent by the UE.

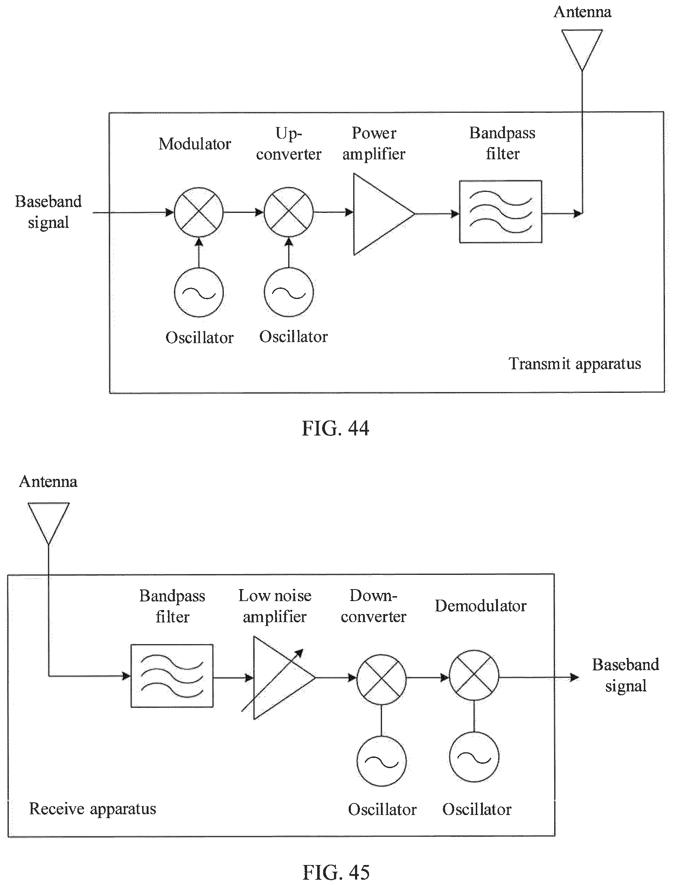

FIG. 44 and FIG. 45 are respectively brief diagrams including specific electronic element structures in a transmit apparatus and a receive apparatus that are included in an AP. For the AP, uplink data may be transmitted by using the transmit apparatus, and downlink data may be received by using the receive apparatus. In components shown in FIG. 44 and FIG. 45, adjustment, addition, or deletion may be performed based on a requirement.

In the transmit apparatus shown in FIG. 44, a modulator modulates a carrier by using a baseband signal. A modulated bandpass signal moves to a required operating frequency band through an up-converter, and is amplified by using a power amplifier, filtered by a filter, and then sent.

In the receiver shown in FIG. 45, a radio frequency (radio frequency, RF) part of the receive apparatus is opposite to that of a transmitter. A bandpass filter selects a wanted signal from a large quantity of electric wave signals. A low noise amplifier (low noise amplifier, LNA) amplifies the selected wanted signal. A down-converter converts an RF signal into an intermediate frequency (intermediate frequency, IF) signal. A demodulator performs demodulation, and converts a frequency band signal into a baseband (baseband) signal.

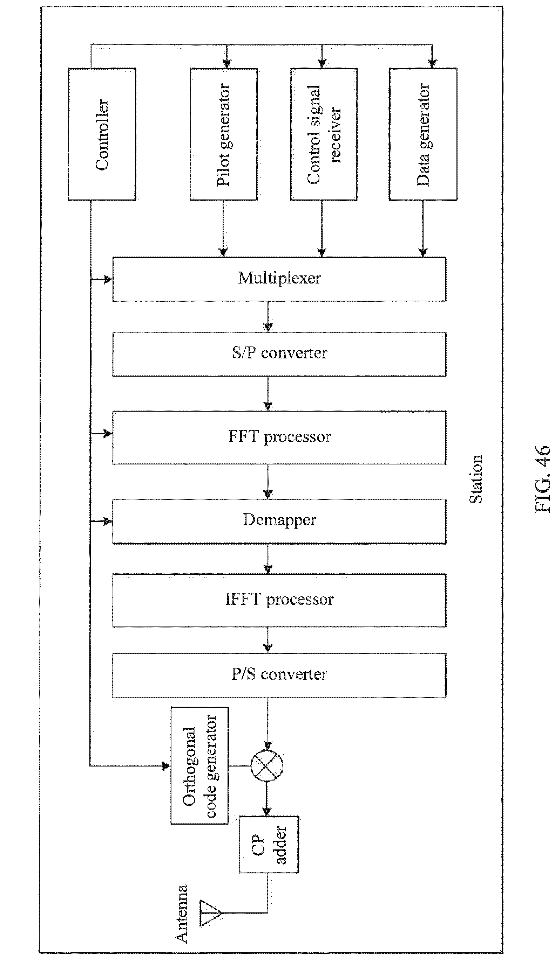

FIG. 46 shows a structure of a STA that processes and transmits a signal. During actual application, the structure of the STA may be selected or added for use based on an actual requirement. If an embodiment is described with reference to the figure, it is recommended that another accompanying drawing with a more simplified general function structure and a corresponding embodiment be arranged simultaneously.

In FIG. 46, the STA includes a controller, a pilot generator, a control channel signal generator, a data generator, a multiplexer (multiplexer, MUX), a serial/parallel (serial/parallel, S/P) converter, a fast Fourier transformation (fast fourier transform, FFT) processor, a mapper, an inverse fast Fourier transformation (inverse fast fourier transform, IFFT) processor, a P/S converter, an orthogonal code generator, a multiplier, a CP adder, and an antenna.

The controller provides overall control over an operation of a transmitter and generates control signals required by the MUX, the FFT processor, the mapper, the pilot generator, the control channel signal generator, the data generator, and the orthogonal code generator. A control signal provided for the pilot generator indicates a sequence index and a time-domain cyclic shift value that are used to generate a pilot sequence. In addition, uplink (uplink, UL) control information and a control signal that is associated with data transmission are provided for the control channel signal generator and the data generator.

The MUX multiplexes a pilot signal, a data signal, and a control channel signal that are received from the pilot generator, the data generator, and the control channel signal generator based on information indicated by using a control signal received from the controller. The mapper maps a multiplexed signal to a frequency resource based on timing information and frequency allocation information that are received from the controller.

The S/P converter converts a multiplexed signal from the MUX into a parallel signal, and provides the parallel signal for the FFT processor. An input/output size of the FFT processor varies with a control signal received from the controller. The mapper maps an FFT signal from the FFT processor to the frequency resource. The IFFT processor converts the mapped frequency signal into a time signal, and the P/S converter serializes the time signal. The multiplier multiplies the serial time signal by an orthogonal code generated from the orthogonal code generator. To be specific, the orthogonal code generator generates, based on the timing information received from the controller, an orthogonal code to be used in a slot of a subframe that carries control information.

The CP adder adds a CP to a signal received from the multiplier to avoid element to element interference, and transmits, by using a transmit antenna, the signal to which the CP is added.

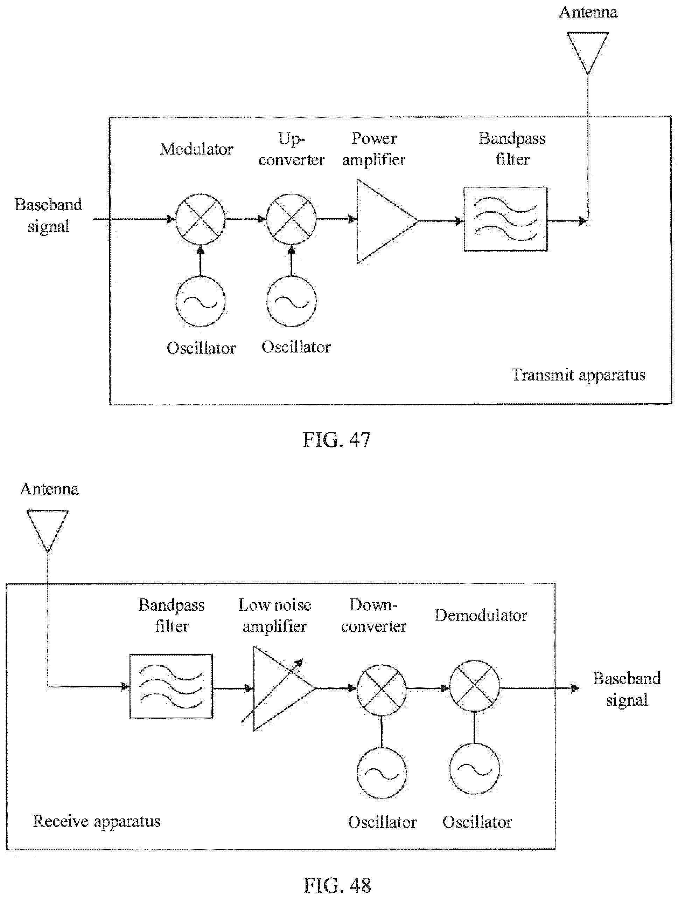

FIG. 47 and FIG. 48 are respectively brief diagrams including specific electronic element structures in a transmit apparatus and a receive apparatus that are included in a STA. For the STA, uplink data may be transmitted by using the transmit apparatus, and downlink data may be received by using the receive apparatus. In components shown in FIG. 47 and FIG. 48, adjustment, addition, or deletion may be performed based on a requirement.

In the transmit apparatus shown in FIG. 47, a modulator modulates a carrier by using a baseband signal. A modulated bandpass signal moves to a required operating frequency band through an up-converter, and is amplified by using a power amplifier, filtered by a filter, and then sent.

In the receiver shown in FIG. 48, an RF part of the receiver is opposite to that of a transmitter. A bandpass filter selects a wanted signal from a large quantity of electric wave signals. An LNA amplifies the selected wanted signal. A down-converter converts an RF signal into an IF signal. A demodulator performs demodulation, and converts a frequency band signal into a base band signal.

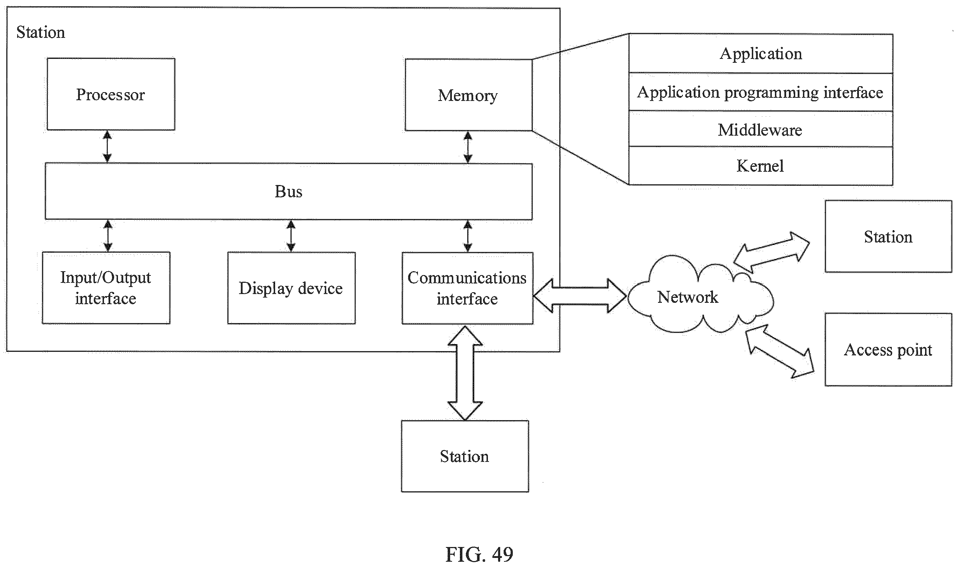

This example provides an example of a communications system pattern. In FIG. 49, a specific internal structure is shown only for an important network element in a system, and is applicable to a case in which some network elements in the system have an inventive point, and other network elements do not have an inventive point. In the embodiments and the claims, only the important network element needs to be described and protected. In this way, when the embodiments are described, a specific structure of the network element may be conveniently integrated into description of the entire system. Note: Internal structures of network elements in this example are only an example. Specific internal structures may be adjusted based on an actual situation.

The system includes a STA. The STA includes a bus, a processor, a memory, an input/output interface, a display device, and a communications interface. The bus is a circuit that connects described elements and implements transmission between the elements. For example, the processor receives a command from another element by using the bus, decrypts the received command, and performs calculation or data processing according to the decrypted command.

The memory may include a program module, for example, a kernel (kernel), middleware (middleware), an application programming interface, and an application. The program module may include software, firmware, hardware, or at least two of the software, the firmware, and the hardware.

The input/output interface forwards a command or data entered by a user by using an input/output device (for example, a sensor, a keyboard, or a touchscreen).

The display device displays various information to the user.

The communications interface connects the STA to another STA, an AP, and a network. For example, the communications interface may be connected to the network in a wired or wireless manner, to be connected to the another STA or the AP outside. Wireless communication may include at least one of the following: Wi-Fi, Bluetooth (bluetooth, BT), near field communication (near field communication, NFC), a global positioning system (global positioning system, GPS), and cellular communication (for example, long term evolution (long term evolution, LTE), long term evolution-advanced (long term evolution-advanced, LTE-A), code division multiple access (code division multiple access, CDMA), wideband code division multiple access (wideband code division multiple access, WCDMA), a universal mobile telecommunication system (universal mobile telecommunication system, UMTS), wireless broadband (wireless broadband, WiBro), and a global system for mobile communications (global system for mobile communications, GSM)).

Wired communication may include at least one of the following: a universal serial bus (universal serial bus, USB), a high definition multimedia interface (high definition multimedia Interface, HDMI), a recommended standard 232 (recommended standard 232, RS-232), and a plain old telephone service (plain old telephone service, POTS).

The network may be a telecommunication network. A communications network may be a computer network, an internet, an internet of things, or a telephony network. A protocol used for communication of the STA and the another STA may be supported by at least one of the application, the application programming interface (application programming interface, API), the middleware, the kernel, and the communications interface.

In the embodiments of this application, an AP or a STA is configured to perform the following step: performing resource division on a channel, where the divided channel includes a data and pilot resource unit and a direct current component, and the direct current component is located between two subcarriers in a center of a frequency band of the channel.

Optionally, when the channel is 2.16 GHz, the data and pilot resource unit includes: a resource unit including 128 subcarriers, a resource unit including 256 subcarriers, or a resource unit including 512 subcarriers. The 2.16 GHz channel includes any combination of the foregoing resource units.

Optionally, when the channel is 4.32 GHz, the data and pilot resource unit includes: a resource unit including 128 subcarriers, a resource unit including 256 subcarriers, a resource unit including 512 subcarriers, or a resource unit including 1024 subcarriers. The 4.32 GHz channel includes any combination of the foregoing resource units.

Optionally, when the channel is 6.48 GHz, the data and pilot resource unit includes: a resource unit including 192 subcarriers, a resource unit including 384 subcarriers, a resource unit including 768 subcarriers, or a resource unit including 1536 subcarriers. The 6.48 GHz channel includes any combination of the foregoing resource units.

Optionally, when the channel is 8.64 GHz, the data and pilot resource unit includes: a resource unit including 128 subcarriers, a resource unit including 256 subcarriers, a resource unit including 512 subcarriers, a resource unit including 1024 subcarriers, or a resource unit including 2048 subcarriers. The 8.64 GHz channel includes any combination of the foregoing resource units.

Optionally, when the channel is 2.16 GHz, the data and pilot resource unit includes: a resource unit including 88 subcarriers, a resource unit including 176 subcarriers, or a resource unit including 352 subcarriers. The 2.16 GHz channel includes any combination of the foregoing resource units.

Optionally, when the channel is 4.32 GHz, the data and pilot resource unit includes: a resource unit including 88 subcarriers, a resource unit including 176 subcarriers, a resource unit including 352 subcarriers, or a resource unit including 704 subcarriers. The 4.32 GHz channel includes any combination of the foregoing resource units.

Optionally, when the channel is 6.48 GHz, the data and pilot resource unit includes: a resource unit including 88 subcarriers, a resource unit including 176 subcarriers, a resource unit including 264 subcarriers, a resource unit including 528 subcarriers, or a resource unit including 1056 subcarriers. The 6.48 GHz channel includes any combination of the foregoing resource units.

Optionally, when the channel is 8.64 GHz, the data and pilot resource unit includes: a resource unit including 88 subcarriers, a resource unit including 176 subcarriers, a resource unit including 352 subcarriers, a resource unit including 704 subcarriers, or a resource unit including 1408 subcarriers. The 8.64 G Hz channel includes any combination of the foregoing resource units.

In the embodiments of this application, the AP is configured to perform the following steps:

generating a frame including resource indication information, where the resource indication information includes a plurality of pieces of sub resource indication information, each piece of sub resource indication information corresponds to one station, and the sub resource indication information includes resource unit allocation information of the station corresponding to the sub resource indication information; and
sending the frame of the resource indication information to the station.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer instructions are loaded and executed on a computer, the procedures or functions according to the embodiments of the present invention are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid- State Disk (SSD)), or the like.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that, the disclosed system, apparatus, and method may be implemented in other manners. For example, the apparatus embodiment described above is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions in the embodiments.

In addition, functional units in the embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing to the current technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods in the embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof, without departing from the and scope of the technical solutions of the embodiments of this application.

## Claims

1. A resource division method, comprising:
   performing resource division on a channel, wherein the divided channel comprises a data and pilot resource unit and a direct current component, and the direct current component is located between two subcarriers in a center of a frequency band of the channel.

2. The method according to claim 1, wherein when the channel is 2.16 GHz channel, the data and pilot resource unit comprises:

   a resource unit including 128 subcarriers;
   a resource unit including 256 subcarriers; or
   a resource unit including 512 subcarriers, wherein
   the 2.16 GHz channel includes any combination of the foregoing resource units.

3. The method according to claim 1, wherein when the channel is 4.32 GHz, the data and pilot resource unit comprises:

   a resource unit including 128 subcarriers;
   a resource unit including 256 subcarriers;
   a resource unit including 512 subcarriers; or
   a resource unit including 1024 subcarriers, wherein
   the 4.32 GHz channel includes any combination of the foregoing resource units.

4. The method according to claim 1, wherein when the channel is 6.48 GHz, the data and pilot resource unit comprises:

a resource unit including 192 subcarriers;
a resource unit including 384 subcarriers;
a resource unit including 768 subcarriers; or
a resource unit including 1536 subcarriers, wherein
the 6.48 GHz channel includes any combination of the foregoing resource units.

5.  The method according to claim 1, wherein when the channel is 8.64 GHz, the data and pilot resource unit comprises:

a resource unit including 128 subcarriers;
a resource unit including 256 subcarriers;
a resource unit including 512 subcarriers;
a resource unit including 1024 subcarriers; or
a resource unit including 2048 subcarriers, wherein
the 8.64 GHz channel includes any combination of the foregoing resource units.

6.  The method according to claim 1, wherein when the channel is 2.16 GHz, the data and pilot resource unit comprises:

a resource unit including 88 subcarriers;
a resource unit including 176 subcarriers; or
a resource unit including 352 subcarriers, wherein
the 2.16 GHz channel includes any combination of the foregoing resource units.

7.  The method according to claim 1, wherein when the channel is 4.32 GHz, the data and pilot resource unit comprises:

a resource unit including 88 subcarriers;
a resource unit including 176 subcarriers;
a resource unit including 352 subcarriers; or
a resource unit including 704 subcarriers, wherein
the 4.32 GHz channel includes any combination of the foregoing resource units.

8.  The method according to claim 1, wherein when the channel is 6.48 GHz, the data and pilot resource unit comprises:

a resource unit including 88 subcarriers;
a resource unit including 176 subcarriers;
a resource unit including 264 subcarriers;
a resource unit including 528 subcarriers; or
a resource unit including 1056 subcarriers, wherein
the 6.48 GHz channel includes any combination of the foregoing resource units.

9.  The method according to claim 1, wherein when the channel is 8.64 GHz, the data and pilot resource unit comprises:

a resource unit including 88 subcarriers;
a resource unit including 176 subcarriers;
a resource unit including 352 subcarriers;
a resource unit including 704 subcarriers; or
a resource unit including 1408 subcarriers, wherein
the 8.64 GHz channel includes any combination of the foregoing resource units.

10. A resource indication method, comprising:

generating a frame comprising resource indication information, wherein the resource indication information comprises a plurality of pieces of sub resource indication information, each piece of sub resource indication information corresponds to one station, and the sub resource indication information comprises resource unit allocation information of the station corresponding to the sub resource indication information; and
sending the frame of the resource indication information to the station.

11. The method according to claim 10, wherein the resource unit allocation information comprises station identification STA ID.

**12.** The method according to claim 10 or 11, wherein the resource unit allocation information further comprises an index, there is a correspondence between the index and the STA ID, and the index is used to indicate a size and a position of a resource unit allocated to the station corresponding to the STA ID.

**13.** A resource division apparatus, comprising:
a division module, configured to perform resource division on a channel, wherein the divided channel comprises a data and pilot resource unit and a direct current component, and the direct current component is located between two subcarriers in a center of a frequency band of the channel.

**14.** The resource division apparatus according to claim 13, wherein when the channel is 2.16 GHz, the data and pilot resource unit comprises:

a resource unit including 128 subcarriers;
a resource unit including 256 subcarriers; or
a resource unit including 512 subcarriers, wherein
the 2.16 GHz channel includesany combination of the foregoing resource units.

**15.** The resource division apparatus according to claim 13, wherein when the channel is 4.32 GHz, the data and pilot resource unit comprises:

a resource unit including 128 subcarriers;
a resource unit including 256 subcarriers;
a resource unit including 512 subcarriers; or
a resource unit including 1024 subcarriers, wherein
the 4.32 GHz channel includes any combination of the foregoing resource units.

**16.** The resource division apparatus according to claim 13, wherein when the channel is 6.48 GHz, the data and pilot resource unit comprises:

a resource unit including 192 subcarriers;
a resource unit including 384 subcarriers;
a resource unit including 768 subcarriers; or
a resource unit including 1536 subcarriers, wherein
the 6.48 GHz channel includes any combination of the foregoing resource units.

**17.** The resource division apparatus according to claim 13, wherein when the channel is 8.64 GHz, the data and pilot resource unit comprises:

a resource unit including 128 subcarriers;
a resource unit including 256 subcarriers;
a resource unit including 512 subcarriers;
a resource unit including 1024 subcarriers; or
a resource unit including 2048 subcarriers, wherein
the 8.64 GHz channel includesany combination of the foregoing resource units.

**18.** The resource division apparatus according to claim 13, wherein when the channel is 2.16 GHz, the data and pilot resource unit comprises:

a resource unit including 88 subcarriers;
a resource unit including 176 subcarriers; or
a resource unit including 352 subcarriers, wherein
the 2.16 GHz channel includes any combination of the foregoing resource units.

**19.** The resource division apparatus according to claim 13, wherein when the channel is 4.32 GHz, the data and pilot resource unit comprises:

a resource unit including 88 subcarriers;
a resource unit including 176 subcarriers;

a resource unit including 352 subcarriers; or
a resource unit including 704 subcarriers, wherein
the 4.32 GHz channel includes any combination of the foregoing resource units.

20. The resource division apparatus according to claim 13, wherein when the channel is 6.48 GHz, the data and pilot resource unit comprises:

a resource unit including 88 subcarriers;
a resource unit including 176 subcarriers;
a resource unit including 264 subcarriers;
a resource unit including 528 subcarriers; or
a resource unit including 1056 subcarriers, wherein
the 6.48 GHz channel includes any combination of the foregoing resource units.

21. The resource division apparatus according to claim 13, wherein when the channel is 8.64 GHz, the data and pilot resource unit comprises:

a resource unit including 88 subcarriers;
a resource unit including 176 subcarriers;
a resource unit including 352 subcarriers;
a resource unit including 704 subcarriers; or
a resource unit including 1408 subcarriers, wherein
the 8.64 GHz channel includes any combination of the foregoing resource units.

22. A resource division apparatus, comprising:

a generation module, configured to generate a frame comprising resource indication information, wherein the resource indication information comprises a plurality of pieces of sub resource indication information, each piece of sub resource indication information corresponds to one station, and the sub resource indication information comprises resource unit allocation information of the station corresponding to the sub resource indication information; and
a transport module, configured to send the frame, generated by the generation module, of the resource indication information to the station.

23. The resource indication apparatus according to claim 22, wherein the resource unit allocation information comprises station identification STA ID.

24. The resource indication apparatus according to claim 22 or 23, wherein the resource unit allocation information further comprises an index, there is a correspondence between the index and the STA ID, and the index is used to indicate a size and a position of a resource unit allocated to the station corresponding to the STA ID.

FIG. 1

FIG. 2

FIG. 3

FIG. 4

Direct current component

2.16 GHz channel

512×3.4375 MHz=1.76 GHz
768×3.4375 MHz=2.64 GHz

FIG. 5

FIG. 6

Direct current component

$f_{DC}$

FIG. 7

Direct current component

2.16 GHz channel

| 128 | 128 | 128 | 128 |

512×3.4375 MHz=1.76 GHz

768×3.4375 MHz=2.64GHz

FIG. 8

| 3.0103 | 3.0103 | 3.0103 | 3.0103 |
| 3.0000 | | 3.0000 | |
| 3.0103 | | | |
| 3.0103 | 2.9760 | | 3.0103 |

Small PAPR

| 4.2045 | | 3.0103 |
| 3.0103 | 5.2169 | |

Large PAPR

FIG. 9

| | | | | |
|---|---|---|---|---|
| Combination manner 1 | 128 | 128 | 128 | 128 |
| Combination manner 2 | 256 | | 256 | |
| Combination manner 3 | 512 | | | |
| Combination manner 4 | 128 | 256 | | 128 |
| Combination manner 5 | 128 | 128 | 256 | |
| Combination manner 6 | 256 | | 128 | 128 |

## FIG. 10

| | | | | |
|---|---|---|---|---|
| Combination manner 1 | 128 | 128 | 128 | 128 |
| Combination manner 2 | 256 | | 256 | |
| Combination manner 3 | 512 | | | |

## FIG. 11

Direct current component

4.32 GHz channel

| 128 | 128 | 128 | 128 | 128 | 128 | 128 | 128 |
|---|---|---|---|---|---|---|---|

1024×3.4375 MHz=3.52 GHz

1536×3.4375 MHz=5.28 GHz

## FIG. 12

| 3.0103 | 3.0103 | 3.0103 | 3.0103 | 3.0103 | 3.0103 | 3.0103 | 3.0103 |
|---|---|---|---|---|---|---|---|
| 2.9886 | | 2.9886 | | 2.9886 | | 2.9886 | |
| 3.0103 | | | | 3.0103 | | | |
| 2.9694 | | | | | | | |
| 3.0103 | 2.9762 | | 2.9762 | | 2.9762 | | 3.0103 |
| 2.9886 | | 3.0103 | | | | 2.9886 | |

Small PAPR

| 2.9886 | | 5.1603 | | | | | |
|---|---|---|---|---|---|---|---|
| 4.2256 | | | | | | 2.9886 | |
| 5.0283 | | | 5.1886 | | | 2.9886 | |
| 3.0103 | 5.1603 | | | 5.1603 | | | 3.0103 |
| 2.9886 | | 5.1607 | | | 5.0283 | | |
| 3.0103 | 5.9684 | | | | 5.0283 | | |
| 5.0283 | | | 3.0103 | | | | 3.0103 |
| 5.1607 | | | | 5.0283 | | | |
| 4.9544 | | | | | | | 3.0103 |
| 3.0103 | 5.6969 | | | | | | |

Large PAPR

FIG. 13

| Combination manner 1 | 128 | 128 | 128 | 128 | 128 | 128 | 128 | 128 |
|---|---|---|---|---|---|---|---|---|
| Combination manner 2 | 256 | | 256 | | 256 | | 256 | |
| Combination manner 3 | 512 | | | | 512 | | | |
| Combination manner 4 | 512 | | | | | | | |
| Combination manner 5 | 128 | 256 | | 256 | | 256 | | 128 |
| Combination manner 6 | 256 | | 512 | | | | 256 | |

FIG. 14

| Combination manner 1 | 128 | 128 | 128 | 128 | 128 | 128 | 128 | 128 |
|---|---|---|---|---|---|---|---|---|
| Combination manner 2 | 256 | | 256 | | 256 | | 256 | |
| Combination manner 3 | 512 | | | | 512 | | | |
| Combination manner 4 | 1024 | | | | | | | |

FIG. 15

Direct current component

6.48 GHz channel

128 | 128 | 128 | 128 | 128 | 128 | 128 | 128 | 128 | 128 | 128 | 128

1536×3.4375 MHz=5.28 GHz

2304×3.4375 MHz=7.92 GHz

FIG. 16

| 2.9972 | 2.9972 | | |
| --- | --- | --- | --- |
| 3.0080 | | 3.0099 | |
| 3.0004 | | | |

Small PAPR

| 5.1543 | 6.5299 | 4.9733 | | | | | | | | |
| 6.8687 | | 5.2337 | | | | | | | | |
| 5.9240 | | 6.6685 | | | | | | | | |

Large PAPR

FIG. 17

| 384 | 384 | 384 | 384 |
|-----|-----|-----|-----|
| 768 | | 768 | |
| 384 | 768 | | 384 |
| 1536 | | | |

FIG. 18

| 384 | 384 | 384 | 384 |
|-----|-----|-----|-----|
| 768 | | 768 | |
| 1536 | | | |

FIG. 19

Direct current component

6.48 GHz channel

| | 192 | 192 | 192 | 192 | 192 | 192 | 192 | 192 | |

1536×3.4375 MHz=5.28 GHz

2304×3.4375 MHz=7.92 GHz

FIG. 20

| 2.9945 | 3.0093 | 2.9945 | 3.0103 | 2.9945 | 3.0093 | 2.9945 | 3.0093 |
|--------|--------|--------|--------|--------|--------|--------|--------|
| 2.9972 | | 2.9720 | | 2.9972 | | 2.9720 | |
| 3.0080 | | | | 3.0099 | | | |
| 2.9694 | | | | | | | |
| 2.9945 | 2.9915 | | | 3.0081 | | 3.0081 | 3.0093 |
| 2.9972 | | 2.9994 | | | | 2.9720 | |

Small PAPR

| 2.9972 | | 4.2457 | | | | | |
|--------|--------|--------|--------|--------|--------|--------|--------|
| 5.2087 | | | | | | 2.9720 | |
| 5.0756 | | | 5.1468 | | | 2.9720 | |
| 2.9945 | 5.2238 | | | 5.2240 | | | 3.0093 |
| 2.9972 | | 5.2245 | | | 5.1778 | | |
| 2.9945 | 2.9945 | | | | 5.0283 | | |
| 5.0756 | | | 6.0009 | | | | 3.0093 |
| 5.5472 | | | | 5.0283 | | | |
| 5.6305 | | | | | | | 3.0093 |
| 2.9945 | 4.9711 | | | | | | |

Large PAPR

FIG. 21

| | | | | | | | | |
|---|---|---|---|---|---|---|---|---|
| Combination manner 1 | 192 | 192 | 192 | 192 | 192 | 192 | 192 | 192 |
| Combination manner 2 | 384 | | 384 | | 384 | | 384 | |
| Combination manner 3 | 768 | | | | 768 | | | |
| Combination manner 4 | 1536 | | | | | | | |
| Combination manner 5 | 192 | 384 | | 384 | | 384 | | 192 |
| Combination manner 6 | 384 | | 768 | | | | 384 | |

FIG. 22

| | | | | | | | | |
|---|---|---|---|---|---|---|---|---|
| Combination manner 1 | 192 | 192 | 192 | 192 | 192 | 192 | 192 | 192 |
| Combination manner 2 | 384 | | 384 | | 384 | | 384 | |
| Combination manner 3 | 768 | | | | 768 | | | |
| Combination manner 4 | 1536 | | | | | | | |

FIG. 23

FIG. 24

| 3.0103 | 3.0103 | 3.0103 | 3.0103 | 3.0103 | 3.0103 | 3.0103 | 3.0103 | 3.0103 | 3.0103 | 3.0103 | 3.0103 | 3.0103 | 3.0103 | 3.0103 | 3.0103 |
|---|---|---|---|---|---|---|---|---|---|---|---|---|---|---|---|
| 3.0095 || 3.0095 || 3.0095 || 3.0095 || 3.0095 || 3.0095 || 3.0095 || 3.0095 ||
| 3.0103 |||| 3.0103 |||| 3.0103 |||| 3.0103 ||||
| 2.9744 |||||||| 2.9744 ||||||||
| 3.0103 ||||||||||||||||

FIG. 25

| Combination manner 1 | 128 | 128 | 128 | 128 | 128 | 128 | 128 | 128 | 128 | 128 | 128 | 128 | 128 | 128 | 128 | 128 |
| Combination manner 2 | 256 | | 256 | | 256 | | 256 | | 256 | | 256 | | 256 | | 256 | |
| Combination manner 3 | 512 | | | | 512 | | | | 512 | | | | 512 | | | |
| Combination manner 4 | 1024 | | | | | | | | 1024 | | | | | | | |
| Combination manner 5 | 2048 | | | | | | | | | | | | | | | |

FIG. 26

EP 3 829 126 A1

Direct current component

2.16 GHz channel

355×5.15625 MHz=1.83 GHz

512×5.15625 MHz=2.64 GHz

FIG. 27

Direct current component

2.16 GHz channel

| 88 | 88 | 88 | 88 |

352×5.15625 MHz=1.815 GHz

512×5.15625 MHz=2.64 GHz

FIG. 28

| Combination manner 1 | 88 | 88 | 88 | 88 |
|---|---|---|---|---|
| Combination manner 2 | 176 | | 176 | |
| Combination manner 3 | 352 | | | |

FIG. 29

Direct current component

4.32 GHz channel

| 88 | 88 | 88 | 88 | 88 | 88 | 88 | 88 |

704×5.15625 MHz=3.63 GHz

1024×5.15625 MHz=5.28 GHz

FIG. 30

| Combination manner 1 | 88 | 88 | 88 | 88 | 88 | 88 | 88 | 88 |
|---|---|---|---|---|---|---|---|---|
| Combination manner 2 | 176 | | 176 | | 176 | | 176 | |
| Combination manner 3 | 352 | | | | 352 | | | |
| Combination manner 4 | 704 | | | | | | | |

FIG. 31

Direct current component

6.48 GHz channel

| 88 | 88 | 88 | 88 | 88 | 88 | 88 | 88 | 88 | 88 | 88 | 88 |

1056×5.15625 MHz=5.445 GHz

1536×5.15625 MHz=7.92 GHz

FIG. 32

| Combination manner 1 | 88 | 88 | 88 | 88 | 88 | 88 | 88 | 88 | 88 | 88 | 88 | 88 |
|---|---|---|---|---|---|---|---|---|---|---|---|---|
| Combination manner 2 | 264 | | | 264 | | | 264 | | | 264 | | |
| Combination manner 3 | 528 | | | | | | 528 | | | | | |
| Combination manner 4 | 1056 | | | | | | | | | | | |

FIG. 33

| Combination manner 1 | 88 | 88 | 88 | 88 | 88 | 88 | 88 | 88 | 88 | 88 | 88 | 88 |
|---|---|---|---|---|---|---|---|---|---|---|---|---|
| Combination manner 2 | 176 | | 176 | | 176 | | 176 | | 176 | | 176 | |
| Combination manner 3 | 528 | | | | | | 528 | | | | | |
| Combination manner 4 | 1056 | | | | | | | | | | | |

FIG. 34

Direct current component

8.64 GHz channel

88 88 88 88 88 88 88 88 88 88 88 88 88 88 88 88

1408×5.15625 MHz=7.26 GHz

2048×5.15625 MHz=10.56 GHz

FIG. 35

| Combination manner 1 | 88 | 88 | 88 | 88 | 88 | 88 | 88 | 88 | 88 | 88 | 88 | 88 | 88 | 88 | 88 | 88 |
|---|---|---|---|---|---|---|---|---|---|---|---|---|---|---|---|---|
| Combination manner 2 | 176 | | 176 | | 176 | | 176 | | 176 | | 176 | | 176 | | 176 | |
| Combination manner 3 | 352 | | | | 352 | | | | 352 | | | | 352 | | | |
| Combination manner 4 | 704 | | | | | | | | 704 | | | | | | | |
| Combination manner 5 | 1408 | | | | | | | | | | | | | | | |

FIG. 36

Non-enhanced directional
multi-gigabit part | Enhanced directional
multi-gigabit part

| Short training field | Channel estimated field | Header | Header-A | Short training field | Channel estimated field | Header-B | Data | Transaction interface |
|---|---|---|---|---|---|---|---|---|

Pre-enhanced directional
multi-gigabit modulation domain | Enhanced directional
multi-gigabit modulation domain

FIG. 37

EP 3 829 126 A1

| Media access control header | | | | | | | | | |
|---|---|---|---|---|---|---|---|---|---|
| Frame control | Duration | Receiver address | Transmitter address | Basic information | User information | ... | User information | Padding information | Frame check sequence |

Octet: Two, Two, Six, Six, Eight or more, Five or more, Five or more, Variable, Four

FIG. 38

FIG. 39

Peak to average power ratio complementary cumulative distribution function curve in a case of different quantities of null direct current subcarriers in discrete Fourier transform-spread orthogonal frequency division multiplexing transmission

FIG. 40

EP 3 829 126 A1

20

Resource division apparatus

201

Division module

FIG. 41

30

Resource indication apparatus

301

Generation module

302

Transport module

FIG. 42

FIG. 43

FIG. 44

FIG. 45

Controller

Pilot generator

Control signal receiver

Data generator

Multiplexer

S/P converter

FFT processor

Demapper

IFFT processor

P/S converter

Orthogonal code generator

⊗

CP adder

Antenna

Station

FIG. 46

FIG. 47

FIG. 48

FIG. 49

## INTERNATIONAL SEARCH REPORT

| International application No. |
|---|
| **PCT/CN2019/083377** |

**A.    CLASSIFICATION OF SUBJECT MATTER**

H04L 27/26(2006.01)i;    H04L 5/00(2006.01)i;    H04W 72/04(2009.01)i

According to International Patent Classification (IPC) or to both national classification and IPC

**B.    FIELDS SEARCHED**

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 资源, 划分, 频带, 信道, 分配, 指示, 数据, 导频, 直流分量, 直流子载波, 子载波, 中央, 中间, 中心, DC, resource, allocate, divide, frequency band, channel, indicate, data, subcarrier, direct current, pilot, middle, center

**C.    DOCUMENTS CONSIDERED TO BE RELEVANT**

| Category* | Citation of document, with indication, where appropriate, of the relevant passages | Relevant to claim No. |
|---|---|---|
| X | CN 104168097 A (TSINGHUA UNIVERSITY) 26 November 2014 (2014-11-26) description, paragraphs [0026]-[0044] | 1-9, 13-21 |
| X | CN 107241798 A (HUAWEI TECHNOLOGIES CO., LTD.) 10 October 2017 (2017-10-10) description, paragraphs [0003], [0063], and [0264]-[0302] | 10-12, 22-24 |
| A | CN 101471760 A (HUAWEI TECHNOLOGIES CO., LTD.) 01 July 2009 (2009-07-01) entire document | 1-24 |
| A | CN 108024265 A (ZTE CORPORATION) 11 May 2018 (2018-05-11) entire document | 1-24 |
| A | US 2018091344 A1 (INTEL CORPORATION) 29 March 2018 (2018-03-29) entire document | 1-24 |
| A | WO 2016043555 A1 (LG ELECTRONICS INC.) 24 March 2016 (2016-03-24) entire document | 1-24 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 July 2019** | **18 July 2019** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2019/083377**

| Box No. III | Observations where unity of invention is lacking (Continuation of item 3 of first sheet) |
|---|---|

This International Searching Authority found multiple inventions in this international application, as follows:

[1]  Claims 1-9 and 13-21 and claims 10-12 and 22-24 do not share a same or corresponding special technical feature, and obviously lack unity of invention.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet) (January 2015)

**INTERNATIONAL SEARCH REPORT**
**Information on patent family members**

International application No.

**PCT/CN2019/083377**

| Patent document cited in search report | | | Publication date (day/month/year) | Patent family member(s) | | | Publication date (day/month/year) |
|---|---|---|---|---|---|---|---|
| CN | 104168097 | A | 26 November 2014 | None | | | |
| CN | 107241798 | A | 10 October 2017 | None | | | |
| CN | 101471760 | A | 01 July 2009 | None | | | |
| CN | 108024265 | A | 11 May 2018 | WO | 2018082469 | A1 | 11 May 2018 |
| US | 2018091344 | A1 | 29 March 2018 | None | | | |
| WO | 2016043555 | A1 | 24 March 2016 | US | 2017290016 | A1 | 05 October 2017 |
| | | | | US | 2017311232 | A1 | 26 October 2017 |
| | | | | WO | 2016043557 | A1 | 24 March 2016 |

Form PCT/ISA/210 (patent family annex) (January 2015)

**EP 3 829 126 A1**

## REFERENCES CITED IN THE DESCRIPTION

**Patent documents cited in the description**

- CN 201810973157